(19) Europäisches Patentamt
European Patent Office
Office européen des brevets

(11) **EP 4 497 593 A2**

(12) **EUROPEAN PATENT APPLICATION**

(43) Date of publication:
**29.01.2025 Bulletin 2025/05**

(21) Application number: **24216917.5**

(22) Date of filing: **20.09.2019**

(51) International Patent Classification (IPC):
***B32B 27/32*** (2006.01)

(52) Cooperative Patent Classification (CPC):
**C25B 11/02; B32B 3/266; B32B 5/022;
B32B 5/024; B32B 5/026; B32B 7/06; B32B 27/08;
B32B 27/10; B32B 27/12; B32B 27/285;
B32B 27/304; B32B 27/322; C25B 1/04;
C25B 1/46; C25B 9/23;** (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.09.2018 JP 2018177415
21.09.2018 JP 2018177375
21.09.2018 JP 2018177213
27.06.2019 JP 2019120095**

(62) Document number(s) of the earlier application(s) in
accordance with Art. 76 EPC:
**19863592.2 / 3 854 911**

(71) Applicant: **Asahi Kasei Kabushiki Kaisha
Tokyo 1000006 (JP)**

(72) Inventors:
• **Wada, Yoshifumi
Tokyo, 100-0006 (JP)**
• **Tachihara, Hiroshi
Tokyo, 100-0006 (JP)**
• **Matsuoka, Mamoru
Tokyo, 100-0006 (JP)**
• **Funakawa, Akiyasu
Tokyo, 100-0006 (JP)**
• **Kado, Yoshifumi
Tokyo, 100-0006 (JP)**
• **Morikawa, Takuya
Tokyo, 100-0006 (JP)**
• **Yamamoto, Aguru
Tokyo, 100-0006 (JP)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

Remarks:
This application was filed on 02-12-2024 as a
divisional application to the application mentioned
under INID code 62.

(54) **JIG FOR LAMINATE PRODUCTION, METHOD FOR LAMINATE PRODUCTION, PACKAGE, LAMINATE, ELECTROLYZER, AND METHOD FOR PRODUCING ELECTROLYZER**

(57) A method for producing a new electrolyzer by arranging an electrode for electrolysis in an existing electrolyzer comprising an anode, a cathode that is opposed to the anode, a membrane arranged between the anode and the cathode, and an electrolytic cell frame comprising an anode frame that supports an the anode and a cathode frame that supports the cathode, the electrolytic cell frame storing the anode, the cathode, and the membrane by integrating the anode frame and the cathode frame, the method comprising:

a step (A1) of releasing the integration of the anode frame and the cathode frame to expose the membrane,
a step (B1) of arranging the electrode for electrolysis on at least one of surfaces of the membrane after the step (A1), and
a step (C1) of integrating the anode frame and the cathode frame after the step (B1) to store the anode, the cathode, the membrane, and the electrode for electrolysis into the electrolytic cell frame.

EP 4 497 593 A2

(52) Cooperative Patent Classification (CPC): (Cont.)
**C25B 9/77; C25B 13/02; C25B 13/08;**
B32B 2250/04; B32B 2255/10; B32B 2255/12;
B32B 2255/20; B32B 2255/26; B32B 2262/0238;
B32B 2262/0253; B32B 2262/0284;
B32B 2307/732; B32B 2553/00; Y02E 60/36

**Description**

Technical Field

The present invention relates to a jig for laminate production, a method for producing a laminate, a package, a laminate, an electrolyzer, and a method for producing an electrolyzer.

Background Art

For electrolysis of an alkali metal chloride aqueous solution such as salt solution and electrolysis of water, methods by use of an electrolyzer including a membrane, more specifically an ion exchange membrane or microporous membrane have been employed.

This electrolyzer includes many electrolytic cells connected in series therein, in many cases. A membrane is interposed between each of electrolytic cell to perform electrolysis.

In an electrolytic cell, a cathode chamber including a cathode and an anode chamber including an anode are disposed back to back with a partition wall (back plate) interposed therebetween or via pressing by means of press pressure, bolt tightening, or the like.

Conventionally, the anode and the cathode for use in these electrolyzers are each fixed to the anode chamber or the cathode chamber of an electrolytic cell by a method such as welding and folding, and thereafter, stored or transported to customers.

Meanwhile, each membrane in a state of being singly wound around a vinyl chloride (VC) pipe is stored or transported to customers. Each customer arranges the electrolytic cell on the frame of an electrolyzer and interposes the membrane between electrolytic cells to assemble the electrolyzer. In this manner, electrolytic cells are produced, and an electrolyzer is assembled by each customer.

Patent Literatures 1 and 2 each disclose a structure formed by integrating a membrane and an electrode as a structure applicable to such an electrolyzer.

Citation List

Patent Literature

Patent Literature 1
Japanese Patent Laid-Open No. 58-048686
Patent Literature 2
Japanese Patent Laid-Open No. 55-148775

Summary of Invention

Technical Problem

When electrolysis operation is started and continued, each part deteriorates and electrolytic performance are lowered due to various factors, and each part is replaced at a certain time point.

The membrane can be relatively easily renewed by extracting from an electrolytic cell and inserting a new membrane.

In contrast, the anode and the cathode are fixed to the electrolytic cell, and thus, there is a problem of occurrence of an extremely complicated work on renewing the electrode, in which the electrolytic cell is removed from the electrolyzer and conveyed to a dedicated renewing plant, fixing such as welding is removed and the old electrode is striped off, then a new electrode is placed and fixed by a method such as welding, and the cell is conveyed to the electrolysis plant and placed back to the electrolyzer.

It is considered herein that the structure formed by integrating a membrane and an electrode via thermal compression described in Patent Literatures 1 and 2 is used for the renewing described above, but the structure, which can be produced at a laboratory level relatively easily, is not easily produced so as to be adapted to an electrolytic cell in an actual commercially-available size (e.g., 1.5 m in length, 3 m in width). The structure has extremely poor electrolytic performance (such as electrolysis voltage, current efficiency, and common salt concentration in caustic soda) and durability, and chlorine gas and hydrogen gas are generated on the electrode interfacing the membrane. Thus, when used in electrolysis for a long period, complete delamination occurs, and the structure cannot be practically used, which is also a problem.

The present invention has been made in view of the above problems possessed by the conventional art and is intended to provide a jig for laminate production, a method for producing a laminate, a package, a laminate, an electrolyzer, and a method for producing an electrolyzer.

(First object)

It is an object of the present invention to provide a jig for laminate production, a method for producing a laminate, and a package that can improve the work efficiency during electrode and membrane renewing in an electrolyzer.

(Second object)

It is an object of the present invention to provide a laminate, an electrolyzer, and a method for producing an electrolyzer that can suppress an increase in the voltage and a decrease in the current efficiency, can exhibit excellent electrolytic performance, also can improve the work efficiency during electrode renewing in an electrolyzer, and further can exhibit excellent electrolytic performance also after renewing, from a viewpoint different from that of the first object described above.

(Third object)

It is an object of the present invention to provide a method for producing an electrolyzer that can improve the work efficiency during electrode renewing in an electrolyzer, from a viewpoint different from those of the first and second objects described above.

Solution to Problem

As a result of the intensive studies to achieve the first object, the present inventors have found that a member capable of being easily transported and handled, the member capable of markedly simplifying a work when a degraded part is renewed in an electrolyzer, can be obtained by rolling out a membrane such as an ion exchange membrane and a microporous membrane and an electrode for electrolysis from each roll and laminating the electrode and the membrane, thereby having completed the present invention.

That is, the present invention includes the following.

[1] A jig for laminate production for producing a laminate of an electrode for electrolysis and a membrane, the jig for laminate production comprising:

a roll for electrode around which an elongate electrode for electrolysis is wound, and
a roll for membrane around which an elongate membrane is wound.

[2] The jig for laminate production according to [1], further comprising a water retention section that supplies moisture to at least one of the roll for electrode, the roll for membrane, the electrode for electrolysis rolled out from the roll for electrode, and the membrane rolled out from the roll for membrane.

[3] The jig for laminate production according to [2], wherein the water retention section comprises an immersion tank for immersion of the roll for electrode and/or the roll for membrane.

[4] The jig for laminate production according to [2] or [3], wherein the water retention section comprises a spray nozzle.

[5] The jig for laminate production according to any one of [2] to [4], wherein the water retention section comprises a sponge roll having moisture.

[6] The jig for laminate production according to any one of [1] to [5], further comprising a positioning section for fixing relative positions of the roll for electrode and the roll for membrane.

[7] The jig for laminate production according to [6], wherein the positioning section presses the roll for electrode and the roll for membrane to each other by means of a spring.

[8] The jig for laminate production according to [6], wherein the positioning section fixes positions of the roll for electrode and the roll for membrane such that one of the roll for electrode and the roll for membrane presses, by its own weight, the other.

[9] The jig for laminate production according to [6], wherein

the roll for electrode and the roll for membrane each have a rotation axis, and
the positioning section has bearing portions for the rotation axes.

[10] The jig for laminate production according to any one of [1] to [9], further comprising a nip roll that presses at least one of the electrode for electrolysis and the membrane rolled out respectively from the roll for electrode and the roll for membrane.

[11] The jig for laminate production according to any one of [1] to [10], further comprising a guide roll that guides the electrode for electrolysis and the membrane rolled out respectively from the roll for electrode and the roll for membrane.

[12] A method for producing a laminate of an electrode for electrolysis and a membrane, comprising:

a step of rolling out an elongate electrode for electrolysis from a roll for electrode around which the electrode for electrolysis is wound, and
a step of rolling out an elongate membrane from a roll for membrane around which the membrane is wound.

[13] The method for producing the laminate according to [12], wherein the electrode for electrolysis is conveyed in contact with the roll for membrane at a wrap angle of 0° to 270°.

[14] The method for producing the laminate according to [12], wherein the membrane is conveyed in contact with the roll for electrode at a wrap angle of 0° to 270°.

[15] The method for producing the laminate according to [12], wherein

in the step of rolling out the electrode for electrolysis and/or the membrane, the electrode for electrolysis and/or the membrane is guided by a guide roll, and
the electrode for electrolysis is conveyed in contact with the guide roll at a wrap angle of 0° to 270°.

[16] The method for producing the laminate according to [12], wherein

in the step of rolling out the electrode for electrolysis and/or the membrane, the electrode for electrolysis and/or the membrane is guided by a guide roll, and
the membrane is conveyed in contact with the guide roll at a wrap angle of 0° to 270°.

[17] The method for producing the laminate according to any one of [12] to [16], further comprising a step of supplying moisture to the electrode for electrolysis rolled out from the roll for electrode.

[18] The method for producing the laminate according to any one of [12] to [17], wherein the wound electrode for electrolysis and membrane, which have been in a wound state, are each rolled out in a state where relative positions of the roll for electrode and the roll for membrane are fixed.

[19] A package comprising:

a roll for electrode around which an elongate electrode for electrolysis is wound and/or a roll for membrane around which an elongate membrane is wound, and
a housing storing the roll for electrode and/or the roll for membrane.

As a result of the intensive studies to achieve the second object, the present inventors have found that the problems described above can be solved by use of a membrane that has an asperity geometry on its surface and satisfies the predetermined conditions, thereby having completed the present invention.

That is, the present invention includes the following.

[20] A laminate comprising:

an electrode for electrolysis, and
a membrane laminated on the electrode for electrolysis, wherein
the membrane has an asperity geometry on the surface thereof, and
a ratio a of a gap volume between the electrode for electrolysis and the membrane with respect to a unit area of the membrane is more than 0.8 $\mu$m and 200 $\mu$m or less.

[21] The laminate according to [20], wherein a height difference, which is a difference between a maximum value and a minimum value in the asperity geometry, is more than 2.5 $\mu$m.

[22] The laminate according to [20] or [21], wherein a standard deviation of the height difference in the asperity geometry is more than 0.3 $\mu$m.

[23] The laminate according to any one of [20] to [22], wherein an interface moisture content w retained on an interface between the membrane and the electrode for electrolysis is 30 $g/m^2$ or more and 200 $g/m^2$ or less.

[24] The laminate according to any one of [20] to [23], wherein,

the electrode for electrolysis has one or more protrusions on an opposed surface to the membrane, and the one or more protrusions satisfy the following conditions (i) to (iii):

$$0.04 \leq S_a/S_{all} \leq 0.55 \quad (i)$$

$$0.010 \ mm^2 \leq S_{ave} \leq 10.0 \ mm^2 \quad (ii)$$

$$1 < (h + t)/t \leq 10 \quad (iii)$$

wherein, in the (i), $S_a$ represents a total area of the protrusion(s) in an observed image obtained by observing the opposed surface under an optical microscope, $S_{all}$ represents an area of the opposed surface in the observed image,

in the (ii), $S_{ave}$ represents an average area of the protrusion(s) in the observed image, and

in the (iii), h represents a height of the protrusion(s), and t represents a thickness of the electrode for electrolysis.

[25] The laminate according to [24], wherein the protrusions are each independently disposed in one direction D1 in the opposed surface.

[26] The laminate according to [24] or [25], wherein the protrusions are sequentially disposed in one direction D2 in the opposed surface.

[27] The laminate according to any one of [24] to [26], wherein a mass per unit area of the electrode for electrolysis is 500 mg/cm$^2$ or less.

[28] An electrolyzer comprising the laminate according to any one of [24] to [27].

[29] A method for producing a new electrolyzer by arranging a laminate in an existing electrolyzer comprising an anode, a cathode that is opposed to the anode, and a membrane that is arranged between the anode and the cathode, the method comprising:

a step of replacing the membrane in the existing electrolyzer by the laminate, wherein

the laminate is the laminate according to any one of [20] to [27].

As a result of the intensive studies to achieve the third object, the present inventors have found that the problems described above can be solved by a method that enables the characteristics of the electrode in an existing electrolyzer without removing the existing electrode, thereby having completed the present invention.

That is, the present invention includes the following.

[30] A method for producing a new electrolyzer by arranging an electrode for electrolysis in an existing electrolyzer comprising an anode, a cathode that is opposed to the anode, a membrane arranged between the anode and the cathode, and an electrolytic cell frame comprising an anode frame that supports an the anode and a cathode frame that supports the cathode, the electrolytic cell frame storing the anode, the cathode, and the membrane by integrating the anode frame and the cathode frame, the method comprising:

a step (A1) of releasing the integration of the anode frame and the cathode frame to expose the membrane,

a step (B1) of arranging the electrode for electrolysis on at least one of surfaces of the membrane after the step (A1), and

a step (C1) of integrating the anode frame and the cathode frame after the step (B1) to store the anode, the cathode, the membrane, and the electrode for electrolysis into the electrolytic cell frame.

[31] The method for producing the electrolyzer according to [30], wherein, before the step (B1), the electrode for electrolysis and/or the membrane is moistened with an aqueous solution.

[32] The method for producing the electrolyzer according to [30] or [31], wherein, in the step (B1), a mounting surface for the membrane of the electrode for electrolysis is present at an angle of 0° or more and less than 90° with respect to a horizontal plane.

[33] The method for producing the electrolyzer according to any one of [30] to [32], wherein, in the step (B1), the electrode for electrolysis is positioned such that a conducting surface on the membrane is covered with the electrode for electrolysis.

[34] The method for producing the electrolyzer according to any one of [30] to [33], wherein an amount of an aqueous solution applied on the electrode for electrolysis per unit area is 1 g/m$^2$ to 1000 g/m$^2$.

[35] The method for producing the electrolyzer according to any one of [30] to [34], wherein, in the step (B1), a wound body obtained by winding the electrode for electrolysis is used.

[36] The method for producing the electrolyzer according to [35], wherein, in the step (B1), a wound state of the wound body is released on the membrane.

[37] A method for producing a new electrolyzer by arranging an electrode for electrolysis and a new membrane in an existing electrolyzer comprising an anode, a cathode that is opposed to the anode, a membrane arranged between the anode and the cathode, and an electrolytic cell frame comprising an anode frame that supports an the anode and a cathode frame that supports the cathode, the electrolytic cell frame storing the anode, the cathode, and the membrane by integrating the anode frame and the cathode frame, the method comprising:

a step (A2) of releasing the integration of the anode frame and the cathode frame to expose the membrane,
a step (B2) of removing the membrane after the step (A2) and arranging the electrode for electrolysis and new membrane on the anode or cathode, and
a step (C2) of integrating the anode frame and the cathode frame to store the anode, the cathode, the membrane, the electrode for electrolysis, and the new membrane into the electrolytic cell frame.

[38] The method for producing the electrolyzer according to [37], wherein, in the step (B2), the electrode for electrolysis is mounted on the anode or cathode, the new membrane is mounted on the electrode for electrolysis, and the new membrane is flattened.

[39] The method for producing the electrolyzer according to [38], wherein, in the step (B2), a contact pressure of a flattening device on the new membrane is 0.1 gf/cm$^2$ to 1000 gf/cm$^2$.

Advantageous Effects of Invention

(1) According to the jig for laminate production of the present invention, it is possible to produce a laminate that can improve the work efficiency during electrode and membrane renewing in an electrolyzer.
(2) According to the laminate of the present invention, it is possible to suppress an increase in the voltage and a decrease in the current efficiency, improve the work efficiency during electrode renewing in an electrolyzer, and further exhibit excellent electrolytic performance also after renewing.
(3) According to the method for producing an electrolyzer of the present invention, it is possible to improve the work efficiency during electrode renewing in an electrolyzer.

Brief Description of Drawings

(Figures for first embodiment)

[Figure 1] Figure 1(A) illustrates a schematic view of a roll for electrode around which an electrode for electrolysis is wound in a first embodiment.
Figure 1(B) illustrates a schematic view of a roll for membrane around which a membrane is wound in the first embodiment.
Figure 1(C) illustrates a schematic view of one example of a jig for laminate production according to the first embodiment.
[Figure 2] Figure 2 illustrates a schematic view of an example in which a spray nozzle is used as a water retention section in the first embodiment.
[Figure 3] Figures 3(A) and (B) each illustrate a schematic view of an example in which a sponge roll is used as a water retention section in the first embodiment.
[Figure 4] Figure 4(A) illustrates a schematic explanation view of a jig for laminate production according to an aspect (i) described below, as viewed from the top.
Figure 4(B) illustrates a schematic explanation view of the jig for laminate production shown in Figure 4(A), as viewed from the front in the X direction in Figure 4(A).
[Figure 5] Figure 5 illustrates a schematic explanation view of a jig for laminate production according to an aspect (ii) described below, as viewed from a side.
[Figure 6] Figure 6 illustrates a schematic explanation view of a jig for laminate production according to an aspect (iii) described below, as viewed from a side.
[Figure 7] Figure 7 illustrates a schematic view of an example of the jig for laminate production according to the first embodiment comprising a guide roll.

[Figure 8] Figure 8 illustrates a schematic view of an example of the jig for laminate production according to the first embodiment comprising a guide roll.

[Figure 9] Figure 9 illustrates a schematic view of an example of the jig for laminate production according to the first embodiment comprising a nip roll.

[Figure 10] Figure 10 illustrates a cross-sectional schematic view illustrating one embodiment of an electrode for electrolysis of the first embodiment.

[Figure 11] Figure 11 illustrates a cross-sectional schematic view illustrating one embodiment of an ion exchange membrane of the first embodiment.

[Figure 12] Figure 12 illustrates a schematic view for explaining the aperture ratio of reinforcement core materials constituting the ion exchange membrane of the first embodiment.

[Figure 13] Figure 13 illustrates a schematic view for explaining a method for forming continuous holes of the ion exchange membrane of the first embodiment.

[Figure 14] Figure 14 illustrates a cross-sectional schematic view of an electrolytic cell of the first embodiment.

[Figure 15] Figure 15 illustrates a cross-sectional schematic view showing a state of two electrolytic cells connected in series of the first embodiment.

[Figure 16] Figure 16 illustrates a schematic view of an electrolyzer of the first embodiment.

[Figure 17] Figure 17 illustrates a schematic perspective view showing a step of assembling the electrolyzer of the first embodiment.

[Figure 18] Figure 18 illustrates a cross-sectional schematic view of a reverse current absorber included in the electrolytic cell of the first embodiment.

(Figures for second embodiment)

[Figure 19] Figure 19 illustrates a cross-sectional schematic view illustrating one example of an electrode for electrolysis of a second embodiment.

[Figure 20] Figure 20 illustrates a cross-sectional schematic view illustrating another example of the electrode for electrolysis of the second embodiment.

[Figure 21] Figure 21 illustrates a cross-sectional schematic view illustrating further another example of the electrode for electrolysis of the second embodiment.

[Figure 22] Figure 22 illustrates a plan perspective view of the electrode for electrolysis shown in Figure 19.

[Figure 23] Figure 23 illustrates a plan perspective view of the electrode for electrolysis shown in Figure 20.

[Figure 24] Figure 24(A) illustrates a schematic view partially illustrating the surface of a metallic roll that can be used for production of the electrode for electrolysis of the second embodiment.

Figure 24(B) illustrates a schematic view partially illustrating the surface of an electrode for electrolysis on which protrusions are formed by the metallic roll of Figure 24(A).

[Figure 25] Figure 25 illustrates a schematic view partially illustrating the surface of another example of the metallic roll that can be used for production of the electrode for electrolysis of the second embodiment.

[Figure 26] Figure 26 illustrates a schematic view partially illustrating the surface of another example of the metallic roll that can be used for production of the electrode for electrolysis of the second embodiment.

[Figure 27] Figure 27 illustrates a schematic view partially illustrating the surface of another example of the metallic roll that can be used for production of the electrode for electrolysis of the second embodiment.

(Figures for third embodiment)

[Figure 28] Figure 28 illustrates a cross-sectional schematic view of an electrolytic cell of a third embodiment.

[Figure 29] Figure 29 illustrates a schematic view of an electrolyzer of the third embodiment.

[Figure 30] Figure 30 illustrates a schematic perspective view showing a step of assembling the electrolyzer of the third embodiment.

[Figure 31] Figure 31 illustrates a cross-sectional schematic view of a reverse current absorber that may be included in an electrolytic cell of the third embodiment.

[Figure 32] Figure 32 illustrates an explanation view illustrating steps in a method for producing an electrolyzer according to the third embodiment.

[Figure 33] Figure 33 illustrates an explanation view illustrating steps in a method for producing an electrolyzer according to the third embodiment.

(Figures for examples of the first embodiment)

[Figure 34] Figure 34 illustrates a schematic view of a wound body 1 as a roll for membrane.

[Figure 35] Figure 35 illustrates a schematic view of a wound body 2 as a roll for electrode.

[Figure 36] Figure 36 illustrates a schematic view of a step of producing a laminate of Example 1.

[Figure 37] Figure 37 illustrates a schematic view of a step of producing a laminate of Example 2.

[Figure 38] Figure 38 illustrates a schematic view of a step of producing a laminate of Example 3.

[Figure 39] Figure 39 illustrates a schematic view of a step of producing a laminate of Example 3.

[Figure 40] Figure 40 illustrates a schematic view of a step of producing a laminate of Example 4.

[Figure 41] Figure 41 illustrates a schematic view of a step of producing a laminate of Example 5.

[Figure 42] Figure 42 illustrates a schematic view of a step of producing a laminate of Example 5.

[Figure 43] Figure 43 illustrates a schematic view of a step of producing a laminate of Example 6.

[Figure 44] Figure 44 illustrates a schematic view of a step of producing a laminate of Example 7. (Figures for examples of the second embodiment)

[Figure 45] Figure 45 illustrates an explanation view of a method for measuring a ratio a used in Examples.

[Figure 46] Figure 46 illustrates an explanation view of a method for measuring a ratio a used in Examples.

[Figure 47] Figure 47 illustrates an explanation view of a method for measuring a ratio a used in Examples.

[Figure 48] Figure 48 illustrates an explanation view of a method for measuring a ratio a used in Examples.

[Figure 49] Figure 49 illustrates an explanation view of a method for measuring a ratio a used in Examples.

[Figure 50] Figure 50 illustrates an explanation view of a method for measuring a ratio a used in Examples.

[Figure 51] Figure 51 illustrates an explanation view of a method for measuring a ratio a used in Examples.

Description of Embodiments

Hereinbelow, as for embodiments of the present invention (hereinbelow, may be referred to as the present embodiments), <First embodiment> <Second embodiments and <Third embodiment> will be each described in detail in the order mentioned, with reference to drawings as required. The embodiments are illustration for explaining the present invention, and the present invention is not limited to the contents below. The present invention may be appropriately modified and carried out within the spirit thereof.

The accompanying drawings illustrate one example of the embodiments, and the embodiments should not be construed to be limited thereto. In the drawings, positional relations such as top, bottom, left, and right are based on the positional relations shown in the drawing unless otherwise noted. The dimensions and ratios in the drawings are not limited to those shown.

<First embodiment>

Here, a first embodiment of the present invention will be described in detail.

[Jig for laminate production]

A jig for laminate production of the first embodiment is a jig for laminate production, the jig being used for producing a laminate of an electrode for electrolysis and a membrane, the jig comprising a roll for electrode around which an elongate electrode for electrolysis is wound and a roll for membrane around which an elongate membrane is wound. The jig for laminate production of the first embodiment, as configured as described above, can produce a laminate that can improve the work efficiency during electrode and membrane renewing in an electrolyzer. That is, even when a member of a relatively large size is required so as to be adapted to an electrolytic cell in an actual commercially-available size (e.g., 1.5 m in length, 3 m in width), a desired laminate can be easily obtained only by a simple operation in which the roll for electrode and roll for membrane described above are placed and fixed at desired positions and the electrode for electrolysis and the membrane are rolled out from each of the rolls.

Herein, "elongate" means having a length enough to be wound around a roll having a predetermined diameter. The width and length can be appropriately set in accordance with the size of an electrolyzer into which the laminate is assembled.

Specifically, the width of the membrane and the electrode for electrolysis is preferably 200 to 2000 mm, and the length thereof is preferably 500 to 4000 mm.

More preferably, the width of these is 300 to 1800 mm, and the length of these is 1200 to 3800 mm.

As for the length of the membrane and the electrode for electrolysis, while, for example, about 10 m of a size in the length direction, which corresponds to five times of about 2500 mm, are rolled out from each of the roll for electrode and the roll for membrane (hereinbelow, also referred to as "each roll"), the membrane and the electrode may be cut to a determined size.

The size, shape, material, and surface smoothness of the roll for electrode and the roll for membrane are not particularly limited.

Specifically, the size of each roll can be appropriately adjusted in accordance with the size of the membrane and the electrode for electrolysis. The cross-sectional shape of each roll may be any shape, for example, circular, elliptical, and polygonal of quadrangular or higher, as long as wrinkles or traces of winding are not left even when the membrane or the electrode for electrolysis is wound around the roll. The material of each roll may be either of a metal or a resin. From the viewpoint of the transport weight, the material is preferably a resin. The surface smoothness of each roll may be such that no scratch is left even when the membrane or the electrode for electrolysis is wound around the roll. From the viewpoint of more effectively suppressing occurrence of wrinkles, various known expander rolls may be employed as the rolls.

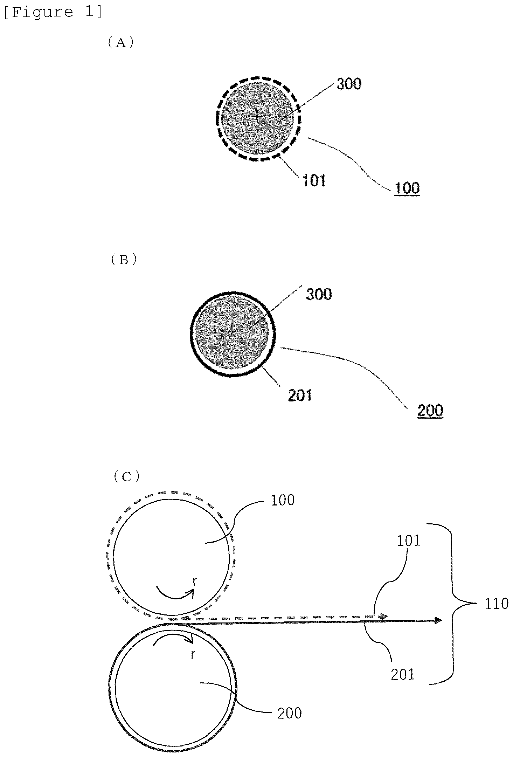

A cross-sectional view of a roll for electrode 100 around which an elongate electrode for electrolysis 101 is wound is illustrated in Figure 1(A).

In Figure 1(A), the electrode for electrolysis 101 is shown with a dashed line.

A cross-sectional view of a roll for membrane 200 around which an elongate membrane 201 is wound is illustrated in Figure 1(B).

In Figure 1(B), the membrane 201 is shown with a solid line.

The electrode for electrolysis 101 and the membrane 201 are each wound around a pipe 300 made of resin, for example, made of polyvinyl chloride, having a predetermined diameter.

In Figure 1, "+" represents a rotation axis. The same applies to the following figures.

The jig for laminate production of the first embodiment comprises the roll for electrode 100 around which the electrode for electrolysis 101 is wound and the roll for membrane 200 around which the membrane 201 is wound, for example, as shown in Figure 1(C). The electrode for electrolysis 101 is rolled out from the roll for electrode 100, the membrane 201 is rolled out from the roll for membrane 200, and then the electrode for electrolysis 101 and the membrane 201 are laminated with each other, thus, a laminate 110 can be easily obtained.

The jig for laminate production of the first embodiment preferably further comprises a water retention section that supplies moisture to at least one of the roll for electrode, the roll for membrane, the electrode for electrolysis rolled out from the roll for electrode, and the membrane rolled out from the roll for membrane. When the jig comprises a water retention section, in the state where the electrode for electrolysis and the membrane rolled out from each roll are merged to be in contact with each other, moisture is present on the interface between the electrode for electrolysis and the membrane, and thus, surface tension generated by the moisture causes the electrode for electrolysis and the membrane to be more easily integrated.

As the moisture, pure water may be used, or an aqueous solution may be used. Examples of the aqueous solution include, but not limited to, alkaline aqueous solutions (e.g., sodium bicarbonate aqueous solution, sodium hydroxide aqueous solution, and potassium hydroxide aqueous solution).

The water retention section in the first embodiment is not particularly limited as long as being capable of supplying water as described above. Although various configurations can be employed, the water retention section preferably includes an immersion tank for immersion of the roll for electrode and/or the roll for membrane.

When the water retention section comprises an immersion tank, moisture can be supplied to at least one of the roll for electrode, the roll for membrane, the electrode for electrolysis rolled out from the roll for electrode, and the membrane rolled out from the roll for membrane by a simple operation of immersing each roll.

The shape and capacity of the immersion tank in the first embodiment is not limited as long as the immersion tank enables at least a part of the roll for electrode and/or roll for membrane to be immersed.

When the water retention section comprises an immersion tank, after each of the rolls is immersed and then removed out of the immersion tank, the electrode for electrolysis and/or the membrane may be rolled out. Alternatively, while each of the rolls is immersed in the immersion tank, the electrode for electrolysis and/or the membrane may be rolled out.

The water retention section in the first embodiment preferably includes a spray nozzle in place of or in addition to the immersion tank described above. When moisture is sprayed from a spray nozzle, the supply position, water amount, and water pressure of the moisture are more likely to be adjusted. The type of spray nozzle is not particularly limited, but it is possible to include at least one selected from the group consisting of a sectorial nozzle, an annular nozzle, and a circular nozzle. Specific examples thereof include, but not limited to, a filled conical nozzle, a filled pyramidal nozzle, a sectorial nozzle, a flat nozzle, a straight nozzle, and an spray shape variable nozzle, available from MISUMI Group Inc. In the first embodiment, from the viewpoint of adjusting the water pressure of the spray nozzle, the water retention section preferably has a regulator. For example, use of a regulator and a water-pressure gauge in combination in the water retention section enables the water pressure to be adjusted more preferably. Specific examples of the regulator include, but not limited to, a regulator for water WR2 manufactured by CKD Corporation.

From the viewpoint of producing the laminate more efficiently by supplying sufficient moisture between the electrode for electrolysis and the membrane, on supplying moisture from the spray nozzle, various spray conditions are preferably adjusted in consideration of wettability of moisture per se, the shape of the electrode for electrolysis, the size of the electrode for electrolysis, the surface composition of the electrode for electrolysis, and the like. More specifically, for example, with consideration of the factors described above, various conditions are preferably adjusted, such as the distance between the membrane or the electrode for electrolysis and the spray nozzle, the water pressure of the spray nozzle, the water amount of the spray nozzle, the position of the spray nozzle, the angle of moisture spray, the average droplet size on spraying, and the like.

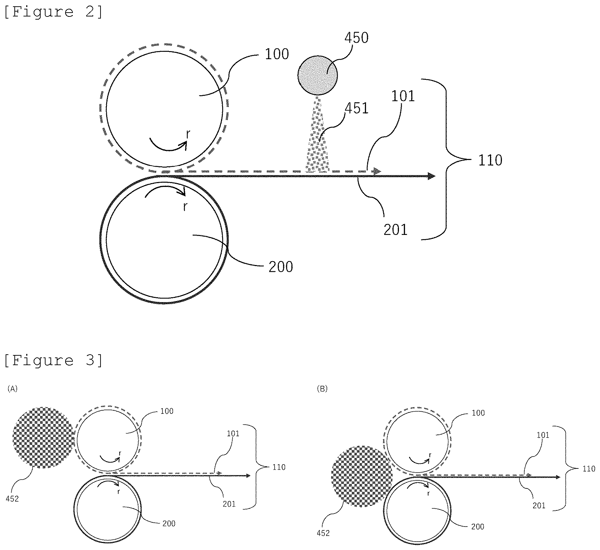

One example of the jig for laminate production of the first embodiment further comprising a water retention section is shown in Figure 2.

The jig for laminate production of the example in Figure 2 comprises a roll for electrode 100 around which the electrode for electrolysis 101 is wound, a roll for membrane 200 around which the membrane 201 is wound, and a water retention section 450. As the electrode for electrolysis 101 rolled out from the roll for electrode 100, one having aperture portions can be employed, and the water retention section 450 supplies moisture 451 to the electrode for electrolysis 101 having aperture portions. The moisture supplied to the electrode for electrolysis 101 reaches the side of the membrane 201 via the aperture portions described above. This generates surface tension due to the moisture on the interface between the electrode for electrolysis 101 and the membrane 201, and the electrode for electrolysis 101 and the membrane 201 by themselves are integrated to thereby provide a laminate 110. In Figure 2, an example of supplying moisture to the side of the electrode for electrolysis 101 is shown, but the water retention section 450 may be disposed so as to supply moisture to the side of the membrane 201.

In the case where the water retention section includes a spray nozzle in the first embodiment, when the roll for electrode and the roll for membrane are disposed such that each axial direction is parallel to the ground surface, the arrangement and number of spray nozzles are preferably adjusted so as to enable moisture to be uniformly supplied from the spray nozzles to each roll.

From the viewpoint of efficiency of water supply, moisture is preferably supplied in the state in which the roll for electrode and the roll for membrane are disposed such that each axial direction is perpendicular to the ground surface, that is, in the state in which the roll for electrode and the roll for membrane are upright to the ground surface. In this case, moisture sprayed from the spray nozzle reaches the membrane or the electrode for electrolysis and then broadens downward due to gravity. Use of this fact enables moisture to be sufficiently spread over also areas other than the spray position on the membrane or the electrode for electrolysis. In other words, it is not necessary to spray moisture directly to the lower surface (the ground surface side) of the membrane or the electrode for electrolysis. Spraying moisture to the upper portion than the lower surface in the height direction enables moisture to be spread more efficiently to the entire surface of the membrane or the electrode for electrolysis.

The water retention section in the first embodiment preferably includes a sponge roll containing moisture in place of or in addition to the immersion tank and spray nozzles described above. An example in which a sponge roll is employed as the water retention section is shown in Figure 3. As illustrated in Figure 3(A), a sponge roll 452 may be in contact only with the roll for electrode 100, or as illustrated in Figure 3(B), the sponge roll 452 may be in contact with both the roll for electrode 100 and the roll for membrane 200. Alternatively, although not shown, the sponge roll 452 may be in contact only with the roll for membrane 200.

A case where the electrode for electrolysis and the membrane are integrated by use of the moisture on the side of the electrode for electrolysis is preferred because the water retention section illustrated in Figure 3(A) is employed to thereby enable moisture to be easily supplied to the surface on the side of the membrane of the electrode for electrolysis even in an aspect in which the electrode for electrolysis has no aperture portion, for example. The same applies to the aspect illustrated in Figure 3(B). Moisture can be supplied also to the surface of the membrane on the side of the electrode for electrolysis, and thus, a laminate tends to be more easily obtained.

The water retention section in the first embodiment may include a flowing water supply section to supply flowing water to the electrode for electrolysis rolled out from the roll for electrode. In other words, the water retention section is not limited to the one having spray nozzles and the one having a sponge roll as described above, and moisture in the form of flowing water may be supplied to the electrode for electrolysis.

The water retention section in the first embodiment may be, in addition to those described above, a water tank and the like provided for causing the membrane and the electrode for electrolysis, which are rolled out from each roll and conveyed separately or in a laminated state, to pass through water, for example.

In the first embodiment, the relative positions of the roll for electrode and the roll for membrane also can be fixed by a positioning section. The configuration of the positioning section is not particularly limited as long as the positioning section can fix the relative position of the roll for membrane with respect to the roll for electrode or the relative position of the roll for electrode with respect to the roll for membrane, and various forms may be used. Typical examples of the positioning section in the first embodiment include, but not limited to, (i) one having a mechanism of mutually pressing the roll for electrode and the roll for membrane with a spring, (ii) one for fixing the positions of the roll for electrode and the roll for membrane such that one of the roll for electrode and the roll for membrane by its own weight presses the other, and (iii) in the case where the roll for electrode and the roll for membrane each have a rotation axis, one for fitting each rotation axis into the corresponding bearing portion for fixing.

Even with any of (i) to (iii) described above, or alternatively even when a positioning section not specified above is employed, a laminate tends to be more stably obtained by fixing the relative positions of the roll for electrode and the roll for membrane. When the jig for laminate production of the first embodiment comprises the water retention section described above in addition to the positioning section, in the state where the relative positions of the roll for electrode and the roll for membrane are fixed as well as the electrode for electrolysis and the membrane rolled out from each roll are merged to be in contact with each other, with moisture present on the interface between the electrode for electrolysis and the membrane, surface tension generated by the moisture causes the electrode for electrolysis and the membrane by themselves to be integrated, and a laminate is obtained. The moisture may be supplied to the membrane or the electrode for electrolysis either before or after the electrode for electrolysis and the membrane rolled out from each roll are merged to be in contact with each other. Here, in a case where the electrode for electrolysis and the membrane are integrated by use of the moisture on the side of the electrode for electrolysis, the electrode for electrolysis preferably has aperture portions because the moisture is likely to move via the aperture portions and surface tension is likely to act on the interface between the electrode for electrolysis and the membrane. Particularly, when moisture is supplied to the electrode for electrolysis after the electrode for electrolysis and the membrane rolled out from each roll are merged to be in contact with each other, the case where the electrode for electrolysis has aperture portions is especially preferred because the moisture supplied to the surface of the electrode for electrolysis (surface on the side opposite to the membrane) reaches the surface on the side of the membrane via the aperture portions to thereby cause surface tension derived from the moisture to act on the interface between the electrode for electrolysis and the membrane.

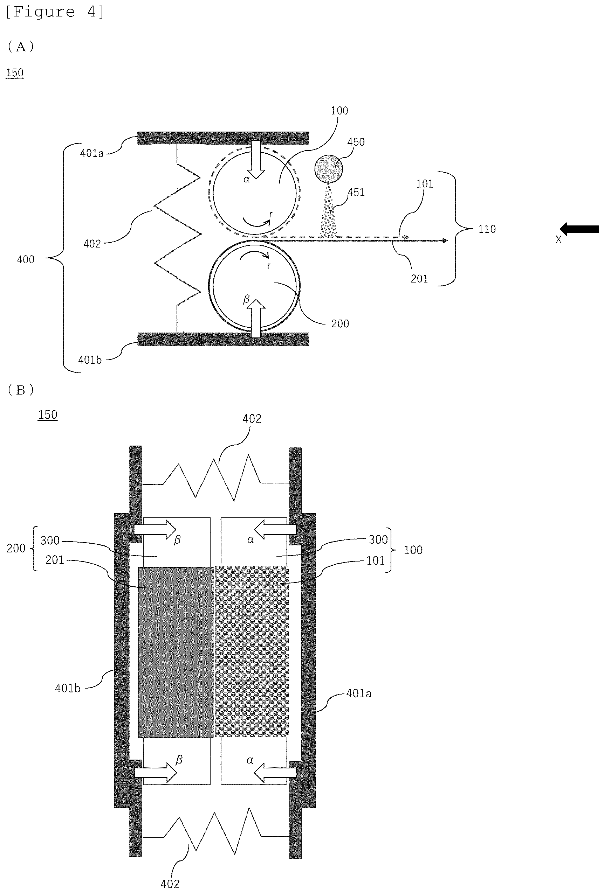

The aspect of (i) described above will be described by use of the example illustrated in Figure 4. Figure 4(A) illustrates a schematic explanation view of a jig for laminate production 150, as viewed from the top. The jig for laminate production 150 comprises a roll for electrode 100 and a roll for membrane 200 in an upright state to the ground surface, a positioning section 400 for fixing the relative positions of the roll for electrode 100 and roll for membrane 200, and a water retention section 450.

As shown in Figure 4(A), the positioning section 400 has a pair of pressing plates 401a and 401b and a spring mechanism 402 interposed therebetween. The spring mechanism 402 imparts a force in the $\alpha$ direction to the pressing plate 401a and a force in the $\beta$ direction to the pressing plate 401b. Thereby, the roll for electrode 100 and the roll for membrane 200 are pressed to each other at their contacting portion and brought into a tight contact with each other. Figure 4(B) illustrates the jig for laminate production 150, as viewed from the front in the X direction in Figure 4(A). As shown in Figure 4(B), the pair of pressing plates 401a and 401b are configured so as not to be in contact with the electrode for electrolysis 101 and the membrane 201. In order to achieve the configuration, in the roll for electrode 100, the electrode for electrolysis 101 is preferably wound around near the center in the axial direction of a pipe made of polyvinyl chloride 300, that is, the electrode for electrolysis 101 is preferably wound such that the surface of the both ends in the axial direction of the pipe made of polyvinyl chloride 300 is exposed. As shown in Figure 4(B), the force in the $\alpha$ direction applied to the roll for electrode 100 acts not on the electrode for electrolysis 101 in the roll for electrode 100 but on the pipe made of polyvinyl chloride 300 (the portion around which the electrode for electrolysis 101 is not wound). This can prevent friction from occurring between the electrode for electrolysis 101 and the pressing plates 401a. Similarly, in the roll for membrane 200, the membrane 201 is preferably wound around near the center in the axial direction of the pipe made of polyvinyl chloride 300, that is, the membrane 201 is preferably wound such that the surface of the both ends in the axial direction of the pipe made of polyvinyl chloride 300 is exposed. As shown in Figure 4(B), the force in the $\beta$ direction applied to the roll for membrane 200 acts not on the membrane 201 in the roll for membrane 200 but on the pipe made of polyvinyl chloride 300 (the portion around which membrane 201 is not wound). This can prevent friction from occurring between the membrane 201 and the pressing plates 401b. The pair of pressing plates 401a and 401b and the spring mechanism 402 are not particularly limited as long as providing such action and can be applied to the first embodiment in reference to various known fixing section. The force applied by the spring mechanism 402 on the roll for electrode 100 and the roll for membrane 200 also is not particularly limited. For example, in the aspect of (ii) mentioned below, it is possible to employ ones in which force, comparable to that in the case where one of the roll for electrode and the roll for membrane, by its own weight, presses the other, acts. For example, when a polyvinyl chloride pipe having a width of 1500 mm is used, ones in which a force of the order of 1.2 kgf is applied can be used, although not limited thereto.

The roll for electrode 100 and the roll for membrane 200 each rotate in the direction r to thereby cause the electrode for electrolysis 101 and the membrane 201 each to be rolled out. In the present aspect, the roll for electrode 100 and the roll for membrane 200 are in a tight contact with each other as described above. The electrode for electrolysis 101 and the membrane 201 are rolled out in this state, and thus occurrence of wrinkles tends to be more effectively suppressed. From these viewpoints, in the first embodiment, the positioning section preferably presses the roll for electrode and the roll for membrane to each other by means of a spring.

As the electrode for electrolysis 101 rolled out from the roll for electrode 100, one having aperture portions can be employed, and the water retention section 450 can supply moisture 451 to the electrode for electrolysis 101 having aperture portions. The moisture supplied to the electrode for electrolysis 101 reaches the side of the membrane 201 via the aperture portions described above. This generates surface tension due to the moisture on the interface between the electrode for electrolysis 101 and the membrane 201, and the electrode for electrolysis 101 and the membrane 201 by themselves are integrated to thereby provide a laminate 110.

The case in which the roll for electrode 100 and the roll for membrane 200 are upright to the ground surface (i.e., the case where the axial direction of rotation of each of the roll for electrode 100 and the roll for membrane 200 is perpendicular to the ground surface) has been described above, but the present embodiment is not limited thereto. For example, even in a case where the axial direction of each of the roll for electrode 100 and the roll for membrane 200 is parallel to the ground surface, the similar configurations may be employed. In Figure 4, an example of supplying moisture to the side of the electrode for electrolysis 101 is shown, but the water retention section 450 may be disposed so as to supply moisture to the side of the membrane 201.

The description on the constituents of the jig for laminate production 150 described above applies to the following aspects, unless otherwise specified.

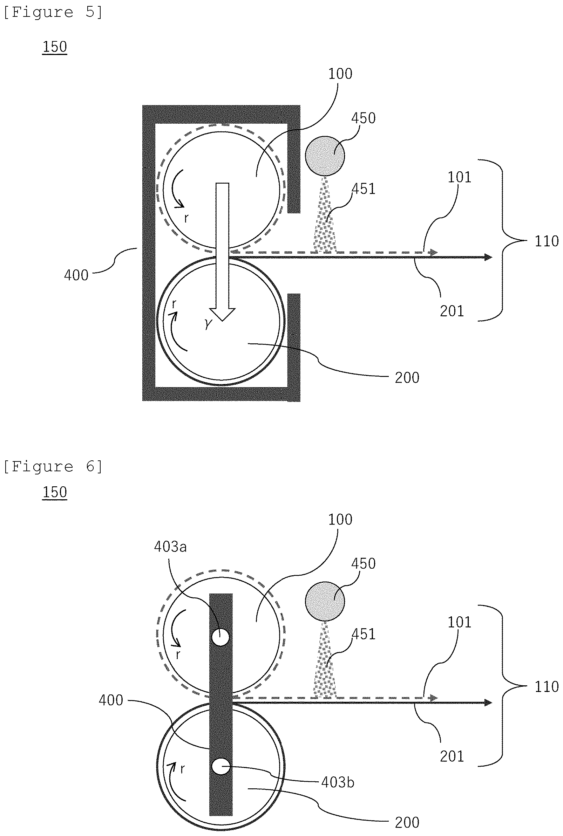

The aspect of (ii) described above will be described by use of the example illustrated in Figure 5. Figure 5 illustrates a schematic explanation view of a jig for laminate production 150, as viewed from a side. The jig for laminate production 150 comprises a roll for electrode 100 and a roll for membrane 200, a positioning section 400 for fixing the relative positions of the roll for electrode 100 and the roll for membrane 200, and a water retention section 450. In the present aspect, the roll for electrode 100 and the roll for membrane 200 are disposed such that each axial direction of rotation thereof is parallel to the ground surface. In the present aspect, from the viewpoint of bringing the roll for electrode 100 and the roll for membrane 200 into a tight contact by use of the own weight of one of them, the roll for electrode 100 and the roll for membrane 200 are disposed not to be upright to the ground surface but disposed such that each axial direction thereof is parallel to the ground surface.

In the example show in Figure 5, the roll for electrode 100 presses, by its own weight (gravity), the roll for membrane 200 in the $\gamma$ direction. The positioning section 400 serves as a frame material for inclusion of the roll for electrode 100 and the roll for membrane 200. Although the positioning section 400 per se does not press each roll, the positioning section 400 can maintain the above-described pressing on the roll for membrane 200 by the own weight of the roll for electrode 100. Thereby, the roll for electrode 100 and the roll for membrane 200 are in a tighter contact with each other at their contacting portion by the pressing. Also in the example shown in Figure 5, in order to prevent friction caused by contact of the electrode for electrolysis 101 and the membrane 201 with the positioning section 400, the shape of the positioning section 400 is preferably adjusted. For example, employing a shape as that of the pressing plates 401a and 401b shown in Figure 4(B) can prevent contact of the electrode 101 and the membrane 201 with the positioning section 400.

Accordingly, also in the present aspect, the tight contact state between the roll for electrode and the roll for membrane becomes better, and occurrence of wrinkles in a laminate to be obtained can be further suppressed. As described above, the positioning section preferably fixes the positions of the roll for electrode and the roll for membrane such that one of the roll for electrode and the roll for membrane by its own weight presses the other.

The positional relationship between the roll for electrode 100 and the roll for membrane 200 may be reversed, and the roll for electrode 100 may be pressed by the own weight of the roll for membrane 200. In this case, it is only required that the position of the water retention section 450 be appropriately adjusted such that moisture 451 can be supplied to the electrode for electrolysis 101.

The shape of the positioning section 400 is not limited to that of the example in Figure 5 as long as pressing by the own weight of one of the roll for electrode and the roll for membrane on the other can be maintained. The shape is not limited to that of the example in Figure 5, and various known shapes can be employed.

The aspect of (iii) described above will be described by use of the example illustrated in Figure 6. Figure 6 illustrates a schematic explanation view of a jig for laminate production 150 as viewed from a side. A jig for laminate production 150 comprises a roll for electrode 100 and a roll for membrane 200, a positioning section 400 for fixing the relative positions of the roll for electrode 100 and the roll for membrane 200, and a water retention section 450. In the present aspect, the roll for electrode 100 and the roll for membrane 200 each have a rotation axis and are disposed such that each axial direction thereof is parallel to the ground surface.

In the example shown in Figure 6, the positioning section 400 has a bearing portion 403a corresponding to the roll for electrode 100 and a bearing portion 403b corresponding to the roll for membrane 200. Fixing each rotation axis with the bearing portions 403a and 403b can achieve adhesion between the roll for electrode 100 and the roll for membrane 200. Here, the bearing portions each refer to a protruding portion formed at either end of each roll along the axial direction of the roll. Accordingly, also in the present aspect, the tight contact state between the roll for electrode and the roll for membrane becomes better, and occurrence of wrinkles in a laminate to be obtained can be further suppressed. As described above, it is preferred that the roll for electrode and the roll for membrane each have a rotation axis and that the positioning section have bearing portions for the rotation axes.

With respect to the bearing portions, as the example shown in Figure 6, a positioning section having holes into each of which the rotation axis of each rolls can be fitted can be employed, without limitation thereto. For example, a pair of plates is employed as the positioning section, and each rotation axis may be sandwiched between the pair of plates.

The positional relationship between the roll for electrode 100 and the roll for membrane 200 may be reversed. In this case, it is only required that the position of the water retention section 450 be appropriately adjusted such that moisture 451 can be supplied to the electrode for electrolysis 101.

The case in which the axial direction of each of the roll for electrode 100 and the roll for membrane 200 is parallel to the ground surface has been described above, but the present invention is not limited thereto. For example, even in a case where the roll for electrode 100 and the roll for membrane 200 are upright to the ground surface, a similar configuration may be employed.

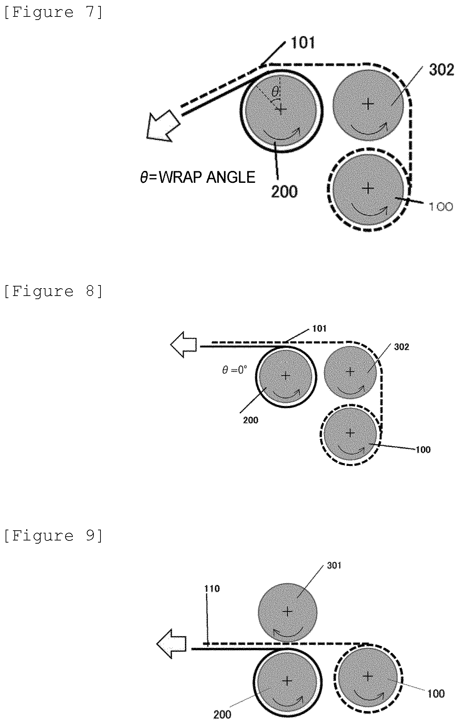

As shown in Figures 7 and 8, the jig for laminate production of the first embodiment can further comprise a guide roll 302 that guides the electrode for electrolysis and the membrane rolled out respectively from the roll for electrode and the roll for membrane. In Figures 7 and 8, an aspect may be employed in which the positions of the rolls 100 and 200 are reversed and the membrane 201 is guided by the guide roll 302.

Figure 7 shows an aspect in which the electrode for electrolysis 101 is conveyed in contact with the roll for membrane 200 at a wrap angle $\theta$.

Herein, the wrap angle refers to an angle between a start point at which the membrane, the electrode for electrolysis, or the laminate comes in contact with each predetermined roll and an end point of contact at which the membrane, the electrode for electrolysis, or the laminate starts to leave the roll, with reference to the center point of the cross section of the roll.

In Figure 7, when the electrode for electrolysis 101 is conveyed in contact with the roll for membrane 200 at a wrap angle $\theta$, the wrap angle $\theta$ is preferably 0° to 270°, more preferably 0 to 150°, further preferably 0 to 90°, further more preferably 10 to 90° from the viewpoint of bringing the membrane and the electrode for electrolysis into contact with each other without wrinkles.

Figure 8 shows an aspect in which the electrode for electrolysis 101 is conveyed in contact with the roll for membrane 200 at a wrap angle = 0°.

In Figure 7 and Figure 8, when the positions of the roll for electrode 100 and the roll for membrane 200 are reversed and the membrane 201 is conveyed in contact with the roll for electrode 100 at a wrap angle $\theta$, the wrap angle is preferably 0° to 270°, more preferably 0 to 150°, further preferably 0 to 90°, further more preferably 10 to 90° from the viewpoint of bringing the membrane and the electrode for electrolysis into contact with each other without wrinkles.

When the electrode for electrolysis 101 or the membrane 201 comes in contact with each roll, the wrap angle $\theta$ can be controlled within a predetermined range by means of the roll-out direction denoted by the arrow shown each in Figure 7 and Figure 8.

In the examples of Figure 7 and Figure 8, when the electrode for electrolysis 101 is conveyed in contact with the guide roll 302 at a wrap angle $\theta$, the wrap angle $\theta$ is preferably 0° to 270°, more preferably 0 to 150°, further preferably 0 to 90°, further more preferably 10 to 90° from the viewpoint of bringing the membrane and the electrode for electrolysis into contact with each other without wrinkles.

In the examples in Figure 7 and Figure 8, the positions of the roll for electrode 100 and the roll for membrane 200 may be reversed. In such a case, when the membrane 201 is conveyed in contact with the guide roll 302 at a wrap angle $\theta$, the wrap angle is preferably 0° to 270°, more preferably 0 to 150°, further preferably 0 to 90°, further more preferably 10 to 90° from the viewpoint of bringing the membrane and the electrode for electrolysis into contact with each other without wrinkles.

When the electrode for electrolysis 101 or the membrane 201 comes in contact with the guide roll 302, the wrap angle $\theta$ can be controlled within a predetermined range by adjusting the roll-out direction.

In the first embodiment, the aspect in which the electrode for electrode 101 and the membrane 201 are rolled out respectively from the roll for electrode 100 and the roll for membrane 200 to produce a laminate is not particularly limited. For example, as shown Figure 9, the electrode for electrolysis rolled out from the roll for electrode 100 and the membrane 201 rolled out from the roll for membrane 200 may be conveyed while sandwiched and pressed between a nip roll 301 and the roll for membrane 200 to thereby obtain the laminate 110. The positions of the rolls 100 and 200 in Figure 9 may be reversed, and the electrode for electrolysis rolled out from the roll for electrode 100 and the membrane 201 rolled out from the roll for membrane 200 may be conveyed while sandwiched and pressed between the nip roll 301 and the roll for electrode 100 to thereby obtain the laminate 110.

[Method for producing a laminate]

The method for producing a laminate of the first embodiment is a method for producing a laminate of an electrode for electrolysis and a membrane, the method including a step of rolling out an elongate electrode for electrolysis from a roll for electrode around which the electrode for electrolysis is wound and a step of rolling out an elongate membrane from a roll for membrane around which the membrane is wound. The method for producing a laminate of the first embodiment, as configured as described above, can produce a laminate that can improve the work efficiency during electrode and membrane renewing in an electrolyzer.

The method for producing a laminate of the first embodiment can be preferably conducted using the jig for laminate production of the first embodiment.

In the first embodiment, from the viewpoint of producing a laminate more stably, the electrode for electrolysis is preferably conveyed in contact with the roll for membrane at a wrap angle of 0° to 270°. From the similar viewpoint, it is also preferred that the membrane be conveyed in contact with the roll for electrode at a wrap angle of 0° to 270°.

In the first embodiment, from the viewpoint of producing a laminate more stably, in the step of rolling out the electrode for electrolysis and/or the membrane, it is preferred that the electrode for electrolysis and/or the membrane be guided by a guide roll and the electrode for electrolysis be conveyed in contact with the guide roll at a wrap angle of 0° to 270°. From the similar viewpoint, in the step of rolling out the electrode for electrolysis and/or the membrane, it is also preferred that the electrode for electrolysis and/or the membrane be guided by the guide roll and the membrane be conveyed in contact with the guide roll at a wrap angle of 0° to 270°.

In the first embodiment, from the viewpoint of producing a laminate more easily, the method preferably further includes a step of supplying moisture to the electrode for electrolysis rolled out from the roll for electrode.

In the first embodiment, from the viewpoint of producing a laminate more stably, the wound electrode for electrolysis and membrane are each preferably rolled out in the state where the relative positions of the roll for electrode and the roll for membrane are fixed.

[Package]

The package of the first embodiment includes a roll for electrode around which an elongate electrode for electrolysis is wound and/or a roll for membrane around which an elongate membrane is wound, and a housing storing the roll for electrode and/or the roll for membrane. The package of the first embodiment is preferably used for the method for producing a laminate of the first embodiment. An example of such a package includes a package comprising the roll for electrode 100 around which the electrode for electrolysis 101 is wound shown in Figure 1(A) and/or the roll for membrane 200 around which the membrane 201 is wound shown in Figure 1(B), and a housing storing the roll for electrode 100 and/or the roll for membrane 200.

As described above, the package of the first embodiment can be, for example, a package having both the roll for electrode 100 and the roll for membrane 200 in one housing.

Alternatively, for example, a package having the roll for electrode 100 in a housing and a package having the roll for membrane 200 in a housing are provided, and these may be used for the method for producing a laminate of the first embodiment.

The package of the first embodiment may have a predetermined slit(s) through which the electrode for electrolysis 101 and/or the membrane 201 pulled out for conveying, in the housing. The package of the first embodiment may further comprise a water retention section for supplying water to the membrane 201.

When the roll for electrode 100 and the roll for membrane 200 are stored in one housing, on producing the laminate 110, the roll for electrode 100 and/or the roll for membrane 200 are/is taken out of the housing, the electrode for electrolysis 101 is rolled out from the roll for electrode 100, the membrane 201 is rolled out from the roll for membrane 200, and the electrode for electrolysis 101 and the membrane 201 are laminated to enable the laminate 110 to be produced.

Alternatively, when the roll for electrode 100 and the roll for membrane 200 are stored in one housing, on producing the laminate 110, in a state where the roll for electrode 100 and the roll for membrane 200 are stored in the housing, the electrode for electrolysis 101 is rolled out from the roll for electrode 100, the membrane 201 is rolled out from the roll for membrane 200, and the electrode for electrolysis 101 and the membrane 201 are laminated to enable the laminate to be produced.

When the roll for electrode 100 and the roll for membrane 200 are each stored in a different housing, on producing the laminate 110, the roll for electrode 100 and/or the roll for membrane 200 are/is taken out of each of the housing, the electrode for electrolysis 101 is rolled out from the roll for electrode 100, the membrane 201 is rolled out from the roll for membrane 200, and the electrode for electrolysis 101 and the membrane 201 are laminated to enable the laminate 110 to be produced.

Alternatively, when the roll for electrode 100 and the roll for membrane 200 are each stored in a different housing, on producing the laminate 110, in a state where the roll for electrode 100 and the roll for membrane 200 are stored in each housing, the electrode for electrolysis 101 is rolled out from the roll for electrode 100, the membrane 201 is rolled out from the roll for membrane 200, and the electrode for electrolysis 101 and the membrane 201 are laminated to enable the laminate to be produced.

[Laminate]

A laminate obtained by the jig for laminate production and/or the method for producing a laminate of the first embodiment (hereinbelow, may be described as "the laminate in the first embodiment") comprises an electrode for electrolysis and a membrane in contact with the electrode for electrolysis.

On assembling the laminate in the first embodiment in an electrolyzer, the force applied per unit mass-unit area of the electrode for electrolysis on the membrane or feed conductor is preferably less than 1.5 N/mg·cm². The laminate, as configured as described above, can improve the work efficiency during electrode renewing in an electrolyzer and further, can exhibit excellent electrolytic performance also after renewing.

That is, according to the laminate in the first embodiment, on renewing the electrode, the electrode can be renewed by a work as simple as renewing the membrane without a complicated work such as stripping off the existing electrode fixed on the electrolytic cell, and thus, the work efficiency is markedly improved.

Further, according to the laminate in the first embodiment, it is possible to maintain or improve the electrolytic performance of a new electrode. Thus, the electrode fixed on a conventional new electrolytic cell and serving as an anode and/or a cathode is only required to serve as a feed conductor. Thus, it may be also possible to markedly reduce or eliminate catalyst coating.

The laminate in the first embodiment can be stored or transported to customers in a state where the laminate is wound around a vinyl chloride pipe or the like (in a rolled state or the like), making handling markedly easier.

As the feed conductor, various substrates mentioned below such as a degraded electrode (i.e., the existing electrode) and an electrode having no catalyst coating can be employed.

The laminate in the first embodiment may have partially a fixed portion as long as the laminate has the configuration described above. That is, in the case where the laminate in the first embodiment has a fixed portion, a portion not having the fixing is subjected to measurement, and the resulting force applied per unit mass-unit area of the electrode for electrolysis is preferably less than 1.5 N/mg·cm².

[Electrode for electrolysis]

The electrode for electrolysis constituting the laminate in the first embodiment has a force applied per unit mass-unit area of preferably 1.6 N/(mg·cm²) or less, more preferably less than 1.6 N/(mg·cm²), further preferably less than 1.5 N/(mg·cm²), even further preferably 1.2 N/mg·cm² or less, still more preferably 1.20 N/mg·cm² or less from the viewpoint of enabling a good handling property to be provided and having a good adhesive force to a membrane such as an ion exchange membrane and a microporous membrane, a feed conductor (a degraded electrode and an electrode having no catalyst coating), and the like. The force applied is even still more preferably 1.1 N/mg·cm² or less, further still more preferably 1.10 N/mg·cm² or less, particularly preferably 1.0 N/mg·cm² or less, especially preferably 1.00 N/mg·cm² or less.

From the viewpoint of further improving the electrolytic performance, the force is preferably more than 0.005 N/(mg·cm²), more preferably 0.08 N/(mg·cm²) or more, further preferably 0.1 N/mg·cm² or more, even further more preferably 0.14 N/(mg·cm²) or more. The force is further more preferably 0.2 N/(mg·cm²) or more from the viewpoint of further facilitating handling in a large size (e.g., a size of 1.5 m × 2.5 m).

The force applied described above can be within the range described above by appropriately adjusting an opening ratio described below, thickness of the electrode for electrolysis, arithmetic average surface roughness, and the like, for example. More specifically, for example, a higher opening ratio tends to lead to a smaller force applied, and a lower opening ratio tends to lead to a larger force applied.

The mass per unit is preferably 48 mg/cm² or less, more preferably 30 mg/cm² or less, further preferably 20 mg/cm² or less from the viewpoint of enabling a good handling property to be provided, having a good adhesive force to a membrane such as an ion exchange membrane and a microporous membrane, a degraded electrode, a feed conductor having no catalyst coating, and of economy, and furthermore preferably 15 mg/cm² or less from the comprehensive viewpoint including handling property, adhesion, and economy. The lower limit value is not particularly limited but is of the order of 1 mg/cm², for example.

The mass per unit area described above can be within the range described above by appropriately adjusting an opening ratio described below, thickness of the electrode, and the like, for example. More specifically, for example, when the thickness is constant, a higher opening ratio tends to lead to a smaller mass per unit area, and a lower opening ratio tends to lead to a larger mass per unit area.

The force applied can be measured by methods (i) or (ii) described below.

As for the force applied, the value obtained by the measurement of the method (i) (also referred to as "the force applied (1)") and the value obtained by the measurement of the method (ii) (also referred to as "the force applied (2)") may be the same or different, and either of the values is less than 1.5 N/mg·cm².

[Method (i)]

A nickel plate obtained by blast processing with alumina of grain-size number 320 (thickness 1.2 mm, 200 mm square), an ion exchange membrane which is obtained by applying inorganic material particles and a binder to both surfaces of a membrane of a perfluorocarbon polymer into which an ion exchange group is introduced (170 mm square), and a sample of electrode (130 mm square) are laminated in this order. After this laminate is sufficiently immersed in pure water, excess water deposited on the surface of the laminate is removed to obtain a sample for measurement.

Here, as the ion exchange membrane, an ion exchange membrane A shown below is used.

As reinforcement core materials, 90 denier monofilaments made of polytetrafluoroethylene (PTFE) are used (hereinafter referred to as PTFE yarns), and as the sacrifice yarns, yarns obtained by twisting six 35 denier filaments of polyethylene terephthalate (PET) 200 times/m are used (hereinafter referred to as PET yarns). First, in each of the TD and the MD, the PTFE yarns and the sacrifice yarns are plain-woven with 24 PTFE yarns/inch so that two sacrifice yarns are arranged between adjacent PTFE yarns, to obtain a woven fabric. The resulting woven fabric is pressure-bonded by a roll to obtain a reinforcing material as a woven fabric having a thickness of 70 $\mu$m.

Next, a resin A of a dry resin that is a copolymer of $CF_2=CF_2$ and $CF_2=CFOCF_2CF(CF_3)OCF_2CF_2COOCH_3$ and has an ion exchange capacity of 0.85 mg equivalent/g, and a resin B of a dry resin that is a copolymer of $CF_2=CF_2$ and $CF_2=CFOCF_2CF(CF_3)OCF_2CF_2SO_2F$ and has an ion exchange capacity of 1.03 mg equivalent/g are provided. Using these resins A and B, a two-layer film X in which the thickness of a resin A layer is 15 $\mu$m and the thickness of a resin B layer is 84 $\mu$m is obtained by a coextrusion T die method. Using only the resin B, a single-layer film Y having a thickness of 20 $\mu$m is obtained by a T die method.

Subsequently, release paper (embossed in a conical shape having a height of 50 $\mu$m), the film Y, a reinforcing material, and the film X are laminated in this order on a hot plate having a heat source and a vacuum source inside and having micropores on its surface, heated and depressurized under the conditions of a hot plate surface temperature of 223°C and a degree of reduced pressure of 0.067 MPa for 2 minutes, and then the release paper is removed to obtain a composite membrane. The film X is laminated such that the resin B is the lower surface.

The resulting composite membrane is immersed in an 80°C aqueous solution comprising 30% by mass dimethyl sulfoxide (DMSO) and 15% by mass potassium hydroxide (KOH) for 20 minutes for saponification. Then, the membrane is immersed in a 50°C aqueous solution containing 0.5 N sodium hydroxide (NaOH) for an hour to replace the counter ions of the ion exchange groups by Na, and then washed with water. Thereafter, the surface on the resin B side is polished with a relative speed between a polishing roll and the membrane set to 100 m/minute and a press amount of the polishing roll set to 2 mm to form opening portions. Then, the membrane is dried at 60°C.

Further, 20% by mass of zirconium oxide having a primary particle size of 1 $\mu$m is added to a 5% by mass ethanol solution of the acid-type resin of the resin B and dispersed to prepare a suspension, and the suspension is sprayed onto both the surfaces of the above composite membrane by a suspension spray method to form coatings of zirconium oxide on the surfaces of the composite membrane to obtain an ion exchange membrane A as the membrane. Here, the coating density of zirconium oxide measured by fluorescent X-ray measurement will be 0.5 mg/cm$^2$.

The arithmetic average surface roughness (Ra) of the nickel plate after the blast treatment is 0.5 to 0.8 $\mu$m. The specific method for calculating the arithmetic average surface roughness (Ra) is as follows.

For surface roughness measurement herein, a probe type surface roughness measurement instrument SJ-310 (Mitutoyo Corporation) is used. A measurement sample is placed on the surface plate parallel to the ground surface to measure the arithmetic average roughness Ra under measurement conditions as described below. The measurement is repeated 6 times, and the average value is denoted as Ra.

<Probe shape> conical taper angle = 60°, tip radius = 2 $\mu$m, static measuring force = 0.75 mN
<Roughness standard> JIS2001
<Evaluation curve> R
<Filter> GAUSS
<Cutoff value $\lambda$c> 0.8 mm
<Cutoff value $\lambda$s> 2.5 $\mu$m
<Number of sections> 5
<Pre-running, post-running> available

Under conditions of a temperature of 23$\pm$2°C and a relative humidity of 30$\pm$5%, only the sample of electrode in this sample for measurement is raised in a vertical direction at 10 mm/minute using a tensile and compression testing machine, and the load when the sample of electrode is raised by 10 mm in a vertical direction is measured. This measurement is repeated three times, and the average value is calculated.

This average value is divided by the area of the overlapping portion of the sample of electrode and the ion exchange membrane and the mass of the portion overlapping the ion exchange membrane in the sample of electrode to calculate the force applied per unit mass-unit area (1) (N/mg·cm$^2$).

The force applied per unit mass-unit area (1) obtained by the method (i) is preferably less than 1.5 N/mg·cm$^2$, more preferably 1.2 N/mg·cm$^2$ or less, further preferably 1.20 N/mg·cm$^2$ or less, further more preferably 1.1 N/mg·cm$^2$ or less, more further preferably 1.10 N/mg·cm$^2$ or less, still more preferably 1.0 N/mg·cm$^2$ or less, even still more preferably 1.00 N/mg·cm$^2$ or less from the viewpoint of enabling a good handling property to be provided and having a good adhesive force to a membrane such as an ion exchange membrane and a microporous membrane, a degraded electrode, and a feed conductor having no catalyst coating.

The force is preferably more than 0.005 N/(mg·cm$^2$), more preferably 0.08 N/(mg·cm$^2$) or more, further preferably 0.1 N/(mg·cm$^2$) or more from the viewpoint of further improving the electrolytic performance, and furthermore, is further more preferably 0.14 N/(mg·cm$^2$), still more preferably 0.2 N/(mg·cm$^2$) or more from the viewpoint of further facilitating handling in a large size (e.g., a size of 1.5 m × 2.5 m).

When the electrode for electrolysis satisfies the force applied (1), the electrode can be integrated with a membrane such as an ion exchange membrane and a microporous membrane or a feed conductor, for example, and used (i.e., as a laminate). Thus, on renewing the electrode, the substituting work for the cathode and anode fixed on the electrolytic cell by a method such as welding is eliminated, and the work efficiency is markedly improved. Additionally, by use of the electrode for electrolysis as a laminate integrated with the ion exchange membrane, microporous membrane, or feed conductor, it is possible to make the electrolytic performance comparable to or higher than those of a new electrode.

On shipping a new electrolytic cell, an electrode fixed on an electrolytic cell has been subjected to catalyst coating conventionally. Since only combination of an electrode having no catalyst coating with the electrode for electrolysis in the first embodiment can allow the electrode to function as an electrode, it is possible to markedly reduce or eliminate the production step and the amount of the catalyst for catalyst coating. A conventional electrode of which catalyst coating is markedly reduced or eliminated can be electrically connected to the electrode for electrolysis in the first embodiment and allowed to serve as a feed conductor for passage of an electric current.

[Method (ii)]

A nickel plate obtained by blast processing with alumina of grain-size number 320 (thickness 1.2 mm, 200 mm square, a nickel plate similar to that of the method (i) above) and a sample of electrode (130 mm square) are laminated in this order. After this laminate is sufficiently immersed in pure water, excess water deposited on the surface of the laminate is removed to obtain a sample for measurement.

Under conditions of a temperature of 23±2°C and a relative humidity of 30±5%, only the sample of electrode in this sample for measurement is raised in a vertical direction at 10 mm/minute using a tensile and compression testing machine, and the load when the sample of electrode is raised by 10 mm in a vertical direction is measured. This measurement is repeated three times, and the average value is calculated.

This average value is divided by the area of the overlapping portion of the sample of electrode and the nickel plate and the mass of the sample of electrode in the portion overlapping the nickel plate to calculate the adhesive force per unit mass-unit area (2) (N/mg·cm$^2$).

The force applied per unit mass-unit area (2) obtained by the method (ii) is preferably less than 1.5 N/mg·cm$^2$, more preferably 1.2 N/mg·cm$^2$ or less, further preferably 1.20 N/mg·cm$^2$ or less, further more preferably 1.1 N/mg·cm$^2$ or less, more further preferably 1.10 N/mg·cm$^2$ or less, still more preferably 1.0 N/mg·cm$^2$ or less, even still more preferably 1.00 N/mg·cm$^2$ or less from the viewpoint of enabling a good handling property to be provided and having a good adhesive force to a membrane such as an ion exchange membrane and a microporous membrane, a degraded electrode, and a feed conductor having no catalyst coating.

The force is preferably more than 0.005 N/(mg·cm$^2$), more preferably 0.08 N/(mg·cm$^2$) or more, further preferably 0.1 N/(mg·cm$^2$) or more from the viewpoint of further improving the electrolytic performance, and is further more preferably 0.14 N/(mg·cm$^2$) or more from the viewpoint of further facilitating handling in a large size (e.g., a size of 1.5 m × 2.5 m).

The electrode for electrolysis in the first embodiment, if satisfies the force applied (2), can be stored or transported to customers in a state where the electrode is wound around a vinyl chloride pipe or the like (in a rolled state or the like), making handling markedly easier. By attaching the electrode for electrolysis in the first embodiment to a degraded existing electrode to provide a laminate, it is possible to make the electrolytic performance comparable to or higher than those of a new electrode.

In the electrode for electrolysis in the first embodiment, from the viewpoint that the electrode for electrolysis, if being an electrode having a broad elastic deformation region, can provide a better handling property and has a better adhesive force to a membrane such as an ion exchange membrane and a microporous membrane, a degraded electrode, a feed conductor having no catalyst coating, and the like, the thickness of the electrode for electrolysis is preferably 315 μm or less, more preferably 220 μm or less, further preferably 170 μm or less, further more preferably 150 μm or less, particularly preferably 145 μm or less, still more preferably 140 μm or less, even still more preferably 138 μm or less, further still more preferably 135 μm or less.

A thickness of 315 μm or less can provide a good handling property.

Further, from a similar viewpoint as above, the thickness is preferably 130 μm or less, more preferably less than 130 μm, further preferably 115 μm or less, further more preferably 65 μm or less. The lower limit value is not particularly limited, but is preferably 1 μm or more, more preferably 5 μm or more for practical reasons, more preferably 20 μm or more.

In the first embodiment, "having a broad elastic deformation region" means that, when an electrode for electrolysis is wound to form a wound body, warpage derived from winding is unlikely to occur after the wound state is released. The thickness of the electrode for electrolysis refers to, when a catalyst layer mentioned below is included, the total thickness of both the substrate for electrode for electrolysis and the catalyst layer.

The electrode for electrolysis in the first embodiment preferably includes a substrate for electrode for electrolysis and a catalyst layer.

The thickness of the substrate for electrode for electrolysis (gauge thickness) is not particularly limited, but is preferably 300 $\mu$m or less, more preferably 205 $\mu$m or less, further preferably 155 $\mu$m or less, further preferably 135 $\mu$m or less, particularly preferably 125 $\mu$m or less, still more preferably 120 $\mu$m or less, even still more preferably 100 $\mu$m or less from the viewpoint of enabling a good handling property to be provided, having a good adhesive force to a membrane such as an ion exchange membrane and a microporous membrane, a degraded electrode (feed conductor), and an electrode (feed conductor) having no catalyst coating, being capable of being suitably rolled in a roll and satisfactorily folded, and facilitating handling in a large size (e.g., a size of 1.5 m $\times$ 2.5 m), and further still more preferably 50 $\mu$m or less from the viewpoint of a handling property and economy.

The lower limit value is not particularly limited, but is 1 $\mu$m, for example, preferably 5 $\mu$m, more preferably 15 $\mu$m.

A liquid is preferably interposed between the membrane such as an ion exchange membrane and a microporous membrane and the electrode for electrolysis, or the metal porous plate or metal plate (i.e., feed conductor) such as a degraded existing electrode and electrode having no catalyst coating and the electrode for electrolysis.

As the liquid, any liquid, such as water and organic solvents, can be used as long as the liquid generates a surface tension. The larger the surface tension of the liquid, the larger the force applied between the membrane and the electrode for electrolysis or the metal porous plate or metal plate and the electrode for electrolysis. Thus, a liquid having a larger surface tension is preferred.

Examples of the liquid include the following (the numerical value in the parentheses is the surface tension of the liquid at 20°C) :

hexane (20.44 mN/m), acetone (23.30 mN/m), methanol (24.00 mN/m), ethanol (24.05 mN/m), ethylene glycol (50.21 mN/m), and water (72.76 mN/m).

A liquid having a large surface tension allows the membrane and the electrode for electrolysis or the metal porous plate or metal plate (feed conductor) and the electrode for electrolysis to be integrated (to be a laminate) to thereby facilitate renewing of the electrode. The liquid between the membrane and the electrode for electrolysis or the metal porous plate or metal plate (feed conductor) and the electrode for electrolysis may be present in an amount such that the both adhere to each other by the surface tension. As a result, after the laminate is placed in an electrolytic cell, the liquid, if mixed into the electrolyte solution, does not affect electrolysis itself due to the small amount of the liquid.

From a practical viewpoint, a liquid having a surface tension of 24 mN/m to 80 mN/m, such as ethanol, ethylene glycol, and water, is preferably used as the liquid. Particularly preferred is water or an alkaline aqueous solution prepared by dissolving caustic soda, potassium hydroxide, lithium hydroxide, sodium hydrogen carbonate, potassium hydrogen carbonate, sodium carbonate, potassium carbonate, or the like in water. Alternatively, the surface tension can be adjusted by allowing these liquids to contain a surfactant. When a surfactant is contained, the adhesion between the membrane and the electrode for electrolysis or the metal porous plate or metal plate (feed conductor) and the electrode for electrolysis varies to enable the handling property to be adjusted. The surfactant is not particularly limited, and both ionic surfactants and nonionic surfactants may be used.

The proportion measured by the following method (2) of the electrode for electrolysis in the first embodiment is not particularly limited, but is preferably 90% or more, more preferably 92% or more from the viewpoint of enabling a good handling property to be provided and having a good adhesive force to a membrane such as an ion exchange membrane and a microporous membrane, a degraded electrode (feed conductor), and an electrode (feed conductor) having no catalyst coating, and further preferably 95% or more from the viewpoint of further facilitating handling in a large size (e.g., a size of 1.5 m $\times$ 2.5 m). The upper limit value is 100%.

[Method (2)]

An ion exchange membrane (170 mm square) and a sample of electrode (130 mm square) are laminated in this order. The laminate is placed on a curved surface of a polyethylene pipe (outer diameter: 280 mm) such that the sample of electrode in this laminate is positioned outside under conditions of a temperature of 23$\pm$2°C and a relative humidity of 30 $\pm$5%, the laminate and the pipe are sufficiently immersed in pure water, excess water deposited on a surface of the laminate and the pipe is removed, and one minute after this removal, then the proportion (%) of an area of a portion in which the ion exchange membrane (170 mm square) is in close contact with the sample of electrode is measured.

The proportion measured by the following method (3) of the electrode for electrolysis of the first embodiment is not particularly limited, but is preferably 75% or more, more preferably 80% or more from the viewpoint of enabling a good handling property to be provided, having a good adhesive force to a membrane such as an ion exchange membrane and a microporous membrane, a degraded electrode (feed conductor), and an electrode (feed conductor) having no catalyst coating, and being capable of being suitably rolled in a roll and satisfactorily folded, and is further preferably 90% or more from the viewpoint of further facilitating handling in a large size (e.g., a size of 1.5 m × 2.5 m). The upper limit value is 100%.

[Method (3)]

An ion exchange membrane (170 mm square) and a sample of electrode (130 mm square) are laminated in this order. The laminate is placed on a curved surface of a polyethylene pipe (outer diameter: 145 mm) such that the sample of electrode in this laminate is positioned outside under conditions of a temperature of 23±2°C and a relative humidity of 30 ±5%, the laminate and the pipe are sufficiently immersed in pure water, excess water deposited on a surface of the laminate and the pipe is removed, and one minute after this removal, then the proportion (%) of an area of a portion in which the ion exchange membrane (170 mm square) is in close contact with the sample of electrode is measured.

The electrode for electrolysis in the first embodiment preferably has, but is not particularly limited to, a porous structure and an opening ratio or void ratio of 5 to 90% or less, from the viewpoint of enabling a good handling property to be provided, having a good adhesive force to a membrane such as an ion exchange membrane and a microporous membrane, a degraded electrode (feed conductor), and an electrode (feed conductor) having no catalyst coating, and preventing accumulation of gas to be generated during electrolysis. The opening ratio is more preferably 10 to 80% or less, further preferably 20 to 75%.

The opening ratio is a proportion of the opening portions per unit volume. The calculation method may differ depending on that opening portions in submicron size are considered or that only visible openings are considered.

Specifically, a volume V can be calculated from the values of the gauge thickness, width, and length of electrode, and further, a weight W is measured to thereby enable an opening ratio A to be calculated by the following formula.

$$A = (1 - (W/(V \times \rho))) \times 100$$

$\rho$ is the density of the electrode material (g/cm³). For example, $\rho$ of nickel is 8.908 g/cm³, and $\rho$ of titanium is 4.506 g/cm³. The opening ratio is appropriately adjusted by changing the area of metal to be perforated per unit area in the case of perforated metal, changing the values of the SW (short diameter), LW (long diameter), and feed in the case of expanded metal, changing the line diameter of metal fiber and mesh number in the case of mesh, changing the pattern of a photoresist to be used in the case of electroforming, changing the metal fiber diameter and fiber density in the case of nonwoven fabric, changing the mold for forming voids in the case of foamed metal, or the like.

The value obtained by measurement by the following method (A) of the electrode for electrolysis in the first embodiment is preferably 40 mm or less, more preferably 29 mm or less, further preferably 10 mm or less, further more preferably 6.5 mm or less from the viewpoint of the handling property.

[Method (A)]

Under conditions of a temperature of 23±2°C and a relative humidity of 30±5%, a sample of laminate obtained by laminating the ion exchange membrane and the electrode for electrolysis is wound around and fixed onto a curved surface of a core material being made of polyvinyl chloride and having an outer diameter $\phi$ of 32 mm, and left to stand for 6 hours; thereafter, when the electrode for electrolysis is separated from the sample and placed on a flat plate, heights in a vertical direction at both edges of the electrode for electrolysis $L_1$ and $L_2$ are measured, and an average value thereof is used as a measurement value.

In the electrode for electrolysis in the first embodiment, the ventilation resistance is preferably 24 kPa·s/m or less when the electrode for electrolysis has a size of 50 mm × 50 mm, the ventilation resistance being measured under the conditions of the temperature of 24°C, the relative humidity of 32%, a piston speed of 0.2 cm/s, and a ventilation volume of 0.4 cc/cm²/s (hereinbelow, also referred to as "measurement condition 1") (hereinbelow, also referred to as "ventilation resistance 1"). A larger ventilation resistance means that air is unlikely to flow and refers to a state of a high density. In this state, the product from electrolysis remains in the electrode and the reaction substrate is more unlikely to diffuse inside the electrode, and thus, the electrolytic performance (such as voltage) tends to deteriorate. The concentration on the membrane surface tends to increase. Specifically, the caustic concentration increases on the cathode surface, and the supply of brine tends to decrease on the anode surface. As a result, the product accumulates at a high concentration on the interface at which the membrane is in contact with the electrode. This accumulation leads to damage of the membrane and tends to also lead to increase in the voltage and damage of the membrane on the cathode surface and damage of the membrane on the anode surface.

In order to prevent these defects, the ventilation resistance is preferably set at 24 kPa·s/m or less.

From a similar viewpoint as above, the ventilation resistance is more preferably less than 0.19 kPa·s/m, further preferably 0.15 kPa·s/m or less, further more preferably 0.07 kPa·s/m or less.

When the ventilation resistance is larger than a certain value, NaOH generated in the electrode tends to accumulate on the interface between the electrode and the membrane to result in a high concentration in the case of the cathode, and the supply of brine tends to decrease to cause the brine concentration to be lower in the case of the anode. In order to prevent damage to the membrane that may be caused by such accumulation, the ventilation resistance is preferably less than 0.19 kPa·s/m, more preferably 0.15 kPa·s/m or less, further preferably 0.07 kPa·s/m or less.

In contrast, when the ventilation resistance is low, the area of the electrode is reduced and the electrolysis area is reduced. Thus, the electrolytic performance (such as voltage) tends to deteriorate. When the ventilation resistance is zero, the feed conductor functions as the electrode because no electrode for electrolysis is provided, and the electrolytic performance (such as voltage) tends to markedly deteriorate. From this viewpoint, a preferable lower limit value identified as the ventilation resistance 1 is not particularly limited, but is preferably more than 0 kPa·s/m, more preferably 0.0001 kPa·s/m or more, further preferably 0.001 kPa·s/m or more.

When the ventilation resistance 1 is 0.07 kPa·s/m or less, a sufficient measurement accuracy may not be achieved because of the measurement method therefor. From this viewpoint, it is also possible to evaluate an electrode for electrolysis having a ventilation resistance 1 of 0.07 kPa·s/m or less by means of a ventilation resistance (hereinbelow, also referred to as "ventilation resistance 2") obtained by the following measurement method (hereinbelow, also referred to as "measurement condition 2"). That is, the ventilation resistance 2 is a ventilation resistance measured, when the electrode for electrolysis has a size of 50 mm × 50 mm, under conditions of the temperature of 24°C, the relative humidity of 32%, a piston speed of 2 cm/s, and a ventilation volume of 4 cc/cm$^2$/s.

The ventilation resistances 1 and 2 can be within the range described above by appropriately adjusting an opening ratio, thickness of the electrode, and the like, for example. More specifically, for example, when the thickness is constant, a higher opening ratio tends to lead to smaller ventilation resistances 1 and 2, and a lower opening ratio tends to lead to larger ventilation resistances 1 and 2.

In the electrode for electrolysis in the first embodiment, as mentioned above, the force applied per unit mass-unit area of the electrode for electrolysis on the membrane or feed conductor is preferably less than 1.5 N/mg·cm$^2$.

In this manner, the electrode for electrolysis in the first embodiment abuts with a moderate adhesive force on the membrane or feed conductor (e.g., the existing anode or cathode in the electrolyzer) to thereby enable a laminate with the membrane or feed conductor to be constituted. That is, it is not necessary to cause the membrane or feed conductor to firmly adhere to the electrode for electrolysis by a complicated method such as thermal compression. The laminate is formed only by a relatively weak force, for example, a surface tension derived from moisture contained in the membrane such as an ion exchange membrane and a microporous membrane, and thus, a laminate of any scale can be easily constituted. Additionally, such a laminate exhibits excellent electrolytic performance. Thus, the laminate obtained by the production method of the first embodiment is suitable for electrolysis applications, and can be particularly preferably used for applications related to members of electrolyzers and renewing the members.

Hereinbelow, one aspect of the electrode for electrolysis will be described.

The electrode for electrolysis preferably includes a substrate for electrode for electrolysis and a catalyst layer.

The catalyst layer may be composed of a plurality of layers as shown below or may be a single-layer configuration.

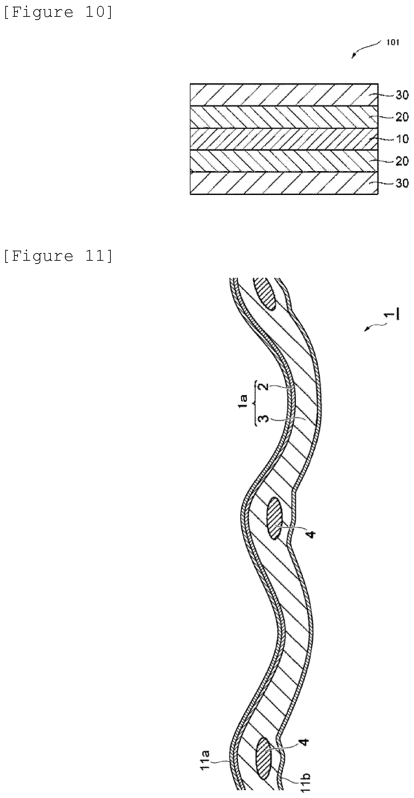

As shown in Figure 10, an electrode for electrolysis 101 includes a substrate for electrode for electrolysis 10 and a pair of first layers 20 with which both the surfaces of the substrate for electrode for electrolysis 10 are covered.

The entire substrate for electrode for electrolysis 10 is preferably covered with the first layers 20. This covering is likely to improve the catalyst activity and durability of the electrode for electrolysis. One first layer 20 may be laminated only on one surface of the substrate for electrode for electrolysis 10.

Also shown in Figure 10, the surfaces of the first layers 20 may be covered with second layers 30. The entire first layers 20 are preferably covered by the second layers 30. Alternatively, one second layer 30 may be laminated only one surface of the first layer 20.

(Substrate for electrode for electrolysis)

As the substrate for electrode for electrolysis 10, for example, nickel, nickel alloys, stainless steel, and further, valve metals including titanium can be used, although not limited thereto. At least one element selected from nickel (Ni) and titanium (Ti) is preferably included.

When stainless steel is used in an alkali aqueous solution of a high concentration, iron and chromium are eluted and the electrical conductivity of stainless steel is of the order of one-tenth of that of nickel. In consideration of the foregoing, a substrate containing nickel (Ni) is preferable as the substrate for electrode for electrolysis.

Alternatively, when the substrate for electrode for electrolysis 10 is used in a salt solution of a high concentration near the saturation under an atmosphere in which chlorine gas is generated, the material of the substrate for electrode 10 is also preferably titanium having high corrosion resistance.

The form of the substrate for electrode for electrolysis 10 is not particularly limited, and a form suitable for the purpose can be selected. As the form, any of a perforated metal, nonwoven fabric, foamed metal, expanded metal, metal porous foil formed by electroforming, so-called woven mesh produced by knitting metal lines, and the like can be used. Among these, a perforated metal or expanded metal is preferable. Electroforming is a technique for producing a metal thin film having a precise pattern by using photolithography and electroplating in combination. It is a method including forming a pattern on a substrate with a photoresist and electroplating the portion not protected by the resist to provide a metal thin film.

As for the form of the substrate for electrode for electrolysis, a suitable specification depends on the distance between the anode and the cathode in the electrolyzer. In the case where the distance between the anode and the cathode is finite, an expanded metal or perforated metal form can be used, and in the case of a so-called zero-gap base electrolyzer, in which the ion exchange membrane is in contact with the electrode, a woven mesh produced by knitting thin lines, wire mesh, foamed metal, metal nonwoven fabric, expanded metal, perforated metal, metal porous foil, and the like can be used, although not limited thereto.

Examples of the substrate for electrode for electrolysis 10 include a metal porous foil, a wire mesh, a metal nonwoven fabric, a perforated metal, an expanded metal, and a foamed metal.

As a plate material before processed into a perforated metal or expanded metal, rolled plate materials and electrolytic foils are preferable. An electrolytic foil is preferably further subjected to a plating treatment by use of the same element as the base material thereof, as the post-treatment, to thereby form asperities on one or both of the surfaces.

The thickness of the substrate for electrode for electrolysis 10 is, as mentioned above, preferably 300 $\mu$m or less, more preferably 205 $\mu$m or less, further preferably 155 $\mu$m or less, further more preferably 135 $\mu$m or less, even further preferably 125 $\mu$m or less, still more preferably 120 $\mu$m or less, even still more preferably 100 $\mu$m or less, and further still more preferably 50 $\mu$m or less from the viewpoint of a handling property and economy. The lower limit value is not particularly limited, but is 1 $\mu$m, for example, preferably 5 $\mu$m, more preferably 15 $\mu$m.

In the substrate for electrode for electrolysis, the residual stress during processing is preferably relaxed by annealing the substrate for electrode for electrolysis in an oxidizing atmosphere. It is preferable to form asperities using a steel grid, alumina powder, or the like on the surface of the substrate for electrode for electrolysis followed by an acid treatment to increase the surface area thereof, in order to improve the adhesion to a catalyst layer with which the surface is covered. Alternatively, it is preferable to give a plating treatment by use of the same element as the substrate to increase the surface area.

To bring the first layer 20 into close contact with the surface of the substrate for electrode for electrolysis 10, the substrate for electrode for electrolysis 10 is preferably subjected to a treatment of increasing the surface area. Examples of the treatment of increasing the surface area include a blast treatment using a cut wire, steel grid, alumina grid or the like, an acid treatment using sulfuric acid or hydrochloric acid, and a plating treatment using the same element to that of the substrate. The arithmetic average surface roughness (Ra) of the substrate surface is not particularly limited, but is preferably 0.05 $\mu$m to 50 $\mu$m, more preferably 0.1 to 10 $\mu$m, further preferably 0.1 to 8 $\mu$m.

Next, a case where the electrode for electrolysis is used as an anode for common salt electrolysis will be described.

(First layer)

In Figure 10, a first layer 20 as a catalyst layer contains at least one of ruthenium oxides, iridium oxides, and titanium oxides. Examples of the ruthenium oxide include $RuO_2$. Examples of the iridium oxide include $IrO_2$. Examples of the titanium oxide include $TiO_2$. The first layer 20 preferably contains two oxides: a ruthenium oxide and a titanium oxide or three oxides: a ruthenium oxide, an iridium oxide, and a titanium oxide. This makes the first layer 20 more stable and additionally improves the adhesion with the second layer 30.

When the first layer 20 contains two oxides: a ruthenium oxide and a titanium oxide, the first layer 20 contains preferably 1 to 9 mol, more preferably 1 to 4 mol of the titanium oxide based on 1 mol of the ruthenium oxide contained in the first layer 20. With the composition ratio of the two oxides in this range, the electrode for electrolysis 101 exhibits excellent durability.

When the first layer 20 contains three oxides: a ruthenium oxide, an iridium oxide, and a titanium oxide, the first layer 20 contains preferably 0.2 to 3 mol, more preferably 0.3 to 2.5 mol of the iridium oxide based on 1 mol of the ruthenium oxide contained in the first layer 20. The first layer 20 contains preferably 0.3 to 8 mol, more preferably 1 to 7 mol of the titanium oxide based on 1 mol of the ruthenium oxide contained in the first layer 20. With the composition ratio of the three oxides in this range, the electrode for electrolysis 101 exhibits excellent durability.

When the first layer 20 contains at least two of a ruthenium oxide, an iridium oxide, and a titanium oxide, these oxides preferably form a solid solution. Formation of the oxide solid solution allows the electrode for electrolysis 101 to exhibit excellent durability.

In addition to the compositions described above, oxides of various compositions can be used as long as at least one oxide of a ruthenium oxide, an iridium oxide, and titanium oxide is contained. For example, an oxide coating called DSA(R), which contains ruthenium, iridium, tantalum, niobium, titanium, tin, cobalt, manganese, platinum, and the like, can be used as the first layer 20.

The first layer 20 need not be a single layer and may include a plurality of layers. For example, the first layer 20 may include a layer containing three oxides and a layer containing two oxides. The thickness of the first layer 20 is preferably 0.05 to 10 $\mu$m, more preferably 0.1 to 8 $\mu$m.

(Second layer)

The second layer 30 preferably contains ruthenium and titanium. This enables the chlorine overvoltage immediately after electrolysis to be further lowered.

The second layer 30 preferably contains a palladium oxide, a solid solution of a palladium oxide and platinum, or an alloy of palladium and platinum. This enables the chlorine overvoltage immediately after electrolysis to be further lowered.

A thicker second layer 30 can maintain the electrolytic performance for a longer period, but from the viewpoint of economy, the thickness is preferably 0.05 to 3 $\mu$m.

Next, a case where the electrode for electrolysis is used as a cathode for common salt electrolysis will be described.

(First layer)

Examples of components of the first layer 20 as the catalyst layer include metals such as C, Si, P, S, Al, Ti, V, Cr, Mn, Fe, Co, Ni, Cu, Zn, Y, Zr, Nb, Mo, Ru, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals. The first layer 20 may or may not contain at least one of platinum group metals, platinum group metal oxides, platinum group metal hydroxides, and alloys containing a platinum group metal.

When the first layer 20 contains at least one of platinum group metals, platinum group metal oxides, platinum group metal hydroxides, and alloys containing a platinum group metal, the platinum group metals, platinum group metal oxides, platinum group metal hydroxides, and alloys containing a platinum group metal preferably contain at least one platinum group metal of platinum, palladium, rhodium, ruthenium, and iridium.

As the platinum group metal, platinum is preferably contained.

As the platinum group metal oxide, a ruthenium oxide is preferably contained.

As the platinum group metal hydroxide, a ruthenium hydroxide is preferably contained.

As the platinum group metal alloy, an alloy of platinum with nickel, iron, and cobalt is preferably contained.

Further, as required, an oxide or hydroxide of a lanthanoid element is preferably contained as a second component. This allows the electrode for electrolysis 101 to exhibit excellent durability.

As the oxide or hydroxide of a lanthanoid element, at least one selected from lanthanum, cerium, praseodymium, neodymium, promethium, samarium, europium, gadolinium, terbium, and dysprosium is preferably contained.

Further, as required, an oxide or hydroxide of a transition metal is preferably contained as a third component.

Addition of the third component enables the electrode for electrolysis 101 to exhibit more excellent durability and the electrolysis voltage to be lowered.

Examples of a preferable combination include ruthenium only, ruthenium + nickel, ruthenium + cerium, ruthenium + lanthanum, ruthenium + lanthanum + platinum, ruthenium + lanthanum + palladium, ruthenium + praseodymium, ruthenium + praseodymium + platinum, ruthenium + praseodymium + platinum + palladium, ruthenium + neodymium, ruthenium + neodymium + platinum, ruthenium + neodymium + manganese, ruthenium + neodymium + iron, ruthenium + neodymium + cobalt, ruthenium + neodymium + zinc, ruthenium + neodymium + gallium, ruthenium + neodymium + sulfur, ruthenium + neodymium + lead, ruthenium + neodymium + nickel, ruthenium + neodymium + copper, ruthenium + samarium, ruthenium + samarium + manganese, ruthenium + samarium + iron, ruthenium + samarium + cobalt, ruthenium + samarium + zinc, ruthenium + samarium + gallium, ruthenium + samarium + sulfur, ruthenium + samarium + lead, ruthenium + samarium + nickel, platinum + cerium, platinum + palladium + cerium, platinum + palladium + lanthanum + cerium, platinum + iridium, platinum + palladium, platinum + iridium + palladium, platinum + nickel + palladium, platinum + nickel + ruthenium, alloys of platinum and nickel, alloys of platinum and cobalt, and alloys of platinum and iron.

When platinum group metals, platinum group metal oxides, platinum group metal hydroxides, and alloys containing a platinum group metal are not contained, the main component of the catalyst is preferably nickel element.

At least one of nickel metal, oxides, and hydroxides is preferably contained.

As the second component, a transition metal may be added. As the second component to be added, at least one element of titanium, tin, molybdenum, cobalt, manganese, iron, sulfur, zinc, copper, and carbon is preferably contained.

Examples of a preferable combination include nickel + tin, nickel + titanium, nickel + molybdenum, and nickel + cobalt.

As required, an intermediate layer can be placed between the first layer 20 and the substrate for electrode for electrolysis 10. The durability of the electrode for electrolysis 101 can be improved by placing the intermediate layer.

As the intermediate layer, those having affinity to both the first layer 20 and the substrate for electrode for electrolysis 10 are preferable. As the intermediate layer, nickel oxides, platinum group metals, platinum group metal oxides, and platinum group metal hydroxides are preferable. The intermediate layer can be formed by applying and baking a solution containing a component that forms the intermediate layer. Alternatively, a surface oxide layer also can be formed by subjecting a substrate to a thermal treatment at a temperature of 300 to 600°C in an air atmosphere. Besides, the layer can be formed by a known method such as a thermal spraying method and ion plating method.

(Second layer)

Examples of components of the second layer 30 as the catalyst layer include metals such as C, Si, P, S, Al, Ti, V, Cr, Mn, Fe, Co, Ni, Cu, Zn, Y, Zr, Nb, Mo, Ru, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals. The second layer 30 may or may not contain at least one of platinum group metals, platinum group metal oxides, platinum group metal hydroxides, and alloys containing a platinum group metal. Examples of a preferable combination of elements contained in the second layer include the combinations enumerated for the first layer. The combination of the first layer and the second layer may be a combination in which the compositions are the same and the composition ratios are different or may be a combination of different compositions.

As the thickness of the catalyst layer, the total thickness of the catalyst layer formed and the intermediate layer is preferably 0.01 $\mu$m to 20 $\mu$m. With a thickness of 0.01 $\mu$m or more, the catalyst layer can sufficiently serve as the catalyst. With a thickness of 20 $\mu$m or less, it is possible to form a robust catalyst layer that is unlikely to fall off from the substrate. The thickness is more preferably 0.05 $\mu$m to 15 $\mu$m. The thickness is more preferably 0.1 $\mu$m to 10 $\mu$m. The thickness is further preferably 0.2 $\mu$m to 8 $\mu$m.

The thickness of the electrode for electrolysis, that is, the total thickness of the substrate for electrode for electrolysis and the catalyst layer is preferably 315 $\mu$m or less, more preferably 220 $\mu$m or less, further preferably 170 $\mu$m or less, further more preferably 150 $\mu$m or less, even further preferably 145 $\mu$m or less, still more preferably 140 $\mu$m or less, even still more preferably 138 $\mu$m or less, further still more preferably 135 $\mu$m or less in respect of the handling property of the electrode for electrolysis.

A thickness of 315 $\mu$m or less can provide a good handling property.

Further, from a similar viewpoint as above, the thickness is preferably 130 $\mu$m or less, more preferably less than 130 $\mu$m, further preferably 115 $\mu$m or less, further more preferably 65 $\mu$m or less.

The lower limit value is not particularly limited, but is preferably 1 $\mu$m or more, more preferably 5 $\mu$m or more for practical reasons, more preferably 20 $\mu$m or more. The thickness of the electrode can be determined by measurement with a digimatic thickness gauge (Mitutoyo Corporation, minimum scale 0.001 mm). The thickness of the substrate for electrode for electrolysis can be measured in the same manner as in the case of the electrode for electrolysis. The thickness of the catalyst layer can be determined by subtracting the thickness of the substrate for electrode for electrolysis from the thickness of the electrode for electrolysis.

(Method for producing electrode for electrolysis)

Next, one embodiment of the method for producing the electrode for electrolysis 101 will be described in detail.

In the first embodiment, the electrode for electrolysis 101 can be produced by forming the first layer 20, preferably the second layer 30, on the substrate for electrode for electrolysis by a method such as baking of a coating film under an oxygen atmosphere (pyrolysis), or ion plating, plating, or thermal spraying.

The method for producing the electrode for electrolysis as mentioned can achieve a high productivity of the electrode for electrolysis 101. Specifically, a catalyst layer is formed on the substrate for electrode for electrolysis by an application step of applying a coating liquid containing a catalyst, a drying step of drying the coating liquid, and a pyrolysis step of performing pyrolysis. Pyrolysis herein means that a metal salt which is to be a precursor is decomposed by heating into a metal or metal oxide and a gaseous substance. The decomposition product depends on the metal species to be used, type of the salt, and the atmosphere under which pyrolysis is performed, and many metals tend to form oxides in an oxidizing atmosphere. In an industrial process of producing an electrode, pyrolysis is usually performed in air, and a metal oxide or a metal hydroxide is formed in many cases.

(Formation of first layer of anode)

(Application step)

The first layer 20 is obtained by applying a solution in which at least one metal salt of ruthenium, iridium, and titanium is dissolved (first coating liquid) onto the substrate for electrode for electrolysis and then pyrolyzing (baking) the coating liquid in the presence of oxygen. The content of ruthenium, iridium, and titanium in the first coating liquid is substantially equivalent to that of the first layer 20.

The metal salts may be chlorides, nitrates, sulfates, metal alkoxides, and any other forms. The solvent of the first coating liquid can be selected depending on the type of the metal salt, and water and alcohols such as butanol can be used. As the solvent, water or a mixed solvent of water and an alcohol is preferable. The total metal concentration in the first coating liquid in which the metal salts are dissolved is not particularly limited, but is preferably in the range of 10 to 150 g/L in association with the thickness of the coating film to be formed by a single coating.

Examples of a method used as the method for applying the first coating liquid onto the substrate for electrode for electrolysis 10 include a dipping method of immersing the substrate for electrode for electrolysis 10 in the first coating liquid, a method of brushing the first coating liquid, a roll method using a sponge roll impregnated with the first coating liquid, and an electrostatic coating method in which the substrate for electrode for electrolysis 10 and the first coating liquid are oppositely charged and spraying is performed. Among these, preferable is the roll method or electrostatic coating method, which has an excellent industrial productivity.

(Drying step and pyrolysis step)

After being applied onto the substrate for electrode for electrolysis 10, the first coating liquid is dried at a temperature of 10 to 90°C and pyrolyzed in a baking furnace heated to 350 to 650°C. Between the drying and pyrolysis, preliminary baking at 100 to 350°C may be performed as required. The drying, preliminary baking, and pyrolysis temperature can be appropriately selected depending on the composition and the solvent type of the first coating liquid. A longer time period of pyrolysis per step is preferable, but from the viewpoint of the productivity of the electrode, 3 to 60 minutes is preferable, 5 to 20 minutes is more preferable.

The cycle of application, drying, and pyrolysis described above is repeated to form a covering (the first layer 20) to a predetermined thickness. After the first layer 20 is formed and then further post-baked for a long period as required can further improve the stability of the first layer 20.

(Formation of second layer)

The second layer 30, which is formed as required, is obtained, for example, by applying a solution containing a palladium compound and a platinum compound or a solution containing a ruthenium compound and a titanium compound (second coating liquid) onto the first layer 20 and then pyrolyzing the coating liquid in the presence of oxygen.

(Formation of first layer of cathode by pyrolysis method)

(Application step)

The first layer 20 is obtained by applying a solution in which metal salts of various combination are dissolved (first coating liquid) onto the substrate for electrode for electrolysis and then pyrolyzing (baking) the coating liquid in the presence of oxygen.
The content of the metal in the first coating liquid is substantially equivalent to that in the first layer 20 after baking.

The metal salts may be chlorides, nitrates, sulfates, metal alkoxides, and any other forms. The solvent of the first coating liquid can be selected depending on the type of the metal salt, and water and alcohols such as butanol can be used. As the solvent, water or a mixed solvent of water and an alcohol is preferable. The total metal concentration in the first coating liquid in which the metal salts are dissolved is, but is not particularly limited to, preferably in the range of 10 to 150 g/L in association with the thickness of the coating film to be formed by a single coating.

Examples of a method used as the method for applying the first coating liquid onto the substrate for electrode for electrolysis 10 include a dipping method of immersing the substrate for electrode for electrolysis 10 in the first coating liquid, a method of brushing the first coating liquid, a roll method using a sponge roll impregnated with the first coating liquid, and an electrostatic coating method in which the substrate for electrode for electrolysis 10 and the first coating liquid are oppositely charged and spraying is performed. Among these, preferable is the roll method or electrostatic coating method, which has an excellent industrial productivity.

(Drying step and pyrolysis step)

After being applied onto the substrate for electrode for electrolysis 10, the first coating liquid is dried at a temperature of 10 to 90°C and pyrolyzed in a baking furnace heated to 350 to 650°C. Between the drying and pyrolysis, preliminary baking at 100 to 350°C may be performed as required. The drying, preliminary baking, and pyrolysis temperature can be appropriately selected depending on the composition and the solvent type of the first coating liquid. A longer time period of pyrolysis per step is preferable, but from the viewpoint of the productivity of the electrode, 3 to 60 minutes is preferable, 5 to 20 minutes is more preferable.

The cycle of application, drying, and pyrolysis described above is repeated to form a covering (the first layer 20) to a predetermined thickness. After the first layer 20 is formed and then further post-baked for a long period as required can further improve the stability of the first layer 20.

(Formation of intermediate layer)

The intermediate layer, which is formed as required, is obtained, for example, by applying a solution containing a palladium compound or platinum compound (second coating liquid) onto the substrate and then pyrolyzing the coating liquid in the presence of oxygen. Alternatively, a nickel oxide intermediate layer may be formed on the substrate surface only by heating the substrate, with no solution applied thereon.

(Formation of first layer of cathode by ion plating)

The first layer 20 can be formed also by ion plating.

An example includes a method in which the substrate is fixed in a chamber and the metal ruthenium target is irradiated with an electron beam. Evaporated metal ruthenium particles are positively charged in plasma in the chamber to deposit on the substrate negatively charged. The plasma atmosphere is argon and oxygen, and ruthenium deposits as ruthenium oxide on the substrate.

(Formation of first layer of cathode by plating)

The first layer 20 can be formed also by a plating method.

As an example, when the substrate is used as the cathode and subjected to electrolytic plating in an electrolyte solution containing nickel and tin, alloy plating of nickel and tin can be formed.

(Formation of first layer of cathode by thermal spraying)

The first layer 20 can be formed also by thermal spraying.

As an example, plasma spraying nickel oxide particles onto the substrate can form a catalyst layer in which metal nickel and nickel oxide are mixed.

(Formation of second layer of cathode)

The second layer 30, which is formed as required, is obtained, for example, by applying a solution containing an iridium compound, a palladium compound, and a platinum compound or a solution containing a ruthenium compound onto the first layer 20 and then pyrolyzing the coating liquid in the presence of oxygen.

The electrode for electrolysis can be integrated with a membrane such as an ion exchange membrane and a microporous membrane and used.

Thus, the electrode can be used as a membrane-integrated electrode. Then, the substituting work for the cathode and anode on renewing the electrode is eliminated, and the work efficiency is markedly improved.

The electrode integrated with the membrane such as an ion exchange membrane and a microporous membrane can make the electrolytic performance comparable to or higher than those of a new electrode.

A suitable example of a membrane for use in the first embodiment is an ion exchange membrane.

Hereinafter, the ion exchange membrane will be described in detail.

[Ion exchange membrane]

The ion exchange membrane has a membrane body containing a hydrocarbon polymer or fluorine-containing polymer having an ion exchange group and a coating layer provided on at least one surface of the membrane body. The coating layer contains inorganic material particles and a binder, and the specific surface area of the coating layer is 0.1 to

10 m$^2$/g. In the ion exchange membrane having such a structure, the influence of gas generated during electrolysis on electrolytic performance is small, and stable electrolytic performance can be exhibited.

The membrane of a perfluorocarbon polymer into which an ion exchange group is introduced described above includes either one of a sulfonic acid layer having an ion exchange group derived from a sulfo group (a group represented by -SO$_3$-, hereinbelow also referred to as a "sulfonic acid group") or a carboxylic acid layer having an ion exchange group derived from a carboxyl group (a group represented by -CO$_2$-, hereinbelow also referred to as a "carboxylic acid group"). From the viewpoint of strength and dimension stability, reinforcement core materials are preferably further included.

The inorganic material particles and binder will be described in detail in the section of description of the coating layer below.

Figure 11 illustrates a cross-sectional schematic view showing one embodiment of an ion exchange membrane.

An ion exchange membrane 1 has a membrane body 1a containing a hydrocarbon polymer or fluorine-containing polymer having an ion exchange group and coating layers 11a and 11b formed on both the surfaces of the membrane body 1a.

In the ion exchange membrane 1, the membrane body 1a comprises a sulfonic acid layer 3 having an ion exchange group derived from a sulfo group (a group represented by -SO$_3$-, hereinbelow also referred to as a "sulfonic acid group") and a carboxylic acid layer 2 having an ion exchange group derived from a carboxyl group (a group represented by -CO$_2$-, hereinbelow also referred to as a "carboxylic acid group"), and the reinforcement core materials 4 enhance the strength and dimension stability. The ion exchange membrane 1, as comprising the sulfonic acid layer 3 and the carboxylic acid layer 2, is suitably used as an anion exchange membrane.

The ion exchange membrane may include either one of the sulfonic acid layer and the carboxylic acid layer. The ion exchange membrane may not be necessarily reinforced by reinforcement core materials, and the arrangement of the reinforcement core materials is not limited to the example in Figure 11.

(Membrane body)

First, the membrane body 1a constituting the ion exchange membrane 1 will be described.

The membrane body 1a should be one that has a function of selectively allowing cations to permeate and comprises a hydrocarbon polymer or a fluorine-containing polymer having an ion exchange group. Its configuration and material are not particularly limited, and preferred ones can be appropriately selected.

The hydrocarbon polymer or fluorine-containing polymer having an ion exchange group in the membrane body 1a can be obtained from a hydrocarbon polymer or fluorine-containing polymer having an ion exchange group precursor capable of forming an ion exchange group by hydrolysis or the like.

Specifically, after a polymer comprising a main chain of a fluorinated hydrocarbon, having, as a pendant side chain, a group convertible into an ion exchange group by hydrolysis or the like (ion exchange group precursor), and being melt-processable (hereinbelow, referred to as the "fluorine-containing polymer (a)" in some cases) is used to prepare a precursor of the membrane body 1a, the membrane body 1a can be obtained by converting the ion exchange group precursor into an ion exchange group.

The fluorine-containing polymer (a) can be produced, for example, by copolymerizing at least one monomer selected from the following first group and at least one monomer selected from the following second group and/or the following third group. The fluorine-containing polymer (a) can be also produced by homopolymerization of one monomer selected from any of the following first group, the following second group, and the following third group.

Examples of the monomers of the first group include vinyl fluoride compounds. Examples of the vinyl fluoride compounds include vinyl fluoride, tetrafluoroethylene, hexafluoropropylene, vinylidene fluoride, trifluoroethylene, chlorotrifluoroethylene, and perfluoro alkyl vinyl ethers. Particularly when the ion exchange membrane is used as a membrane for alkali electrolysis, the vinyl fluoride compound is preferably a perfluoro monomer, and a perfluoro monomer selected from the group consisting of tetrafluoroethylene, hexafluoropropylene, and perfluoro alkyl vinyl ethers is preferable.

Examples of the monomers of the second group include vinyl compounds having a functional group convertible into a carboxylic acid-type ion exchange group (carboxylic acid group). Examples of the vinyl compounds having a functional group convertible into a carboxylic acid group include monomers represented by CF$_2$=CF(OCF$_2$CYF)$_s$-O(CZF)$_t$-COOR, wherein s represents an integer of 0 to 2, t represents an integer of 1 to 12, Y and Z each independently represent F or CF$_3$, and R represents a lower alkyl group (a lower alkyl group is an alkyl group having 1 to 3 carbon atoms, for example).

Among these, compounds represented by CF$_2$=CF(OCF$_2$CYF)$_n$-O(CF$_2$)$_m$-COOR are preferable. Wherein n represents an integer of 0 to 2, m represents an integer of 1 to 4, Y represents F or CF$_3$, and R represents CH$_3$, C$_2$H$_5$, or C$_3$H$_7$.

When the ion exchange membrane is used as a cation exchange membrane for alkali electrolysis, a perfluoro compound is preferably at least used as the monomer, but the alkyl group (see the above R) of the ester group is lost from the polymer at the time of hydrolysis, and therefore the alkyl group (R) need not be a perfluoroalkyl group in which all hydrogen atoms are replaced by fluorine atoms.

Of the above monomers, the monomers represented below are more preferable as the monomers of the second group:

$$CF_2=CFOCF_2-CF(CF_3)OCF_2COOCH_3,$$

$$CF_2=CFOCF_2CF(CF_3)O(CF_2)_2COOCH_3,$$

$$CF_2=CF[OCF_2-CF(CF_3)]_2O(CF_2)_2COOCH_3,$$

$$CF_2=CFOCF_2CF(CF_3)O(CF_2)_3COOCH_3,$$

$$CF_2=CFO(CF_2)_2COOCH_3,$$

and

$$CF_2=CFO(CF_2)_3COOCH_3.$$

Examples of the monomers of the third group include vinyl compounds having a functional group convertible into a sulfone-type ion exchange group (sulfonic acid group). As the vinyl compounds having a functional group convertible into a sulfonic acid group, for example, monomers represented by $CF_2=CFO-X-CF_2-SO_2F$ are preferable, wherein X represents a perfluoroalkylene group. Specific examples of these include the monomers represented below:

$$CF_2=CFOCF_2CF_2SO_2F,$$

$$CF_2=CFOCF_2CF(CF_3)OCF_2CF_2SO_2F,$$

$$CF_2=CFOCF_2CF(CF_3)OCF_2CF_2CF_2SO_2F,$$

$$CF_2=CF(CF_2)_2SO_2F,$$

$$CF_2=CFO[CF_2CF(CF_3)O]_2CF_2CF_2SO_2F,$$

and

$$CF_2=CFOCF_2CF(CF_2OCF_3)OCF_2CF_2SO_2F.$$

Among these, $CF_2=CFOCF_2CF(CF_3)OCF_2CF_2CF_2SO_2F$ and $CF_2=CFOCF_2CF(CF_3)OCF_2CF_2SO_2F$ are more preferable.

The copolymer obtained from these monomers can be produced by a polymerization method developed for homopolymerization and copolymerization of ethylene fluoride, particularly a general polymerization method used for tetrafluoroethylene. For example, in a nonaqueous method, a polymerization reaction can be performed in the presence of a radical polymerization initiator such as a perfluorocarbon peroxide or an azo compound under the conditions of a temperature of 0 to 200°C and a pressure of 0.1 to 20 MPa using an inert solvent such as a perfluorohydrocarbon or a chlorofluorocarbon.

In the above copolymerization, the type of combination of the above monomers and their proportion are not particularly limited and are selected and determined depending on the type and amount of the functional group desired to be imparted to the fluorine-containing polymer to be obtained. For example, when a fluorine-containing polymer containing only a carboxylic acid group is formed, at least one monomer should be selected from each of the first group and the second group described above and copolymerized. In addition, when a fluorine-containing polymer containing only a sulfonic acid group is formed, at least one monomer should be selected from each of the first group and the third group and copolymerized. Further, when a fluorine-containing polymer having a carboxylic acid group and a sulfonic acid group is formed, at least one monomer should be selected from each of the first group, the second group, and the third group described above and copolymerized. In this case, the target fluorine-containing polymer can be obtained also by separately preparing a copolymer comprising the monomers of the first group and the second group described above and a copolymer comprising the monomers of the first group and the third group described above, and then mixing the copolymers. The mixing proportion of the monomers is not particularly limited, and when the amount of the functional groups per unit polymer is increased, the proportion of the monomers selected from the second group and the third group described above should be increased.

The total ion exchange capacity of the fluorine-containing copolymer is not particularly limited, but is preferably 0.5 to 2.0 mg equivalent/g, more preferably 0.6 to 1.5 mg equivalent/g. The total ion exchange capacity herein refers to the equivalent of the exchange group per unit mass of the dry resin and can be measured by neutralization titration or the like.

In the membrane body 1a of the ion exchange membrane 1, a sulfonic acid layer 3 containing a fluorine-containing polymer having a sulfonic acid group and a carboxylic acid layer 2 containing a fluorine-containing polymer having a carboxylic acid group are laminated. By providing the membrane body 1a having such a layer configuration, selective permeability for cations such as sodium ions can be further improved.

The ion exchange membrane 1 is arranged in an electrolyzer such that, usually, the sulfonic acid layer 3 is located on the anode side of the electrolyzer and the carboxylic acid layer 2 is located on the cathode side of the electrolyzer.

The sulfonic acid layer 3 is preferably constituted by a material having low electrical resistance and has a membrane thickness larger than that of the carboxylic acid layer 2 from the viewpoint of membrane strength. The membrane thickness of the sulfonic acid layer 3 is preferably 2 to 25 times, more preferably 3 to 15 times that of the carboxylic acid layer 2.

The carboxylic acid layer 2 preferably has high anion exclusion properties even if it has a small membrane thickness. The anion exclusion properties here refer to the property of trying to hinder intrusion and permeation of anions into and through the ion exchange membrane 1. In order to raise the anion exclusion properties, it is effective to dispose a carboxylic acid layer having a small ion exchange capacity to the sulfonic acid layer.

As the fluorine-containing polymer for use in the sulfonic acid layer 3, preferable is a polymer obtained by using $CF_2=CFOCF_2CF(CF_3)OCF_2CF_2SO_2F$ as the monomer of the third group.

As the fluorine-containing polymer for use in the carboxylic acid layer 2, preferable is a polymer obtained by using $CF_2=CFOCF_2CF(CF_2)O(CF_2)_2COOCH_3$ as the monomer of the second group.

(Coating layer)

The ion exchange membrane has a coating layer on at least one surface of the membrane body. As shown in Figure 11, in the ion exchange membrane 1, coating layers 11a and 11b are formed on both the surfaces of the membrane body 1a.

The coating layers contain inorganic material particles and a binder.

The average particle size of the inorganic material particles is preferably 0.90 $\mu$m or more. When the average particle size of the inorganic material particles is 0.90 $\mu$m or more, durability to impurities is extremely improved, in addition to attachment of gas. That is, enlarging the average particle size of the inorganic material particles as well as satisfying the value of the specific surface area mentioned above can achieve a particularly marked effect. Irregular inorganic material particles are preferable because the average particle size and specific surface area as above are satisfied. Inorganic material particles obtained by melting and inorganic material particles obtained by grinding raw ore can be used. Inorganic material particles obtained by grinding raw ore can preferably be used.

The average particle size of the inorganic material particles can be 2 $\mu$m or less. When the average particle size of the inorganic material particles is 2 $\mu$m or less, it is possible to prevent damage of the membrane due to the inorganic material particles. The average particle size of the inorganic material particle is more preferably 0.90 to 1.2 $\mu$m.

Here, the average particle size can be measured by a particle size analyzer ("SALD2200", SHIMADZU CORPORATION).

The inorganic material particles preferably have irregular shapes. Such shapes improve resistance to impurities further. The inorganic material particles preferably have a broad particle size distribution.

The inorganic material particles preferably contain at least one inorganic material selected from the group consisting of oxides of Group IV elements in the Periodic Table, nitrides of Group IV elements in the Periodic Table, and carbides of Group IV elements in the Periodic Table. From the viewpoint of durability, zirconium oxide particle is more preferable.

The inorganic material particles are preferably inorganic material particles produced by grinding the raw ore of the inorganic material particles or inorganic material particles, as spherical particles having a uniform diameter, obtained by melt-purifying the raw ore of the inorganic material particles.

Examples of means for grinding raw ore include, but are not particularly limited to, ball mills, bead mills, colloid mills, conical mills, disc mills, edge mills, grain mills, hammer mills, pellet mills, VSI mills, Wiley mills, roller mills, and jet mills. After grinding, the particles are preferably washed. As the washing method, the particles are preferably treated with acid. This treatment can reduce impurities such as iron attached to the surface of the inorganic material particles.

The coating layer preferably contains a binder. The binder is a component that forms the coating layers by retaining the inorganic material particles on the surface of the ion exchange membrane. The binder preferably contains a fluorine-containing polymer from the viewpoint of durability to the electrolyte solution and products from electrolysis.

As the binder, a fluorine-containing polymer having a carboxylic acid group or sulfonic acid group is more preferable, from the viewpoint of durability to the electrolyte solution and products from electrolysis and adhesion to the surface of the ion exchange membrane. When a coating layer is provided on a layer containing a fluorine-containing polymer having a sulfonic acid group (sulfonic acid layer), a fluorine-containing polymer having a sulfonic acid group is further preferably used as the binder of the coating layer. Alternatively, when a coating layer is provided on a layer containing a fluorine-containing polymer having a carboxylic acid group (carboxylic acid layer), a fluorine-containing polymer having a carboxylic acid group is further preferably used as the binder of the coating layer.

In the coating layer, the content of the inorganic material particles is preferably 40 to 90% by mass, more preferably 50 to 90% by mass. The content of the binder is preferably 10 to 60% by mass, more preferably 10 to 50% by mass.

The distribution density of the coating layer in the ion exchange membrane is preferably 0.05 to 2 mg per 1 $cm^2$. When the ion exchange membrane has asperities on the surface thereof, the distribution density of the coating layer is preferably 0.5 to 2 mg per 1 $cm^2$.

As the method for forming the coating layer, which is not particularly limited, a known method can be used. An example is a method including applying by a spray or the like a coating liquid obtained by dispersing inorganic material particles in a solution containing a binder.

(Reinforcement core materials)

The ion exchange membrane preferably has reinforcement core materials arranged inside the membrane body.

The reinforcement core materials are members that enhance the strength and dimensional stability of the ion exchange membrane. By arranging the reinforcement core materials inside the membrane body, particularly expansion and contraction of the ion exchange membrane can be controlled in the desired range. Such an ion exchange membrane does not expand or contract more than necessary during electrolysis and the like and can maintain excellent dimensional stability for a long term.

The configuration of the reinforcement core materials is not particularly limited, and, for example, the reinforcement core materials may be formed by spinning yarns referred to as reinforcement yarns. The reinforcement yarns here refer to yarns that are members constituting the reinforcement core materials, can provide the desired dimensional stability and mechanical strength to the ion exchange membrane, and can be stably present in the ion exchange membrane. By using the reinforcement core materials obtained by spinning such reinforcement yarns, better dimensional stability and mechanical strength can be provided to the ion exchange membrane.

The material of the reinforcement core materials and the reinforcement yarns used for these is not particularly limited but is preferably a material resistant to acids, alkalis, etc., and a fiber comprising a fluorine-containing polymer is preferable because long-term heat resistance and chemical resistance are required.

Examples of the fluorine-containing polymer to be used in the reinforcement core materials include polytetrafluoroethylene (PTFE), tetrafluoroethylene-perfluoroalkyl vinyl ether copolymers (PFA), tetrafluoroethylene-ethylene copolymers (ETFE), tetrafluoroethylene-hexafluoropropylene copolymers, trifluorochloroethylene-ethylene copolymers, and vinylidene fluoride polymers (PVDF). Among these, fibers comprising polytetrafluoroethylene are preferably used from the viewpoint of heat resistance and chemical resistance.

The yarn diameter of the reinforcement yarns used for the reinforcement core materials is not particularly limited, but is preferably 20 to 300 deniers, more preferably 50 to 250 deniers. The weave density (fabric count per unit length) is preferably 5 to 50/inch. The form of the reinforcement core materials is not particularly limited, for example, a woven fabric, a nonwoven fabric, and a knitted fabric are used, but is preferably in the form of a woven fabric. The thickness of the woven fabric to be used is preferably 30 to 250 $\mu$m, more preferably 30 to 150 $\mu$m.

As the woven fabric or knitted fabric, monofilaments, multifilaments, or yarns thereof, a slit yarn, or the like can be used, and various types of weaving methods such as a plain weave, a leno weave, a knit weave, a cord weave, and a seersucker can be used.

The weave and arrangement of the reinforcement core materials in the membrane body are not particularly limited, and preferred arrangement can be appropriately provided considering the size and form of the ion exchange membrane, physical properties desired for the ion exchange membrane, the use environment, and the like.

For example, the reinforcement core materials may be arranged along one predetermined direction of the membrane body, but from the viewpoint of dimensional stability, it is preferred that the reinforcement core materials be arranged along a predetermined first direction, and other reinforcement core materials be arranged along a second direction substantially perpendicular to the first direction. By arranging the plurality of reinforcement core materials substantially orthogonally to the longitudinal direction inside the membrane body, it is possible to impart better dimensional stability and mechanical strength in many directions. For example, arrangement in which the reinforcement core materials arranged along the longitudinal direction (warp yarns) and the reinforcement core materials arranged along the transverse direction (weft yarns) are woven on the surface side of the membrane body is preferred. The arrangement is more preferably in the form of plain weave driven and woven by allowing warps and wefts to run over and under each other alternately, leno weave in which two warps are woven into wefts while twisted, basket weave driven and woven by inserting, into two or more parallelly-arranged warps, wefts of the same number, or the like, from the viewpoint of dimension stability, mechanical strength and easy-production.

It is preferred that particularly, the reinforcement core materials be arranged along both directions, the MD (Machine Direction) and TD (Transverse Direction) of the ion exchange membrane. In other words, the reinforcement core materials are preferably plain-woven in the MD and

TD.

Here, the MD refers to the direction in which the membrane body and various core materials (for example, the reinforcement core materials, reinforcement yarns, and sacrifice yarns described later) are conveyed in an ion exchange membrane production step described later (flow direction), and the TD refers to the direction substantially perpendicular to the MD. Yarns woven along the MD are referred to as MD yarns, and yarns woven along the TD are referred to as TD yarns. Usually, the ion exchange membrane used for electrolysis is rectangular, and in many cases, the longitudinal direction is the MD, and the width direction is the TD. By weaving the reinforcement core materials that are MD yarns and the reinforcement core materials that are TD yarns, it is possible to impart better dimensional stability and mechanical strength in many directions.

The arrangement interval of the reinforcement core materials is not particularly limited, and preferred arrangement can be appropriately provided considering physical properties desired for the ion exchange membrane, the use environment, and the like.

The aperture ratio for the reinforcement core materials is not particularly limited, but is preferably 30% or more, more preferably 50% or more and 90% or less. The aperture ratio is preferably 30% or more from the viewpoint of the electrochemical properties of the ion exchange membrane, and preferably 90% or less from the viewpoint of the mechanical strength of the ion exchange membrane.

The aperture ratio for the reinforcement core materials herein refers to a ratio of a total area of a surface through which substances such as ions (an electrolyte solution and cations contained therein (e.g., sodium ions)) can pass (B) to the area of either one surface of the membrane body (A) (B/A). The total area of the surface through which substances such as ions can pass (B) can refer to the total areas of regions in which in the ion exchange membrane, cations, an electrolytic solution, and the like are not blocked by the reinforcement core materials and the like contained in the ion exchange membrane.

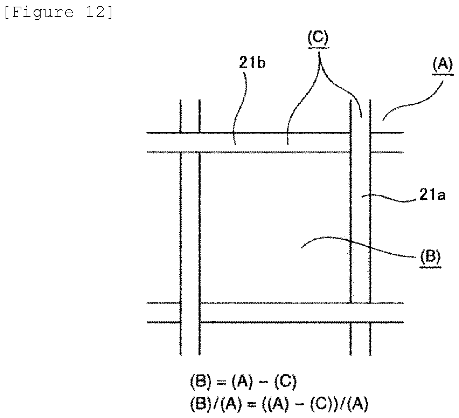

Figure 12 illustrates a schematic view for explaining the aperture ratio of reinforcement core materials constituting the ion exchange membrane.

Figure 12, in which a portion of the ion exchange membrane is enlarged, shows only the arrangement of the reinforcement core materials 21a and 21b in the regions, omitting illustration of the other members.

By subtracting the total area of the reinforcement core materials (C) from the area of the region surrounded by the reinforcement core materials 21a arranged along the longitudinal direction and the reinforcement core materials 21b arranged along the transverse direction, the region including the area of the reinforcement core materials (A), the total area of regions through which substances such as ions can pass (B) in the area of the above-described region (A) can be obtained. That is, the aperture ratio can be determined by the following formula (I) :

$$\text{Aperture ratio} = (B)/(A) = ((A)-(C))/(A) \ ... \ (I)$$

Among the reinforcement core materials, a particularly preferred form is tape yarns or highly oriented monofilaments comprising PTFE from the viewpoint of chemical resistance and heat resistance. Specifically, reinforcement core materials forming a plain weave in which 50 to 300 denier tape yarns obtained by slitting a high strength porous sheet comprising PTFE into a tape form, or 50 to 300 denier highly oriented monofilaments comprising PTFE are used and which has a weave density of 10 to 50 yarns or monofilaments/inch and has a thickness in the range of 50 to 100 $\mu$m are more preferred. The aperture ratio of an ion exchange membrane comprising such reinforcement core materials is further preferably 60% or more.

Examples of the shape of the reinforcement yarns include round yarns and tape yarns.

(Continuous holes)

The ion exchange membrane preferably has continuous holes inside the membrane body.

The continuous holes refer to holes that can be flow paths for ions generated in electrolysis and an electrolyte solution. The continuous holes, which are tubular holes formed inside the membrane body, are formed by dissolution of sacrifice core materials (or sacrifice yarns) described below. The shape, diameter, or the like of the continuous holes can be controlled by selecting the shape or diameter of the sacrifice core materials (sacrifice yarns).

Forming the continuous holes inside the ion exchange membrane can ensure the mobility of an electrolyte solution on electrolysis. The shape of the continuous holes is not particularly limited, but may be the shape of sacrifice core materials to be used for formation of the continuous holes in accordance with the production method described below.

The continuous holes are preferably formed so as to alternately pass on the anode side (sulfonic acid layer side) and the cathode side (carboxylic acid layer side) of the reinforcement core materials. With such a structure, in a portion in which continuous holes are formed on the cathode side of the reinforcement core materials, ions (e.g., sodium ions) transported through the electrolyte solution with which the continuous holes are filled can flow also on the cathode side of the reinforcement core materials. As a result, the flow of cations is not interrupted, and thus, it is possible to further reduce the electrical resistance of the ion exchange membrane.

The continuous holes may be formed along only one predetermined direction of the membrane body constituting the ion exchange membrane, but are preferably formed in both the longitudinal direction and the transverse direction of the membrane body from the viewpoint of exhibiting more stable electrolytic performance.

[Method for producing ion exchange membrane]

A suitable example of a method for producing an ion exchange membrane includes a method including the following steps (1) to (6):

Step (1): the step of producing a fluorine-containing polymer having an ion exchange group or an ion exchange group precursor capable of forming an ion exchange group by hydrolysis,
Step (2): the step of weaving at least a plurality of reinforcement core materials, as required, and sacrifice yarns having a property of dissolving in an acid or an alkali, and forming continuous holes, to obtain a reinforcing material in which the sacrifice yarns are arranged between the reinforcement core materials adjacent to each other,
Step (3): the step of forming into a film the above fluorine-containing polymer having an ion exchange group or an ion exchange group precursor capable of forming an ion exchange group by hydrolysis,
Step (4): the step of embedding the above reinforcing materials, as required, in the above film to obtain a membrane body inside which the reinforcing materials are arranged,
Step (5): the step of hydrolyzing the membrane body obtained in the step (4) (hydrolysis step), and
Step (6): the step of providing a coating layer on the membrane body obtained in the step (5) (application step) .

Hereinafter, each of the steps will be described in detail.

Step (1): Step of producing fluorine-containing polymer

In the step (1), raw material monomers described in the first group to the third group above are used to produce a fluorine-containing polymer. In order to control the ion exchange capacity of the fluorine-containing polymer, the mixture ratio of the raw material monomers should be adjusted in the production of the fluorine-containing polymer forming the layers.

Step (2): Step of producing reinforcing materials

The reinforcing material is a woven fabric obtained by weaving reinforcement yarns or the like. The reinforcing material is embedded in the membrane to thereby form reinforcement core materials. When an ion exchange membrane having continuous holes is formed, sacrifice yarns are additionally woven into the reinforcing material. The amount of the sacrifice yarns contained in this case is preferably 10 to 80% by mass, more preferably 30 to 70% by mass based on the entire reinforcing material. Weaving the sacrifice yarns can also prevent yarn slippage of the reinforcement core materials.

As the sacrifice yarns, which have solubility in the membrane production step or under an electrolysis environment, rayon, polyethylene terephthalate (PET), cellulose, polyamide, and the like are used. Monofilaments or multifilaments having a thickness of 20 to 50 deniers and comprising polyvinyl alcohol and the like are also preferred.

In the step (2), the aperture ratio, arrangement of the continuous holes, and the like can be controlled by adjusting the arrangement of the reinforcement core materials and the sacrifice yarns.

Step (3): Step of film formation

In the step (3), the fluorine-containing polymer obtained in the step (1) is formed into a film by using an extruder. The film may be a single-layer configuration, a two-layer configuration of a sulfonic acid layer and a carboxylic acid layer as mentioned above, or a multilayer configuration of three layers or more.

Examples of the film forming method include the following:

a method in which a fluorine-containing polymer having a carboxylic acid group and a fluorine-containing polymer having a sulfonic acid group are separately formed into films; and

a method in which fluorine-containing polymer having a carboxylic acid group and a fluorine-containing polymer having a sulfonic acid group are coextruded into a composite film.

The number of each film may be more than one. Coextrusion of different films is preferred because of its contribution to an increase in the adhesive strength in the interface.

Step (4): Step of obtaining membrane body

In the step (4), the reinforcing material obtained in the step (2) is embedded in the film obtained in the step (3) to provide a membrane body including the reinforcing material therein.

Preferable examples of the method for forming a membrane body include (i) a method in which a fluorine-containing polymer having a carboxylic acid group precursor (e.g., carboxylate functional group) (hereinafter, a layer comprising the same is referred to as the first layer) located on the cathode side and a fluorine-containing polymer having a sulfonic acid group precursor (e.g., sulfonyl fluoride functional group) (hereinafter, a layer comprising the same is referred to as the second layer) are formed into a film by a coextrusion method, and, by using a heat source and a vacuum source as required, a reinforcing material and the second layer/first layer composite film are laminated in this order on breathable heat-resistant release paper on a flat plate or drum having many pores on the surface thereof and integrated at a temperature at which each polymer melts while air among each of the layers was evacuated by reduced pressure; and (ii) a method in which, in addition to the second layer/first layer composite film, a fluorine-containing polymer having a sulfonic acid group precursor is singly formed into a film (the third layer) in advance, and, by using a heat source and a vacuum source as required, the third layer film, the reinforcement core materials, and the composite film comprising the second layer/first layer are laminated in this order on breathable heat-resistant release paper on a flat plate or drum having many pores on the surface thereof and integrated at a temperature at which each polymer melts while air among each of the layers was evacuated by reduced pressure.

Coextrusion of the first layer and the second layer herein contributes to an increase in the adhesive strength at the interface.

The method including integration under a reduced pressure is characterized by making the third layer on the reinforcing material thicker than that of a pressure-application press method. Further, since the reinforcing material is fixed on the inner surface of the membrane body, the method has a property of sufficiently retaining the mechanical strength of the ion exchange membrane.

The variations of lamination described here are exemplary, and coextrusion can be performed after a preferred lamination pattern (for example, the combination of layers) is appropriately selected considering the desired layer configuration of the membrane body and physical properties, and the like.

For the purpose of further improving the electric properties of the ion exchange membrane, it is also possible to additionally interpose a fourth layer comprising a fluorine-containing polymer having both a carboxylic acid group precursor and a sulfonic acid group precursor between the first layer and the second layer or to use a fourth layer comprising a fluorine-containing polymer having both a carboxylic acid group precursor and a sulfonic acid group precursor instead of the second layer.

The method for forming the fourth layer may be a method in which a fluorine-containing polymer having a carboxylic acid group precursor and a fluorine-containing polymer having a sulfonic acid group precursor are separately produced and then mixed or may be a method in which a monomer having a carboxylic acid group precursor and a monomer having a sulfonic acid group precursor are copolymerized.

When the fourth layer is used as a component of the ion exchange membrane, a coextruded film of the first layer and the fourth layer is formed, in addition to this, the third layer and the second layer are separately formed into films, and lamination may be performed by the method mentioned above. Alternatively, the three layers of the first layer/fourth layer/second layer may be simultaneously formed into a film by coextrusion.

In this case, the direction in which the extruded film flows is the MD. As mentioned above, it is possible to form a membrane body containing a fluorine-containing polymer having an ion exchange group on a reinforcing material.

Additionally, the ion exchange membrane preferably has protruded portions composed of the fluorine-containing polymer having a sulfonic acid group, that is, projections, on the surface side composed of the sulfonic acid layer. As a method for forming such projections, which is not particularly limited, a known method also can be employed including forming projections on a resin surface. A specific example of the method is a method of embossing the surface of the membrane body. For example, the above projections can be formed by using release paper embossed in advance when the composite film mentioned above, reinforcing material, and the like are integrated. In the case where projections are formed by embossing, the height and arrangement density of the projections can be controlled by controlling the emboss shape to be transferred (shape of the release paper).

(5) Hydrolysis step

In the step (5), a step of hydrolyzing the membrane body obtained in the step (4) to convert the ion exchange group precursor into an ion exchange group (hydrolysis step) is performed.

In the step (5), it is also possible to form dissolution holes in the membrane body by dissolving and removing the sacrifice yarns included in the membrane body with acid or alkali. The sacrifice yarns may remain in the continuous holes without being completely dissolved and removed. The sacrifice yarns remaining in the continuous holes may be dissolved and removed by the electrolyte solution when the ion exchange membrane is subjected to electrolysis.

The sacrifice yarn has solubility in acid or alkali in the step of producing an ion exchange membrane or under an electrolysis environment. The sacrifice yarns are eluted out to thereby form continuous holes at corresponding sites.

The step (5) can be performed by immersing the membrane body obtained in the step (4) in a hydrolysis solution containing acid or alkali. An example of the hydrolysis solution that can be used is a mixed solution containing KOH and dimethyl sulfoxide (DMSO).

The mixed solution preferably contains KOH of 2.5 to 4.0 N and DMSO of 25 to 35% by mass.

The temperature for hydrolysis is preferably 70 to 100°C. The higher the temperature, the larger can be the apparent thickness. The temperature is more preferably 75 to 100°C.

The time for hydrolysis is preferably 10 to 120 minutes. The longer the time, the larger can be the apparent thickness. The time is more preferably 20 to 120 minutes.

The step of forming continuous holes by eluting the sacrifice yarn will be now described in more detail.

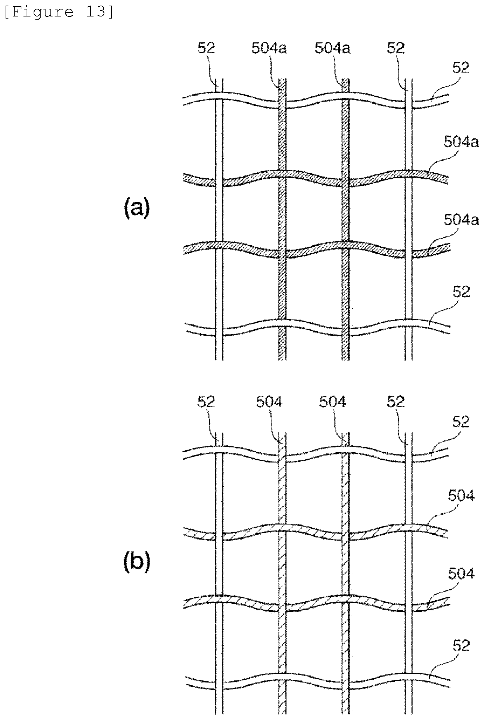

Figures 13(A) and (B) are schematic views for explaining a method for forming the continuous holes of the ion exchange membrane.

Figures 13(A) and (B) show reinforcement yarns 52, sacrifice yarns 504a, and continuous holes 504 formed by the sacrifice yarns 504a only, omitting illustration of the other members such as a membrane body.

First, the reinforcement yarns 52 that are to constitute reinforcement core materials in the ion exchange membrane and the sacrifice yarns 504a for forming the continuous holes 504 in the ion exchange membrane are used as interwoven reinforcing materials. Then, in the step (5), the sacrifice yarns 504a are eluted to form the continuous holes 504.

The above method is simple because the method for interweaving the reinforcement yarns 52 and the sacrifice yarns 504a may be adjusted depending on the arrangement of the reinforcement core materials and continuous holes in the membrane body of the ion exchange membrane.

Figure 13(A) exemplifies the plain-woven reinforcing material in which the reinforcement yarns 52 and sacrifice yarns 504a are interwoven along both the longitudinal direction and the lateral direction in the paper, and the arrangement of the reinforcement yarns 52 and the sacrifice yarns 504a in the reinforcing material may be varied as required.

(6) Application step

In the step (6), a coating layer can be formed by preparing a coating liquid containing inorganic material particles obtained by grinding raw ore or melting raw ore and a binder, applying the coating liquid onto the surface of the ion exchange membrane obtained in the step (5), and drying the coating liquid.

A preferable binder is a binder obtained by hydrolyzing a fluorine-containing polymer having an ion exchange group precursor with an aqueous solution containing dimethyl sulfoxide (DMSO) and potassium hydroxide (KOH) and then immersing the polymer in hydrochloric acid to replace the counterion of the ion exchange group by H+ (e.g., a fluorine-containing polymer having a carboxyl group or sulfo group). Thereby, the polymer is more likely to dissolve in water or ethanol mentioned below, which is preferable.

This binder is dissolved in a mixed solution of water and ethanol. The volume ratio between water and ethanol is preferably 10:1 to 1:10, more preferably 5:1 to 1:5, further preferably 2:1 to 1:2. The inorganic material particles are dispersed with a ball mill into the dissolution liquid thus obtained to thereby provide a coating liquid. In this case, it is also possible to adjust the average particle size and the like of the particles by adjusting the time and rotation speed during the dispersion. The preferable amount of the inorganic material particles and the binder to be blended is as mentioned above.

The concentration of the inorganic material particles and the binder in the coating liquid is not particularly limited, but a thin coating liquid is preferable. This enables uniform application onto the surface of the ion exchange membrane.

Additionally, a surfactant may be added to the dispersion when the inorganic material particles are dispersed. As the surfactant, nonionic surfactants are preferable, and examples thereof include HS-210, NS-210, P-210, and E-212 manufactured by NOF CORPORATION.

The coating liquid obtained is applied onto the surface of the ion exchange membrane by spray application or roll coating to thereby provide an ion exchange membrane.

[Microporous membrane]

Another suitable example of a membrane for use in the first embodiment is a microporous membrane.

The microporous membrane is not particularly limited as long as the membrane can be formed into a laminate with the electrode for electrolysis, as mentioned above. Various microporous membranes may be employed.

The porosity of the microporous membrane is not particularly limited, but can be 20 to 90, for example, and is preferably 30 to 85. The above porosity can be calculated by the following formula:

Porosity = (1 - (the weight of the membrane in a dried state) / (the weight calculated from the volume calculated from the thickness, width, and length of the membrane and the density of the membrane material)) $\times$ 100

The average pore size of the microporous membrane is not particularly limited, and can be 0.01 $\mu$m to 10 $\mu$m, for example, preferably 0.05 $\mu$m to 5 $\mu$m. With respect to the average pore size, for example, the membrane is cut vertically to the thickness direction, and the section is observed with an FE-SEM. The average pore size can be obtained by measuring the diameter of about 100 pores observed and averaging the measurements.

The thickness of the microporous membrane is not particularly limited, and can be 10 $\mu$m to 1000 $\mu$m, for example, preferably 50 $\mu$m to 600 $\mu$m. The above thickness can be measured by using a micrometer (manufactured by Mitutoyo Corporation) or the like, for example.

Specific examples of the microporous membrane as mentioned above include Zirfon Perl UTP 500 manufactured by Agfa (also referred to as a Zirfon membrane in the first embodiment) and those described in International Publication No. WO 2013-183584 and International Publication No. WO 2016-203701.

In the first embodiment, the membrane preferably comprises a first ion exchange resin layer and a second ion exchange resin layer having an EW (ion exchange capacity) different from that of the first ion exchange resin layer. Additionally, the membrane preferably comprises a first ion exchange resin layer and a second ion exchange resin layer having a functional group different from that of the first ion exchange resin layer. The ion exchange capacity can be adjusted by the functional group to be introduced, and functional groups that may be introduced are as mentioned above.

The reason why the laminate obtained by the jig for laminate production in the first embodiment exhibits excellent electrolytic performance is presumed as follows.

When the membrane and the electrode for electrolysis firmly adhere to each other by a method such as thermal compression, which is a conventional technique, the electrode for electrolysis sinks into the membrane to thereby physically adhere thereto. This adhesion portion inhibits sodium ions from migrating in the membrane to thereby markedly raise the voltage.

Meanwhile, inhibition of migration of sodium ions in the membrane, which has been a problem in the conventional art, is eliminated by allowing the electrode for electrolysis to abut with a moderate adhesive force on the membrane or feed conductor, as in the first embodiment.

According to the foregoing, when the membrane or feed conductor abuts on the electrode for electrolysis with a moderate adhesive force, the membrane or feed conductor and the electrode for electrolysis, despite of being an integrated piece, can develop excellent electrolytic performance.

[Method for producing a laminate]

The method for producing a laminate according to the first embodiment is a method in which a roll for electrode around which an elongate electrode for electrolysis is wound and a roll for membrane around which an elongate membrane is wound are used to obtain a laminate of the electrode for electrolysis and the membrane rolled out from the roll for electrode and the roll for membrane respectively. The method comprises a step of rolling out each of the wound electrode for electrolysis and membrane in a state where the relative positions of the roll for electrode and the roll for membrane are fixed and a step of supplying moisture to the electrode for electrolysis rolled out from the roll for electrode. The method for producing a laminate according to the first embodiment, as configured as described above, can produce a laminate that can improve the work efficiency during electrode and membrane renewing in an electrolyzer. That is, even when a member of a relatively large size is required so as to be adapted to an electrolytic cell in an actual commercially-available size (e.g., 1.5 m in length, 3 m in width), a desired laminate can be easily obtained only by a simple operation in which the roll for electrode and roll for membrane described above are placed and fixed at desired positions and the electrode for electrolysis and the membrane, while rolled out from each roll, are integrated by means of moisture supplied from the water retention section.

The method for producing a laminate according to the first embodiment is preferably conducted by the jig for laminate production of the first embodiment.

[Wound body]

The laminate in the first embodiment may be in a form of a wound body. Downsizing the laminate by winding can further improve the handling property.

[Electrolyzer]

The laminate in the first embodiment is assembled in an electrolyzer.

Hereinafter, the case of performing common salt electrolysis by using an ion exchange membrane as the membrane is taken as an example, and one embodiment of the electrolyzer will be described in detail.

The electrolyzer of the first embodiment is not limited to a case of conducting common salt electrolysis and also can be used in water electrolysis, fuel cells, and the like.

[Electrolytic cell]

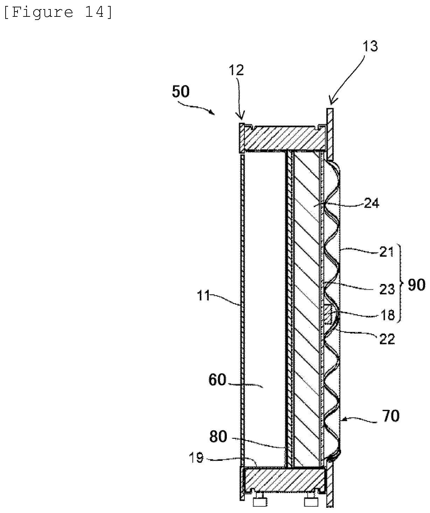

Figure 14 illustrates a cross-sectional view of an electrolytic cell 50.

The electrolytic cell 50 comprises an anode chamber 60, a cathode chamber 70, a partition wall 80 placed between the anode chamber 60 and the cathode chamber 70, an anode 11 placed in the anode chamber 60, and a cathode 21 placed in the cathode chamber 70.

As required, the electrolytic cell 50 has a substrate 18a and a reverse current absorbing layer 18b formed on the substrate 18a and may comprise a reverse current absorber 18 placed in the cathode chamber.

The anode 11 and the cathode 21 belonging to the electrolytic cell 50 are electrically connected to each other. In other words, the electrolytic cell 50 comprises the following cathode structure.

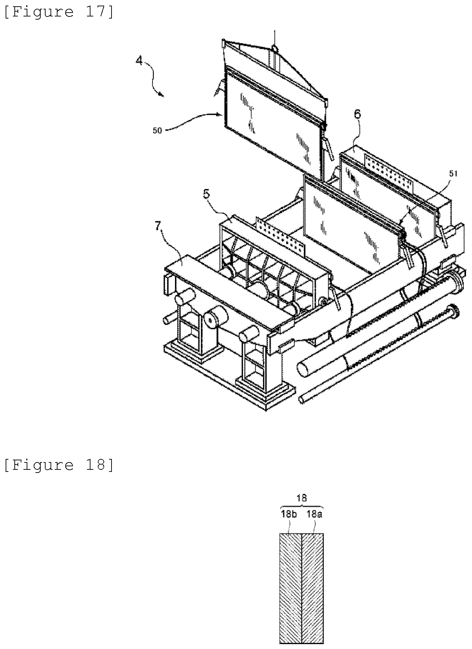

The cathode structure 90 comprises the cathode chamber 70, the cathode 21 placed in the cathode chamber 70, and the reverse current absorber 18 placed in the cathode chamber 70, the reverse current absorber 18 has the substrate 18a and the reverse current absorbing layer 18b formed on the substrate 18a, as shown in Figure 18, and the cathode 21 and the reverse current absorbing layer 18b are electrically connected.

The cathode chamber 70 further has a collector 23, a support 24 supporting the collector, and a metal elastic body 22.

The metal elastic body 22 is placed between the collector 23 and the cathode 21.

The support 24 is placed between the collector 23 and the partition wall 80.

The collector 23 is electrically connected to the cathode 21 via the metal elastic body 22.

The partition wall 80 is electrically connected to the collector 23 via the support 24. Accordingly, the partition wall 80, the support 24, the collector 23, the metal elastic body 22, and the cathode 21 are electrically connected.

The cathode 21 and the reverse current absorbing layer 18b are electrically connected.

The cathode 21 and the reverse current absorbing layer 18b may be directly connected or may be indirectly connected via the collector, the support, the metal elastic body, the partition wall, or the like.

The entire surface of the cathode 21 is preferably covered with a catalyst layer for reduction reaction.

The form of electrical connection may be a form in which the partition wall 80 and the support 24, the support 24 and the collector 23, and the collector 23 and the metal elastic body 22 are each directly attached and the cathode 21 is laminated on the metal elastic body 22. Examples of a method for directly attaching these constituent members to one another include welding and the like. Alternatively, the reverse current absorber 18, the cathode 21, and the collector 23 may be collectively referred to as a cathode structure 90.

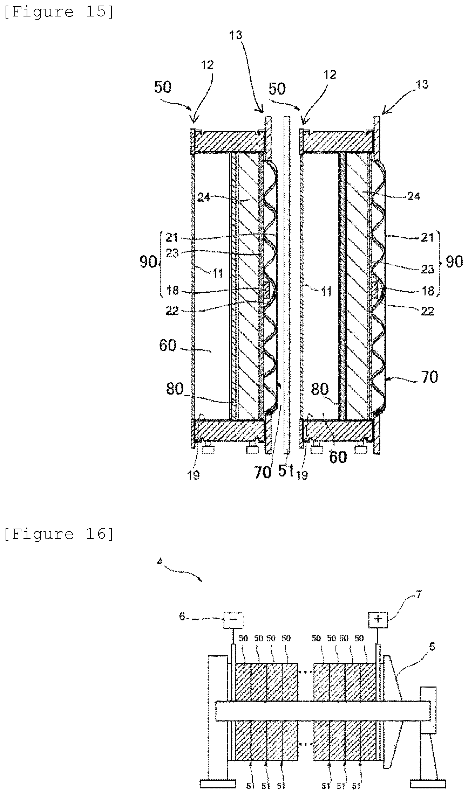

Figure 15 illustrates a cross-sectional view of two electrolytic cells 50 that are adjacent in the electrolyzer 4.

Figure 16 shows an electrolyzer 4.

Figure 17 shows a step of assembling the electrolyzer 4.

As shown in Figure 15, an electrolytic cell 50, a cation exchange membrane 51, and an electrolytic cell 50 are arranged in series in the order mentioned.

An ion exchange membrane 51 as a membrane is arranged between the anode chamber of one electrolytic cell 50 of the two electrolytic cells that are adjacent in the electrolyzer 4 and the cathode chamber of the other electrolytic cell 50.

That is, the anode chamber 60 of the electrolytic cell 50 and the cathode chamber 70 of the electrolytic cell 50 adjacent thereto is separated by the cation exchange membrane 51.

As shown in Figure 16, the electrolyzer 4 is composed of a plurality of electrolytic cells 50 connected in series via the ion exchange membrane 51.

That is, the electrolyzer 4 is a bipolar electrolyzer comprising the plurality of electrolytic cells 50 arranged in series and ion exchange membranes 51 each arranged between adjacent electrolytic cells 50.

As shown in Figure 17, the electrolyzer 4 is assembled by arranging the plurality of electrolytic cells 50 in series via the ion exchange membrane 51 and coupling the cells by means of a press device 5.

The electrolyzer 4 has an anode terminal 7 and a cathode terminal 6 to be connected to a power supply.

The anode 11 of the electrolytic cell 50 located at farthest end among the plurality of electrolytic cells 50 coupled in series in the electrolyzer 4 is electrically connected to the anode terminal 7.

The cathode 21 of the electrolytic cell located at the end opposite to the anode terminal 7 among the plurality of electrolytic cells 50 coupled in series in the electrolyzer 4 is electrically connected to the cathode terminal 6.

The electric current during electrolysis flows from the side of the anode terminal 7, through the anode and cathode of each electrolytic cell 50, toward the cathode terminal 6. At the both ends of the coupled electrolytic cells 50, an electrolytic cell having an anode chamber only (anode terminal cell) and an electrolytic cell having a cathode chamber only (cathode terminal cell) may be arranged. In this case, the anode terminal 7 is connected to the anode terminal cell arranged at the one end, and the cathode terminal 6 is connected to the cathode terminal cell arranged at the other end.

In the case of electrolyzing brine, brine is supplied to each anode chamber 60, and pure water or a low-concentration sodium hydroxide aqueous solution is supplied to each cathode chamber 70.

Each liquid is supplied from an electrolyte solution supply pipe (not shown in Figure), through an electrolyte solution supply hose (not shown in Figure), to each electrolytic cell 50.

The electrolyte solution and products from electrolysis are recovered from an electrolyte solution recovery pipe (not shown in Figure). During electrolysis, sodium ions in the brine migrate from the anode chamber 60 of the one electrolytic cell 50, through the ion exchange membrane 51, to the cathode chamber 70 of the adjacent electrolytic cell 50. Thus, the electric current during electrolysis flows in the direction in which the electrolytic cells 50 are coupled in series.

That is, the electric current flows, through the cation exchange membrane 51, from the anode chamber 60 toward the cathode chamber 70.

As the brine is electrolyzed, chlorine gas is generated on the side of the anode 11, and sodium hydroxide (solute) and hydrogen gas are generated on the side of the cathode 21.

(Anode chamber)

The anode chamber 60 has the anode 11 or anode feed conductor 11.

When the electrode for electrolysis is inserted to the anode side by inserting the laminate, 11 serves as an anode feed conductor.

When the laminate is not inserted, that is the electrode for electrolysis is not inserted to the anode side, 11 serves as the anode. The anode chamber 60 has an anode-side electrolyte solution supply unit that supplies an electrolyte solution to the anode chamber 60, a baffle plate that is arranged above the anode-side electrolyte solution supply unit so as to be substantially parallel or oblique to the partition wall 80, and an anode-side gas liquid separation unit arranged above the baffle plate to separate gas from the electrolyte solution including the gas mixed.

(Anode)

When the electrode for electrolysis is not inserted to the anode side, the anode 11 is provided in the frame of the anode chamber 60.

As the anode 11, a metal electrode such as so-called DSA(R) can be used. DSA is an electrode including a titanium substrate of which surface is covered with an oxide comprising ruthenium, iridium, and titanium as components.

As the form, any of a perforated metal, nonwoven fabric, foamed metal, expanded metal, metal porous foil formed by electroforming, so-called woven mesh produced by knitting metal lines, and the like can be used.

(Anode feed conductor)

When the electrode for electrolysis is inserted to the anode side by inserting the laminate, the anode feed conductor 11 is provided in the frame of the anode chamber 60.

As the anode feed conductor 11, a metal electrode such as so-called DSA(R) can be used, and titanium having no catalyst coating can be also used. Alternatively, DSA having a thinner catalyst coating can be also used. Further, a used anode can be also used.

As the form, any of a perforated metal, nonwoven fabric, foamed metal, expanded metal, metal porous foil formed by electroforming, so-called woven mesh produced by knitting metal lines, and the like can be used.

(Anode-side electrolyte solution supply unit)

The anode-side electrolyte solution supply unit, which supplies the electrolyte solution to the anode chamber 60, is connected to the electrolyte solution supply pipe.

The anode-side electrolyte solution supply unit is preferably arranged below the anode chamber 60.

As the anode-side electrolyte solution supply unit, for example, a pipe on the surface of which aperture portions are formed (dispersion pipe) and the like can be used. Such a pipe is more preferably arranged along the surface of the anode 11 and parallel to the bottom 19 of the electrolytic cell. This pipe is connected to an electrolyte solution supply pipe (liquid supply nozzle) that supplies the electrolyte solution into the electrolytic cell 50. The electrolyte solution supplied from the liquid supply nozzle is conveyed with a pipe into the electrolytic cell 50 and supplied from the aperture portions provided on the surface of the pipe to inside the anode chamber 60. Arranging the pipe along the surface of the anode 11 and parallel to the bottom 19 of the electrolytic cell is preferable because the electrolyte solution can be uniformly supplied to inside the anode chamber 60.

(Anode-side gas liquid separation unit)

The anode-side gas liquid separation unit is preferably arranged above the baffle plate. The anode-side gas liquid separation unit has a function of separating produced gas such as chlorine gas from the electrolyte solution during electrolysis. Unless otherwise specified, above means the upper direction in the electrolytic cell 50 in Figure 14, and below means the lower direction in the electrolytic cell 50 in Figure 14.

During electrolysis, produced gas generated in the electrolytic cell 50 and the electrolyte solution form a mixed phase (gas-liquid mixed phase), which is then emitted out of the system. Subsequently, pressure fluctuations inside the electrolytic cell 50 cause vibration, which may result in physical damage of the ion exchange membrane. In order to prevent this event, the electrolytic cell 50 is preferably provided with an anode-side gas liquid separation unit to separate the gas from the liquid. The anode-side gas liquid separation unit is preferably provided with a defoaming plate to eliminate bubbles. When the gas-liquid mixed phase flow passes through the defoaming plate, bubbles burst to thereby enable the electrolyte solution and the gas to be separated. As a result, vibration during electrolysis can be prevented.

(Baffle plate)

The baffle plate is preferably arranged above the anode-side electrolyte solution supply unit and arranged substantially in parallel with or obliquely to the partition wall 80.

The baffle plate is a partition plate that controls the flow of the electrolyte solution in the anode chamber 60.

When the baffle plate is provided, it is possible to cause the electrolyte solution (brine or the like) to circulate internally in the anode chamber 60 to thereby make the concentration uniform.

In order to cause internal circulation, the baffle plate is preferably arranged so as to separate the space in proximity to the anode 11 from the space in proximity to the partition wall 80. From such a viewpoint, the baffle plate is preferably placed so as to be opposed to the surface of the anode 11 and to the surface of the partition wall 80. In the space in proximity to the anode partitioned by the baffle plate, as electrolysis proceeds, the electrolyte solution concentration (brine concentration) is lowered, and produced gas such as chlorine gas is generated. This results in a difference in the gas-liquid specific gravity between the space in proximity to anode 11 and the space in proximity to the partition wall 80 partitioned by the baffle plate. By use of the difference, it is possible to promote the internal circulation of the electrolyte solution in the anode chamber 60 to thereby make the concentration distribution of the electrolyte solution in the anode chamber 60 more uniform.

Although not shown in Figure 14, a collector may be additionally provided inside the anode chamber 60.

The material and configuration of such a collector may be the same as those of the collector of the cathode chamber mentioned below. In the anode chamber 60, the anode 11 per se may also serve as the collector.

(Partition wall)

The partition wall 80 is arranged between the anode chamber 60 and the cathode chamber 70.

The partition wall 80 may be referred to as a separator, and the anode chamber 60 and the cathode chamber 70 are partitioned by the partition wall 80.

As the partition wall 80, one known as a separator for electrolysis can be used, and an example thereof includes a partition wall formed by welding a plate comprising nickel to the cathode side and a plate comprising titanium to the anode side.

(Cathode chamber)

In the cathode chamber 70, when the electrode for electrolysis constituting the laminate is inserted to the cathode side, 21 serves as a cathode feed conductor. When the electrode for electrolysis is not inserted to the cathode side, 21 serves as a cathode.

When a reverse current absorber 18 is included, the cathode or cathode feed conductor 21 is electrically connected to the reverse current absorber 18.

The cathode chamber 70, similarly to the anode chamber 60, preferably has a cathode-side electrolyte solution supply unit and a cathode-side gas liquid separation unit.

Among the components constituting the cathode chamber 70, components similar to those constituting the anode chamber 60 will be not described.

(Cathode)

When the laminate in the first embodiment is not inserted, that is, the electrode for electrolysis is not inserted to the cathode side, a cathode 21 is provided in the frame of the cathode chamber 70.

The cathode 21 preferably has a nickel substrate and a catalyst layer that covers the nickel substrate. Examples of the components of the catalyst layer on the nickel substrate include metals such as Ru, C, Si, P, S, Al, Ti, V, Cr, Mn, Fe, Co, Ni, Cu, Zn, Y, Zr, Nb, Mo, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals.

Examples of the method for forming the catalyst layer include plating, alloy plating, dispersion/composite plating, CVD, PVD, pyrolysis, and spraying. These methods may be used in combination. The catalyst layer may have a plurality of layers and a plurality of elements, as required. The cathode 21 may be subjected to a reduction treatment, as required. As the substrate of the cathode 21, nickel, nickel alloys, and nickel-plated iron or stainless may be used.

As the form, any of a perforated metal, nonwoven fabric, foamed metal, expanded metal, metal porous foil formed by electroforming, so-called woven mesh produced by knitting metal lines, and the like can be used.

(Cathode feed conductor)

When the electrode for electrolysis in the first embodiment is inserted to the cathode side by inserting the laminate, the cathode feed conductor 21 is provided in the frame of the cathode chamber 70.

The cathode feed conductor 21 may be covered with a catalytic component.

The catalytic component may be a component that is originally used as the cathode and remains. Examples of the components of the catalyst layer include metals such as Ru, C, Si, P, S, Al, Ti, V, Cr, Mn, Fe, Co, Ni, Cu, Zn, Y, Zr, Nb, Mo, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals.

Examples of the method for forming the catalyst layer include plating, alloy plating, dispersion/composite plating, CVD, PVD, pyrolysis, and spraying. These methods may be used in combination. The catalyst layer may have a plurality of layers and a plurality of elements, as required. Nickel, nickel alloys, and nickel-plated iron or stainless, having no catalyst coating may be used. As the substrate of the cathode feed conductor 21, nickel, nickel alloys, and nickel-plated iron or stainless may be used.

As the form, any of a perforated metal, nonwoven fabric, foamed metal, expanded metal, metal porous foil formed by electroforming, so-called woven mesh produced by knitting metal lines, and the like can be used.

(Reverse current absorbing layer)

A material having a redox potential less noble than the redox potential of the element for the catalyst layer of the cathode mentioned above may be selected as a material for the reverse current absorbing layer. Examples thereof include nickel and iron.

(Collector)

The cathode chamber 70 preferably comprises the collector 23.

The collector 23 improves current collection efficiency. In the first embodiment, the collector 23 is a porous plate and is preferably arranged in substantially parallel to the surface of the cathode 21.

The collector 23 preferably comprises an electrically conductive metal such as nickel, iron, copper, silver, and titanium. The collector 23 may be a mixture, alloy, or composite oxide of these metals. The collector 23 may have any form as long as the form enables the function of the collector and may have a plate or net form.

(Metal elastic body)

Placing the metal elastic body 22 between the collector 23 and the cathode 21 presses each cathode 21 of the plurality of electrolytic cells 50 connected in series onto the ion exchange membrane 51 to reduce the distance between each anode 11 and each cathode 21. Then, it is possible to lower the voltage to be applied entirely across the plurality of electrolytic cells 50 connected in series.

Lowering of the voltage enables the power consumption to be reduced. With the metal elastic body 22 placed, the pressing pressure caused by the metal elastic body 22 enables the electrode for electrolysis to be stably maintained in place when the laminate including the electrode for electrolysis is placed in the electrolytic cell 50.

As the metal elastic body 22, spring members such as spiral springs and coils and cushioning mats may be used. As the metal elastic body 22, a suitable one may be appropriately employed, in consideration of a stress to press the ion exchange membrane 51 and the like. The metal elastic body 22 may be provided on the surface of the collector 23 on the side of the cathode chamber 70 or may be provided on the surface of the partition wall on the side of the anode chamber 60.

Both the chambers are usually partitioned such that the cathode chamber 70 becomes smaller than the anode chamber 60. Thus, from the viewpoint of the strength of the frame and the like, the metal elastic body 22 is preferably provided between the collector 23 and the cathode 21 in the cathode chamber 70.

The metal elastic body 22 preferably comprises an electrically conductive metal such as nickel, iron, copper, silver, and titanium.

(Support)

The cathode chamber 70 preferably comprises the support 24 that electrically connects the collector 23 to the partition wall 80. This can achieve an efficient current flow.

The support 24 preferably comprises an electrically conductive metal such as nickel, iron, copper, silver, and titanium.

The support 24 may have any shape as long as the support can support the collector 23 and may have a rod, plate, or net shape. The support 24 has a plate shape, for example.

A plurality of supports 24 are arranged between the partition wall 80 and the collector 23. The plurality of supports 24 are aligned such that the surfaces thereof are in parallel to each other. The supports 24 are arranged substantially perpendicular to the partition wall 80 and the collector 23.

(Anode side gasket and cathode side gasket)

The anode side gasket 12 is preferably arranged on the frame surface constituting the anode chamber 60. The cathode side gasket 13 is preferably arranged on the frame surface constituting the cathode chamber 70. Electrolytic cells are connected to each other such that the anode side gasket 12 included in one electrolytic cell 50 and the cathode side gasket 13 of an electrolytic cell adjacent to the cell sandwich the ion exchange membrane 51 (see Figures 14 and 15).

These gaskets can impart airtightness to connecting points when the plurality of electrolytic cells 50 is connected in series via the ion exchange membrane 51.

The gaskets form a seal between the ion exchange membrane and electrolytic cells. Specific examples of the gaskets include picture frame-like rubber sheets at the center of which an aperture portion is formed. The gaskets are required to have resistance against corrosive electrolyte solutions or produced gas and be usable for a long period. Thus, in respect of chemical resistance and hardness, vulcanized products and peroxide-crosslinked products of ethylene-propylene-diene rubber (EPDM rubber) and ethylene-propylene rubber (EPM rubber) are usually used as the gaskets. Alternatively, gaskets of which region to be in contact with liquid (liquid contact portion) is covered with a fluorine-containing resin such as polytetrafluoroethylene (PTFE) and tetrafluoroethylene-perfluoroalkyl vinyl ether copolymers (PFA) may be employed as required.

These gaskets each may have an aperture portion so as not to inhibit the flow of the electrolyte solution, and the shape of the aperture portion is not particularly limited. For example, a picture frame-like gasket is attached with an adhesive or the like along the peripheral edge of each aperture portion of the anode chamber frame constituting the anode chamber 60 or the cathode chamber frame constituting the cathode chamber 70. Then, for example, in the case where the two electrolytic cells 50 are connected via the ion exchange membrane 51 (see Figure 15), each electrolytic cell 50 onto which the gasket is attached should be tightened via ion exchange membrane 51. This tightening can prevent the electrolyte solution, alkali metal hydroxide, chlorine gas, hydrogen gas, and the like generated from electrolysis from leaking out of the electrolytic cells 50.

(Ion exchange membrane)

The ion exchange membrane 51 is as described in the section of the ion exchange membrane described above.

(Water electrolysis)

The electrolyzer mentioned above, as an electrolyzer in the case of electrolyzing water, has a configuration in which the ion exchange membrane in an electrolyzer for use in the case of electrolyzing common salt mentioned above is replaced by a microporous membrane. The raw material to be supplied, which is water, is different from that for the electrolyzer in the case of electrolyzing common salt mentioned above. As for the other components, components similar to that of the electrolyzer in the case of electrolyzing common salt can be employed also in the electrolyzer in the case of electrolyzing water.

Since chlorine gas is generated in the anode chamber in the case of common salt electrolysis, titanium is used as the material of the anode chamber, but in the case of water electrolysis, only oxygen gas is generated in the anode chamber. Thus, a material identical to that of the cathode chamber can be used. An example thereof is nickel. For anode coating, catalyst coating for oxygen generation is suitable. Examples of the catalyst coating include metals, oxides, and hydroxides of the platinum group metals and transition metal group metals. For example, elements such as platinum, iridium, palladium, ruthenium, nickel, cobalt, and iron can be used.

(Application of laminate)

The laminate obtained by the first embodiment can improve the work efficiency during electrode renewing in an electrolyzer and further, can exhibit excellent electrolytic performance also after renewing as mentioned above. In other words, the laminate in the first embodiment can be suitably used as a laminate for replacement of a member of an electrolyzer. A laminate to be used in such an application is specifically referred to as a "membrane electrode assembly".

(Package)

The laminate obtained by the production method of the first embodiment is preferably transported or the like in a state of a package enclosed in a packaging material.

That is, the package comprises a laminate and a packaging material that packages the laminate. The package, configured as described above, can prevent adhesion of stain and damage that may occur during transport or the like of the laminate. When used for member replacement of the electrolyzer, the laminate is particularly preferably transported or the like as the package. As the packaging material, which is not particularly limited, known various packaging materials can be employed. Alternatively, the package can be produced by, for example, a method including packaging the laminate with a clean packaging material followed by encapsulation or the like, although not limited thereto.

<Second embodiment>

Hereinbelow, a second embodiment of the present invention will be described in detail.

[Laminate]

A laminate of the second embodiment is a laminate including an electrode for electrolysis and a membrane laminated on the electrode for electrolysis. The membrane has an asperity geometry on the surface thereof, and the ratio a of the gap volume between the electrode for electrolysis and the membrane with respect to the unit area of the membrane is more than 0.8 $\mu$m and 200 $\mu$m or less. The laminate of the second embodiment, as configured as described above, can suppress an increase in the voltage and a decrease in the current efficiency, can exhibit excellent electrolytic performance, can improve the work efficiency during electrode renewing in an electrolyzer, and further can exhibit excellent electrolytic performance also after renewing.

As structures described in Patent Literatures 1 and 2, in a structure formed by integrating an electrode and a membrane by the method described in the literatures, the voltage may increase or the current efficiency may decrease, and thus the electrolytic performance is insufficient. The literatures do not refer to the shape of the membrane. The present inventors have made intensive studies on the shape of the membrane to have found that raw materials or products of electrolysis tend to accumulate on the interface between the electrode for electrolysis and the membrane and that, in the case of a cathode as an example, NaOH generated in the electrode tends to accumulate on the interface between the electrode for electrolysis and the membrane. The present inventors have made further intensive studies based on this finding to have found that allowing the membrane to have an asperity geometry on the surface thereof and setting the ratio a of the gap volume between the electrode for electrolysis and the membrane with respect to the unit area of the membrane within a predetermined range suppress accumulation of NaOH on the above interface, consequently, an increase in the voltage and a decrease in the current efficiency are suppressed, and the electrolytic performance can be improved.

The laminate obtained by the method for producing a laminate of the first embodiment preferably has characteristics according to the laminate of the second embodiment. In other words, the laminate of the second embodiment can be preferably obtained by the method for producing a laminate of the first embodiment. As described above, the electrode for electrolysis and the membrane constituting the laminate of the second embodiment are the same as those described in the first embodiment, unless otherwise specified, and thus, redundant description will be omitted.

An interface moisture content w, which is retained on the interface between membrane and the electrode for electrolysis is preferably 30 $g/m^2$ or more and 200 $g/m^2$ or less, more preferably 54 $g/m^2$ or more and 150 $g/m^2$ or less, further preferably 63 $g/m^2$ or more and 120 $g/m^2$ or less. When the interface moisture content w is within the range described above, accumulation of NaOH on the above interface is suppressed, consequently, an increase in the voltage and a decrease in the current efficiency tend to be suppressed, and improvements in the electrolytic performance tend to be achieved. The interface moisture content w can be determined by a method described below in Example. The interface moisture content w can be adjusted within the above range by adjusting, for example, the surface profile, specifically, asperities of the membrane, the height and depth of the asperities, and the frequency of the asperities. Similarly, the interface moisture content w can be adjusted within the above range by adjusting, for example, the surface profile, specifically, asperities of the electrode for electrolysis, the height and depth of the asperities, and the frequency of the asperities. Asperities may exist both on the membrane and electrode for electrolysis. More specifically, with a larger height of the asperities in the electrode for electrolysis and/or the membrane, the interface moisture content w tends to increase, and with the higher frequency of the asperities, the interface moisture content w tends to increase.

[Protrusion]

The electrode for electrolysis in the second embodiment has one or more protrusions on an opposed surface to the membrane, and the one or more protrusions satisfy the following conditions (i) to (iii):

$$0.04 \leq S_a/S_{all} \leq 0.55 \quad (i)$$

$$0.010 \text{ mm}^2 \leq S_{ave} \leq 10.0 \text{ mm}^2 \quad (ii)$$

$$1 < (h + t)/t \leq 10 \quad (iii)$$

wherein, in the (i), $S_a$ represents the total area of the protrusion(s) in an observed image obtained by observing the opposed surface under an optical microscope, $S_{all}$ represents the area of the opposed surface in the observed image, in the (ii), $S_{ave}$ represents the average area of the protrusion(s) in the observed image, and
in the (iii), h represents the height of the protrusion(s), and t represents the thickness of the electrode for electrolysis.

In a structure formed by integrating an electrode for electrolysis and a membrane, as described in Patent Literatures 1 and 2, the voltage may increase or the current efficiency may decrease, and thus the electrolytic performance is insufficient. The literatures do not refer to the shape of the electrode. The present inventors have made intensive studies on the shape of the electrode to have found that raw materials or products of electrolysis tend to accumulate on the interface between the electrode for electrolysis and the membrane and that, in the case of a cathode, for example, NaOH generated in the electrode tends to accumulate on the interface between the electrode for electrolysis and the membrane. The present inventors have made further intensive studies based on this finding to have found that, when the electrode for electrolysis has predetermined protrusions on a surface opposed to the membrane and the protrusions satisfy conditions (i) to (iii), accumulation of NaOH on the above interface is suppressed, consequently, an increase in the voltage and a decrease in the current efficiency are suppressed, and the electrolytic performance can be improved. In other words, according to the laminate of the second invention, it is possible to suppress an increase in the voltage and a decrease in the current efficiency and to exhibit excellent electrolytic performance.

(Condition (i))

$S_a/S_{all}$ is 0.04 or more and 0.55 or less from the viewpoint of achieving desired electrolytic performance, preferably 0.05 or more and 0.55 or less, more preferably 0.05 or more and 0.50 or less, further preferably 0.125 or more and 0.50 or less from the viewpoint of having more excellent electrolytic performance. $S_a/S_{all}$ can be adjusted in the range described above by, for example, adopting the preferable production method described below or the like. An example of the method for measuring $S_a/S_{all}$ is the method described in Example described below.

(Condition (ii))

$S_{ave}$ is 0.010 mm$^2$ or more and 10.0 mm$^2$ or less from the viewpoint of achieving desired electrolytic performance, preferably 0.07 mm$^2$ or more and 10.0 mm$^2$ or less, more preferably 0.07 mm$^2$ or more and 4.3 mm$^2$ or less, further preferably 0.10 mm$^2$ or more and 4.3 mm$^2$ or less, most preferably 0.20 mm$^2$ or more and 4.3 mm$^2$ or less from the viewpoint of having more excellent electrolytic performance. $S_{ave}$ can be adjusted in the range described above by, for example, adopting the preferable production method described below or the like. An example of a method for measuring $S_{ave}$ is the method described in Example described below.

(Condition (iii))

$(h + t)/t$ is more than 1 and 10 or less from the viewpoint of achieving desired electrolytic performance, preferably 1.05 or more and 7.0 or less, more preferably 1.1 or more and 6.0 or less, further preferably 2.0 or more and 6.0 or less from the viewpoint of having superior electrolytic performance. $(h + t)/t$ can be adjusted in the range described above by, for example, adopting the preferable production method described below or the like. An example of a method for measuring $(h + t)/t$ is the method described in Example described below. Here, the electrode for electrolysis in the present embodiment may include a substrate for electrode for electrolysis and a catalytic layer (catalyst coating) as described below. In examples described below, h is measured on an electrode for electrolysis produced by applying catalyst coating to a substrate for electrode for electrolysis subjected to processing for forming asperities, but the h may be measured on an electrode for electrolysis subjected to processing for forming asperities after application of catalyst coating. As long as the same processing for forming asperities is conducted, both the measurements coincide well with each other.

From a similar viewpoint as above, the value of h/t is preferably more than 0 and 9 or less, more preferably 0.05 or more and 6.0 or less, further preferably 0.1 or more and 5.0 or less, even further preferably 1.0 or more and 5.0 or less. The value of h may be adjusted as appropriate in accordance with the value of t in order to satisfy the condition (iii). Typically, the value of h is preferably more than 0 μm and 2700 μm or less, more preferably 0.5 μm or more and 1000 μm or less, further preferably 5 μm or more and 500 μm or less, even further preferably 10 μm or more and 300 μm or less.

In the second embodiment, a protrusion means a recess or a projection, meaning a portion that satisfies the conditions (i) to (iii) when subjected to measurement described in Example mentioned below. Here, the recess means a portion protruding in the direction opposite to the membrane, and the projection means a portion protruding in the direction toward the membrane. In the second embodiment, when the electrode for electrolysis has a plurality of protrusions, the electrode for electrolysis may have only a plurality of protrusions as recesses, may have only a plurality of protrusions as projections, or may have both protrusions as recesses and protrusions as projections.

The protrusions in the second embodiment are formed on the opposed surface to the membrane in the surfaces of the electrode for electrolysis, but recesses and/or projections similar to the protrusions may be formed on the surface of the electrode for electrolysis other than the opposed surface.

In the second embodiment, the value M obtained by multiplying the values of the above (i) to (iii) (= $S_a/S_{all} \times S_{ave} \times (h + t)/t$) shows the balance among the conditions (i) to (iii) and is preferably 0.04 or more and 15 or less, more preferably 0.05 or more and 10 or less, further preferably 0.05 or more and 5 or less from the viewpoint of suppressing an increase in the voltage.

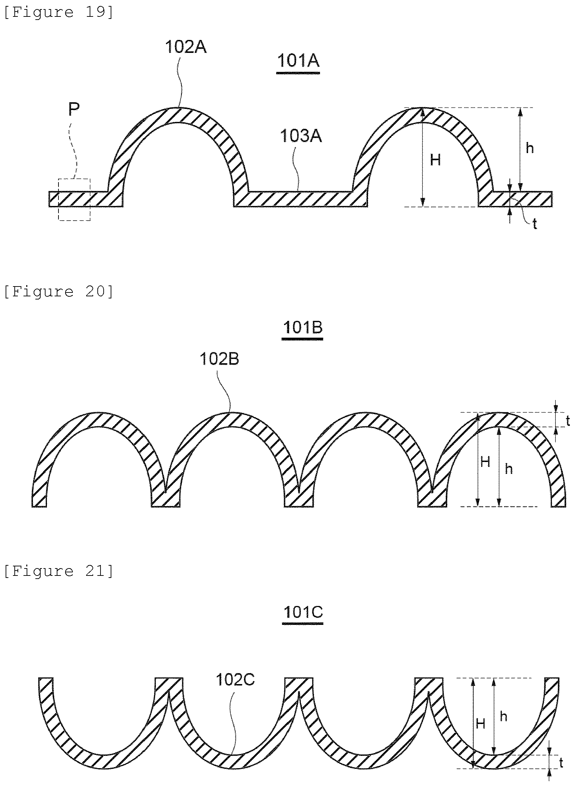

Figure 19 to Figure 21 are cross-sectional schematic views each illustrating one example of an electrode for electrolysis in the second embodiment.

In an electrode for electrolysis 101A shown in Figure 19, a plurality of protrusions (projections) 102A are disposed at a predetermined interval. Figure 10, described in the first embodiment, corresponds to an enlargement of the portion surrounded by a dashed line P shown in Figure 19.

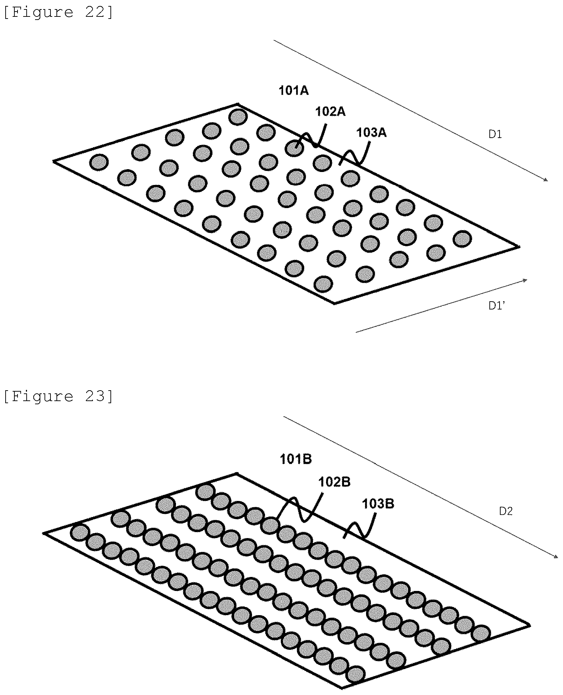

In this example, a flat portion 103A is disposed between the adjacent protrusions (projections) 102A. Although the protrusions are projections in this example, the protrusions may be recesses in the electrode for electrolysis in the second embodiment. Additionally, although the projections each have the same height and width in this example, the projection may each have a different height and width in the electrode for electrolysis in the second embodiment. Here, an electrode for electrolysis 101A shown in Figure 22 is a plan perspective view of the electrode for electrolysis 101A shown in Figure 19.

In an electrode for electrolysis 101B shown in Figure 20, protrusions (projections) 102B are sequentially disposed. Although the projections each have the same height and width in this example, the projection may each have a different height and width in the electrode for electrolysis in the second embodiment. Here, an electrode for electrolysis 101B shown in Figure 23 is a plan perspective view of the electrode for electrolysis 101B shown in Figure 20.

In an electrode for electrolysis 101C shown in Figure 21, protrusions (projections) 102C are sequentially disposed. Although the recesses each have the same height and width in this example, the projection or recesses may each have a different height and width in the electrode for electrolysis in the second embodiment.

In the electrode for electrolysis in the second embodiment, in at least one direction in the opposed surface, the protrusions preferably satisfy at least one of the following conditions (I) to (III).

(I) The protrusions are each independently disposed.
(II) The protrusions are projection, and the projections are sequentially disposed.
(III) The protrusions are recesses, and the recesses are sequentially disposed.

Satisfying the conditions, the electrode for electrolysis tends to have more excellent electrolytic performance. Specific examples of each of the conditions are shown in Figure 19 to Figure 21. In other words, Figure 19 corresponds to one example satisfying the condition (I), Figure 20 corresponds to one example satisfying the condition (II), and Figure 21 corresponds to one example satisfying the condition (III).

In the electrode for electrolysis in the second embodiment, the protrusions are preferably each independently disposed in one direction D1 in the opposed surface. "Each independently disposed" means that, as shown in Figure 19, protrusions are each disposed at a predetermined interval with a flat portion interposed therebetween. As the flat portion to be disposed when the condition (I) is satisfied, preferred is a portion having a width of 10 $\mu$m or more in the D1 direction. The recess and projection portions in the electrode for electrolysis usually have residual stress due to processing for forming asperities. The magnitude of this residual stress may affect the handleability of the electrode for electrolysis. In other words, from the viewpoint of reducing the residual stress to thereby improve the handleability of the electrode for electrolysis, the electrode for electrolysis in the second embodiment preferably satisfies the condition (I) as shown in Figure 19. When the condition (I) is satisfied, the flatness tends to be achieved without necessity of additional processing such as annealing processing, and the production process can be made easier.

In the electrode for electrolysis in the second embodiment, as shown in Figure 19, it is more preferred that protrusions be each independently disposed in the D1 direction of the electrode for electrolysis and in a D1' direction orthogonally intersecting D1. Accordingly, a supply path for raw materials of electrolysis reaction is formed to thereby sufficiently supply the raw materials to the electrode. Additionally, a path for diffusion of reaction products is formed to thereby allow the product to diffuse smoothly from the electrode surface.

In the electrode for electrolysis in the second embodiment, the protrusions may be sequentially disposed in one direction D2 in the opposed surface. "Sequentially disposed" means that, as shown in Figure 20 and Figure 21, two or more protrusions are disposed in series. Even when the condition (II) or (III) is satisfied, a minute flat region may exist in the boundary between protrusions. The region has a width of less than 10 $\mu$m in the D2 direction.

In the electrode for electrolysis in the second embodiment, two or more of the conditions (I) to (III) may be satisfied. For example, regions in which two or more protrusions are sequentially disposed in one direction in the opposed surface and regions in which protrusions are each independently disposed may coexist.

The mass per unit of the electrode for electrolysis is preferably 500 mg/cm$^2$ or less, more preferably 300 mg/cm$^2$ or less, further preferably 100 mg/cm$^2$ or less, particularly preferably 50 mg/cm$^2$ or less (preferably 48 mg/cm$^2$ or less, more preferably 30 mg/cm$^2$ or less, further preferably 20 mg/cm$^2$ or less) from the viewpoint of enabling a good handling property to be provided, having a good adhesive force to a membrane such as an ion exchange membrane and a microporous membrane, a degraded electrode, a feed conductor having no catalyst coating, and the like and of economy, and furthermore is preferably 15 mg/cm$^2$ or less from the comprehensive viewpoint including handling property, adhesion, and economy. The lower limit value is not particularly limited but is of the order of 1 mg/cm$^2$, for example.

The mass per unit area described above can be within the range described above by appropriately adjusting an opening ratio described below, thickness of the electrode, and the like, as described in the first embodiment, for example. More specifically, for example, when the thickness is constant, a higher opening ratio tends to lead to a smaller mass per unit area, and a lower opening ratio tends to lead to a larger mass per unit area.

As described above, Figure 10, described in the first embodiment, corresponds to an enlargement of the portion surrounded by a dashed line P shown in Figure 19. The substrate for electrode for electrolysis 10 shown in Figure 10 is preferably in a porous form in which a plurality of holes is formed by punching. This allows reaction materials to be sufficiently supplied to the electrolysis reaction surface and enables reaction products to rapidly diffuse. The diameter of each hole is, for example, of the order of 0.1 to 10 mm, preferably 0.5 to 5 mm. The aperture ratio is, for example, 10 to 80%, preferably 20 to 60%.

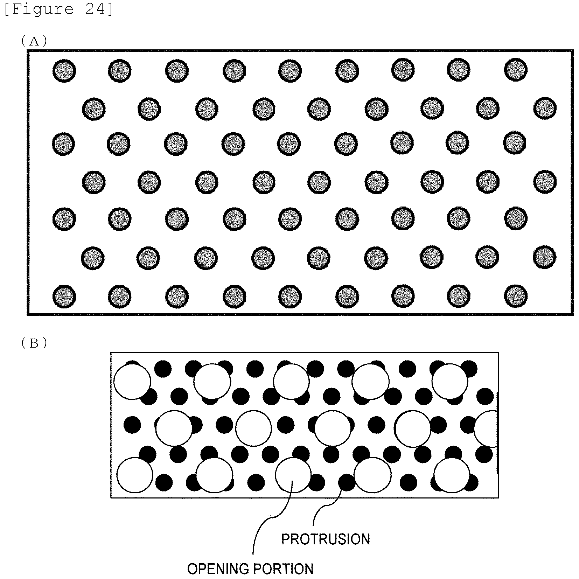

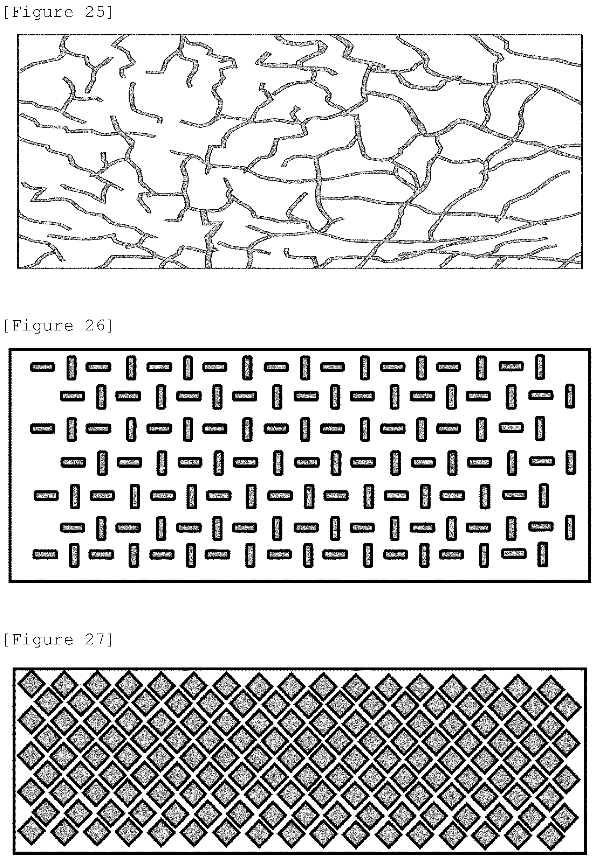

In the substrate for electrode for electrolysis 10, protrusions are not necessarily required to be formed, but protrusions satisfying the conditions (i) to (iii) are preferably formed. In order to satisfy the conditions, as the substrate for electrode for electrolysis, used is a substrate obtained by embossing at a line pressure of 100 to 400 N/cm using, for example, a metallic roll having a predetermined design formed on the surface thereof and a resin pressure roll. Examples of the metallic roll having a predetermined design formed on the surface thereof include metallic rolls illustrated in Figure 24(A) and Figures 25 to Figure 27. Each rectangular outer frame in Figure 24(A) and Figure 25 to Figure 27 corresponds to the form of the design portion of the metallic roll, as viewed from the top. Each of the portions surrounded by a line in this frame (shadowed portions in each drawing) correspond to the design portion (i.e., protrusions in the metallic roll).

Examples of control for satisfying the conditions (i) to (iii) include, but not particularly limited to, the following method.

The recesses and projections formed on the roll surface described above are transferred on the substrate for electrode for electrolysis to thereby form protrusions possessed by the electrode for electrolysis. Here, the values of Sa, $S_{ave}$, and H can be controlled by adjusting, for example, the number of recesses and projections on the roll surface, the height of the projection portion, the area of the projection portion when plan-viewed, and the like. More specifically, a larger number of recesses and projections on the roll surface tends to lead to a larger $S_a$ value, a larger area of the projection portion of the recesses and projections of the roll surface when plan-viewed tends to lead to a larger $S_{ave}$ value, and a larger height of the projection portion of the recesses and projections of the roll surface tends to lead to a larger (h + t) value.

In the second embodiment, the membrane is laminated on the surface of the electrode for electrolysis. The "surface of the electrode for electrolysis" referred to herein may be either of both the surfaces of the electrode for electrolysis. Specifically, in the case of the electrodes for electrolysis 101A, 101B, and 101C respectively in Figure 19, Figure 20, and Figure 21, the membrane may be laminated on the upper surface of each of the electrodes for electrolysis 101A, 101B, and 101C, or the membrane may be laminated on the lower surface of each of the electrodes for electrolysis 101A, 101B, and 101C.

The membrane has an asperity geometry on a surface thereof. The ratio a of the gap volume between the electrode for electrolysis and the membrane with respect to the unit area of the membrane is more than 0.8 and 200 $\mu$m or less, preferably 13 $\mu$m or more and 150 $\mu$m or less, more preferably 14 $\mu$m or more and 150 $\mu$m or less, further preferably 23 $\mu$m or more and 120 $\mu$m or less. When the ratio a is within the range described above, accumulation of NaOH on the above interface is suppressed. Consequently, an increase in the voltage and a decrease in the current efficiency are suppressed, and the electrolytic performance can be improved. The ratio a can be determined by a method described in Example mentioned below. The ratio a can be adjusted within the above range by adjusting, for example, the surface profile, specifically, asperities of the membrane, the height and depth of the asperities, and the frequency of the asperities. Similarly, the ratio a can be adjusted within the above range by adjusting, for example, the surface profile, specifically, asperities of the electrode for electrolysis, the height and depth of the asperities, and the frequency of the asperities. Asperities may exist both on the membrane and electrode for electrolysis. More specifically, with a larger height of the asperities in the electrode for electrolysis and/or the membrane, the ratio a tends to increase, and with the higher frequency of the asperities, the ratio a tends to increase.

The membrane is only required to have an asperity geometry on a surface thereof, may have an asperity geometry on both the surface of the membrane (e.g., the anode surfaces and cathode surface), or may have an asperity geometry on one of both the surfaces of the membrane (e.g., the anode surface or cathode surface). The "anode surface" referred to herein means the interface between an electrode for electrolysis used as an anode and a membrane in a laminate of the electrode for electrolysis and the membrane. The "cathode surface" means the interface between an electrode for electrolysis used as a cathode and a membrane in a laminate of the electrode for electrolysis and the membrane. When both the surfaces of the membrane have an asperity geometry, these asperity geometries may be the same or different from each other.

A height difference, which is the difference between the maximum value and the minimum value of the height in the asperity geometry, is preferably more than 2.5 $\mu$m (e.g., more than 2.5 $\mu$m, 350 $\mu$m or less), preferably 45 $\mu$m or more, more preferably 46 $\mu$m or more, further preferably 90 $\mu$m or more. When the height difference is within the range described above, accumulation of NaOH on the above interface is further suppressed. Consequently, an increase in the voltage and a decrease in the current efficiency are further suppressed, and the electrolytic performance can be further improved. The height difference can be determined by a method described in Example mentioned below. The upper limit is not particularly limited, but is preferably 350 $\mu$m or less, more preferably 200 $\mu$m or less from a viewpoint of voltage and the like.

The standard deviation of the height difference in the asperity geometry is preferably more than 0.3 $\mu$m (e.g., more than 0.3 $\mu$m and 60 $\mu$m or less), more preferably 7 $\mu$m or more, more preferably more than 7 $\mu$m, further preferably 13 $\mu$m or more. When the standard deviation is within the range described above, accumulation of NaOH on the above interface is further suppressed. Consequently, an increase in the voltage and a decrease in the current efficiency are further suppressed, and the electrolytic performance can be further improved. The height difference can be determined by a method described in Example mentioned below. The upper limit is not particularly limited, but is preferably 60 $\mu$m or less.

A method for producing an ion exchange membrane as the membrane in the second embodiment also can be the same as the production method described in the first embodiment. In other words, a suitable example of a method for producing an ion exchange membrane includes a method including the following steps (1) to (6):

Step (1): the step of producing a fluorine-containing polymer having an ion exchange group or an ion exchange group precursor capable of forming an ion exchange group by hydrolysis,

Step (2): the step of weaving at least a plurality of reinforcement core materials, as required, and sacrifice yarns having a property of dissolving in an acid or an alkali, and forming continuous holes, to obtain a reinforcing material in which the sacrifice yarns are arranged between the reinforcement core materials adjacent to each other,

Step (3): the step of forming into a film the above fluorine-containing polymer having an ion exchange group or an ion exchange group precursor capable of forming an ion exchange group by hydrolysis,

Step (4): the step of embedding the above reinforcing materials, as required, in the above film to obtain a membrane body inside which the reinforcing materials are arranged and which has an asperity geometry satisfying a predetermined ratio a on a surface thereof,

Step (5): the step of hydrolyzing the membrane body obtained in the step (4) (hydrolysis step), and

Step (6): the step of providing a coating layer on the membrane body obtained in the step (5) (application step) .

Here, from the viewpoint of controlling the ratio a, the height difference, and the standard deviation of the height difference in the second embodiment within a desired range, the production method is preferably conducted in further consideration of the following description.

In the step (2), the aperture ratio, arrangement of the continuous holes, and the like can be controlled by adjusting the arrangement of the reinforcement core materials and the sacrifice yarns. Additionally, an asperity geometry can be formed on a surface of the ion exchange membrane by adjusting the arrangement of the reinforcement core materials. For example, making reinforcement yarns 52 into a lattice form, in which warps and wefts intersect one another, as shown in Figure 13(A), can form an asperity geometry in which intersection portions are projected.

As a method for forming an asperity geometry having protruded portions, that is, projections on a surface of the ion exchange membrane, which is not particularly limited, a known method including forming projections on a resin surface (e.g., methods described in Japanese Patent No. 3075580, Japanese Patent No. 4708133, and Japanese Patent No. 5774514) can be employed. A specific example of the method is a method of embossing the surface of the membrane body. For example, when the composite film mentioned above, reinforcing material, and the like are integrated, the above projections can be formed by laminating embossed release paper, the composite film, and reinforcing material, heating and depressurizing the laminate, and removing the release paper. In the case where projections are formed by embossing, the height and arrangement density of the projections can be controlled by controlling the emboss shape to be transferred (shape of the release paper).

Another example includes a method of forming a lattice-like asperity geometry of the reinforcement yarns 52 as shown in Figure 13(A) by conducting the step of obtaining a membrane body (Step (4)) without using embossed release paper.

Here, when an asperity geometry is formed on the cathode surface of the ion exchange membrane, an example of a method of enlarging the height difference in the asperity geometry includes a method as follows. That is, under the heating and depressurizing conditions on integrating the composite film, reinforcing material, and the like, it is only required to conduct heating and depressurization at a heating temperature of about 230 to 235°C and a degree of reduced pressure of about 0.065 to 0.070 MPa for one to three minutes. In contrast, when an asperity geometry is formed on the cathode surface of the ion exchange membrane, an example of a method of reducing the height difference in the asperity geometry includes a method as follows. That is, under the heating and depressurizing conditions on embossing the surface of the membrane body, it is only required to conduct heating and depressurization at a heating temperature of about 220 to 225°C and a degree of reduced pressure of about 0.065 to 0.070 MPa for one to three minutes. In this time, the height difference can be made smaller by heating and depressurizing the composite film and reinforcing material with a Kapton film laminated thereon, as required, and then, removing the Kapton film.

Here, when an asperity geometry is formed on the anode surface of the ion exchange membrane, an example of a method of enlarging the height difference in the asperity geometry includes a method as follows. That is, when the composite film, reinforcing material and the like are integrated, a PET film, the composite film, and reinforcing material are laminated and subjected to roll lamination using a metal roll heated at about 200°C and a rubber lining roll, and then, the PET film is only required to be removed. In contrast, when an asperity geometry is formed on the anode surface of the ion exchange membrane, an example of a method of reducing the height difference in the asperity geometry includes a method as follows. That is, an example thereof includes using release paper not embossed or release paper having a small embossing depth when the composite film, reinforcing material and the like are integrated.

Alternatively, the standard deviation can be controlled by controlling the conditions of the heating temperature and degree of reduced pressure in the plane direction of the ion exchange membrane or by controlling the shapes of the reinforcement core material, sacrifice yarn, release paper, and the like to be used.

[Electrolyzer]

The electrolyzer of the second embodiment includes the laminate of the second embodiment. A method for producing an electrolyzer of the second embodiment is a method for producing a new electrolyzer by arranging a laminate in an existing electrolyzer comprising an anode, a cathode that is opposed to the anode, and a membrane that is arranged between the anode and the cathode, the method comprising a step of replacing the membrane in the existing electrolyzer by the laminate (step (a)), the laminate being the laminate of the second embodiment.

The electrolytic cell and other constituting members constituting the electrolyzer of the second embodiment are the same as those described in the first embodiment, and thus, redundant description will be omitted.

In the second embodiment, the existing electrolyzer comprises an anode, a cathode that is opposed to the anode, and a membrane that is arranged between the anode and the cathode as constituent members, in other words, comprises an electrolytic cell. The existing electrolyzer is not particularly limited as long as comprising the constituent members described above, and various known configurations, such as the configuration described above or the like, may be employed.

In the second embodiment, a new electrolyzer further comprises an electrode for electrolysis or a laminate, in addition to a member that has already served as the anode or cathode in the existing electrolyzer. That is, the "electrode for electrolysis" arranged on production of a new electrolyzer serves as the anode or cathode, and is separate from the cathode and anode in the existing electrolyzer. In the second embodiment, even in the case where the electrolytic performance of the anode and/or cathode has deteriorated in association with operation of the existing electrolyzer, arrangement of an electrode for electrolysis separating therefrom enables the characteristics of the anode and/or cathode to be renewed. Further, a new ion exchange membrane constituting the laminate is arranged in combination, and thus, the characteristics of the ion exchange membrane having characteristics deteriorated in association with operation can be renewed simultaneously. "Renewing the characteristics" referred to herein means to have characteristics comparable to the initial characteristics possessed by the existing electrolyzer before being operated or to have characteristics higher than the initial characteristics.

In the second embodiment, the existing electrolyzer is assumed to be an "electrolyzer that has been already operated", and the new electrolyzer is assumed to be an "electrolyzer that has not been yet operated". That is, once an electrolyzer produced as a new electrolyzer is operated, the electrolyzer becomes "the existing electrolyzer in the second embodiment". Arrangement of an electrode for electrolysis or a laminate in this existing electrolyzer provides "a new electrolyzer of the second embodiment".

In the step (a) in the second embodiment, the membrane in the existing electrolyzer is replaced by a laminate. The replacing method is not particularly limited, and examples thereof include a method in which, first in the existing electrolyzer, a fixed state of the adjacent electrolytic cell and ion exchange membrane by means of a press device is released to provide a gap between the electrolytic cell and the ion exchange membrane, then, the existing ion exchange membrane to be renewed is removed, then, a laminate is inserted into the gap, and the members are coupled again by means of the press device. By means of the method, a laminate can be arranged on the surface of the anode or the cathode of the existing electrolyzer, and the characteristics of the ion exchange membrane and the anode and/or cathode can be renewed.

<Third embodiment>

Here, a third embodiment of the present invention will be described in detail.

[Method for producing electrolyzer]

A method for producing an electrolyzer according to a first aspect (hereinbelow, also simply referred to as the "first method") of the third embodiment is a method for producing a new electrolyzer by arranging an electrode for electrolysis in an existing electrolyzer comprising an anode, a cathode that is opposed to the anode, a membrane arranged between the anode and the cathode, and an electrolytic cell frame comprising an anode frame that supports the anode and a cathode frame that supports the cathode, the electrolytic cell frame storing the anode, the cathode, and the membrane by integrating the anode frame and the cathode frame, the method comprising: a step (A1) of releasing the integration of the anode frame and the cathode frame to expose the membrane, a step (B1) of arranging the electrode for electrolysis on at least one of the surfaces of the membrane after the step (A1), and a step (C1) of integrating the anode frame and the cathode frame after the step (B1) to store the anode, the cathode, the membrane, and the electrode for electrolysis into the electrolytic cell frame.

As described above, according to the first method, without removal of the anode and the cathode of the existing electrolyzer, the characteristics of at least one of these can be renewed. Thus, it is possible to improve the work efficiency during renewing members in an electrolyzer without a series of complicated works such as removal and conveyance of the electrolytic cell, removal of the old electrodes, placement and fixing of new electrodes, and conveyance and placement thereof into the electrolyzer.

A method for producing an electrolyzer according to a second aspect (hereinbelow, also simply referred to as the "second method") of the third embodiment is a method for producing a new electrolyzer by arranging an electrode for electrolysis and a new membrane in an existing electrolyzer comprising an anode, a cathode that is opposed to the anode, a membrane arranged between the anode and the cathode, and an electrolytic cell frame comprising an anode frame that supports the anode and a cathode frame that supports the cathode, the electrolytic cell frame storing the anode, the cathode, and the membrane by integrating the anode frame and the cathode frame, the method comprising: a step (A2) of releasing the integration of the anode frame and the cathode frame to expose the membrane, a step (B2) of removing the membrane after the step (A2) and arranging the electrode for electrolysis and new membrane on the anode or cathode, and a step (C2) of integrating the anode frame and the cathode frame to store the anode, the cathode, the membrane, the electrode for electrolysis, and the new membrane into the electrolytic cell frame.

As described above, according to the second method, without removal of the anode and the cathode of the existing electrolyzer, the characteristics of at least one of these along with the characteristics of the membrane can be renewed. Thus, it is possible to improve the work efficiency during renewing members in an electrolyzer without a series of complicated works such as removal and conveyance of the electrolytic cell, removal of the old electrodes, placement and fixing of new electrodes, and conveyance and placement thereof into the electrolyzer.

Hereinbelow, when referred to as the "production method of the third embodiment", the first method and the second method are incorporated.

In the production method of the third embodiment, the existing electrolyzer comprises an anode, a cathode that is opposed to the anode, and a membrane arranged between the anode and the cathode as constituent members, in other words, comprises an electrolytic cell comprising at least an anode, a cathode, and a membrane as constituent members. The existing electrolyzer is not particularly limited as long as comprising the constituent members described above, and various known configurations may be employed. The anode in the existing electrolyzer, when in contact with electrode for electrolysis, substantially serves as a feed conductor. When not in contact with the electrode for electrolysis, the anode per se serves as the anode. Similarly, the cathode in the existing electrolyzer, when in contact with the electrode for electrolysis, substantially serves as a feed conductor. When not in contact with the electrode for electrolysis, the cathode per se serves as the cathode. Here, the feed conductor means a degraded electrode (i.e., the existing electrode), an electrode having no catalyst coating, and the like.

In the first method, a new electrolyzer further comprises an electrode for electrolysis, in addition to the anode and the cathode in the existing electrolyzer. That is, the electrode for electrolysis arranged on production of a new electrolyzer serves as the anode or cathode, and is separate from the cathode and anode in the existing electrolyzer. In the second method, a new electrolyzer further comprises an electrode for electrolysis and a new membrane, in addition to the anode and the cathode in the existing electrolyzer.

In the first method, even in the case where the electrolytic performance of the anode and/or cathode has deteriorated in association with operation of the existing electrolyzer, arrangement of an electrode for electrolysis separating therefrom enables the characteristics of the anode and/or cathode to be renewed. Further, in the second method, a new membrane is arranged in combination, and thus, the characteristics of the membrane having characteristics deteriorated in association with operation can be renewed simultaneously.

Herein, "renewing the characteristics" means to have characteristics comparable to the initial characteristics possessed by the existing electrolyzer before being operated or to have characteristics higher than the initial characteristics.

In the production method of the third embodiment, the existing electrolyzer is assumed to be an "electrolyzer that has been already operated", and the new electrolyzer is assumed to be an "electrolyzer that has not been yet operated". That is, in the production method of the third embodiment, once an electrolyzer produced as a new electrolyzer is operated, the electrolyzer becomes "the existing electrolyzer in the third embodiment". Arrangement of an electrode for electrolysis (a further new membrane in the second method) in this existing electrolyzer provides "a new electrolyzer of the third embodiment".

Hereinafter, a case of performing common salt electrolysis by using an ion exchange membrane as the membrane is taken as an example, and one embodiment of the electrolyzer will be described in detail. However, in the third embodiment, the electrolyzer is not limited to use in common salt electrolysis but is also used in water electrolysis and fuel cells, for example.

Herein, unless otherwise specified, "the electrolyzer in the third embodiment" will be described as including both "the existing electrolyzer in the third embodiment" and "the new electrolyzer in the third embodiment".

The membrane in the existing electrolyzer and the new membrane can be equivalent in terms of the shape, material, and physical properties. Accordingly, herein, unless otherwise specified, "the membrane in the third embodiment" will be described as including both "the membrane in the existing electrolyzer in the third embodiment" and "the new membrane in the third embodiment".

[Electrolytic cell]

First, the electrolytic cell, which can be used as a constituent unit of the electrolyzer in the third embodiment, will be described.

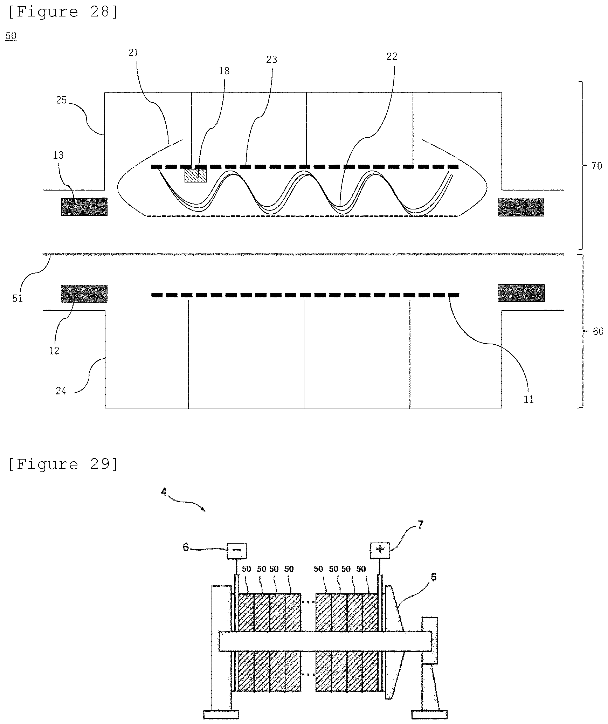

Figure 28 illustrates a cross-sectional view of an electrolytic cell 50.

As shown in Figure 28, the electrolytic cell 50 comprises a cation exchange membrane 51, an anode chamber 60 defined by the cation exchange membrane 51 and an anode frame 24, a cathode chamber 70 defined by the cation exchange membrane 51 and a cathode frame 25, an anode 11 placed in the anode chamber 60, and a cathode 21 placed in the cathode chamber 70, wherein the anode 11 is supported by the anode frame 24 and the anode 11 is supported by the cathode frame 25. Herein, a reference to the electrolytic cell frame includes the anode frame and the cathode frame. In Figure 28, for convenience of description, the cation exchange membrane 51, the anode frame 24, and the cathode frame 25 are shown spaced apart, but in a state where placed on the electrolyzer, these are in contact with one another.

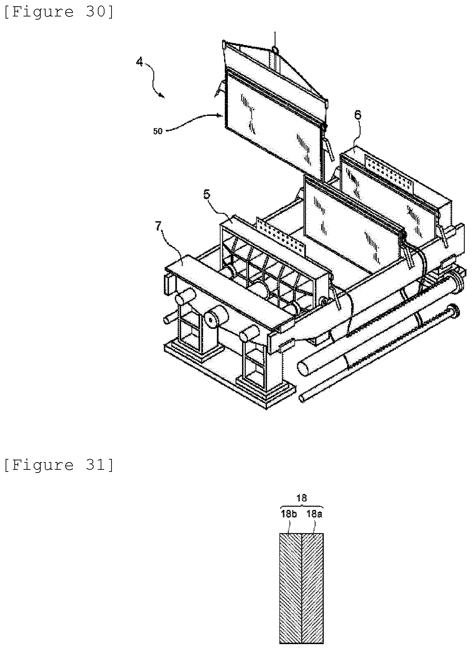

The electrolytic cell 50 can be configured to have, as required, a substrate 18a and a reverse current absorbing layer 18b formed on the substrate 18a and to comprise a reverse current absorber 18 (see Figure 31) placed in the cathode chamber. The anode 11 and the cathode 21 belonging to the electrolytic cell 50 are electrically connected to each other. In other words, the electrolytic cell 50 comprises the following cathode structure. In other words, the cathode structure comprises the cathode chamber 70, the cathode 21 placed in the cathode chamber 70, and the reverse current absorber 18 placed in the cathode chamber 70, the reverse current absorber 18 has the substrate 18a and the reverse current absorbing layer 18b formed on the substrate 18a, as shown in Figure 31, and the cathode 21 and the reverse current absorbing layer 18b are electrically connected. The cathode chamber 70 further has a collector 23 and a metal elastic body 22. The metal elastic body 22 is placed between the collector 23 and the cathode 21. The collector 23 is electrically connected to the cathode 21 via the metal elastic body 22. The cathode frame 25 is electrically connected to the collector 23. Accordingly, the cathode frame 25, the collector 23, the metal elastic body 22, and the cathode 21 are electrically connected. The cathode 21 and the reverse current absorbing layer 18b are electrically connected. The cathode 21 and the reverse current absorbing layer 18b may be directly connected or may be indirectly connected via the collector, the metal elastic body, the cathode frame, or the like. The entire surface of the cathode 21 is preferably covered with a catalyst layer for reduction reaction. The form of electrical connection may be a form in which the cathode frame 25 and the collector 23, and the collector 23 and the metal elastic body 22 are each directly attached and the cathode 21 is laminated on the metal elastic body 22. Examples of a method for directly attaching these constituent members to one another include welding and the like. Alternatively, the reverse current absorber 18, the cathode 21, and the collector 23 can be collectively referred to as a cathode structure.

Figure 29 shows an electrolyzer 4. Figure 30 shows a step of assembling the electrolyzer 4.

As shown in Figure 29, the electrolyzer 4 is composed of a plurality of electrolytic cells 50 connected in series. That is, the electrolyzer 4 is a bipolar electrolyzer comprising the plurality of electrolytic cells 50 arranged in series. As shown in Figures 29 to 30, the electrolyzer 4 is assembled by arranging the plurality of electrolytic cells 50 connected in series and coupling the cells by means of a press device 5.

The electrolyzer 4 has an anode terminal 7 and a cathode terminal 6 to be connected to a power supply. The anode 11 of the electrolytic cell 50 located at farthest end among the plurality of electrolytic cells 50 coupled in series in the electrolyzer 4 is electrically connected to the anode terminal 7. The cathode 21 of the electrolytic cell located at the end opposite to the anode terminal 7 among the plurality of electrolytic cells 2 coupled in series in the electrolyzer 4 is electrically connected to the cathode terminal 6. The electric current during electrolysis flows from the side of the anode terminal 7, through the anode and cathode of each electrolytic cell 50, toward the cathode terminal 6. At the both ends of the coupled electrolytic cells 50, an electrolytic cell having an anode chamber only (anode terminal cell) and an electrolytic cell having a cathode chamber only (cathode terminal cell) may be arranged. In this case, the anode terminal 7 is connected to the anode terminal cell arranged at the one end, and the cathode terminal 6 is connected to the cathode terminal cell arranged at the other end.

In the case of electrolyzing brine, brine is supplied to each anode chamber 60, and pure water or a low-concentration sodium hydroxide aqueous solution is supplied to each cathode chamber 70. Each liquid is supplied from an electrolyte solution supply pipe (not shown in Figure), through an electrolyte solution supply hose (not shown in Figure), to each electrolytic cell 50. The electrolyte solution and products from electrolysis are recovered from an electrolyte solution recovery pipe (not shown in Figure). During electrolysis, sodium ions in the brine migrate from the anode chamber 60 of the one electrolytic cell 50, through the cation exchange membrane 51, to the cathode chamber 70. Thus, the electric current during electrolysis flows in the direction in which the electrolytic cells 50 are coupled in series. That is, the electric current flows, through the cation exchange membrane 51, from the anode chamber 60 toward the cathode chamber 70. As the brine is electrolyzed, chlorine gas is generated on the side of the anode 11, and sodium hydroxide (solute) and hydrogen gas are generated on the side of the cathode 21.

(Anode chamber)

The anode chamber 60 has the anode 11 or anode feed conductor 11. The feed conductor herein referred to mean a degraded electrode (i.e., the existing electrode), an electrode having no catalyst coating, and the like. When the electrode for electrolysis in the third embodiment is inserted to the anode side, 11 serves as an anode feed conductor. When the electrode for electrolysis in the third embodiment is not inserted to the anode side, 11 serves as an anode. The anode chamber 60 preferably has an anode-side electrolyte solution supply unit that supplies an electrolyte solution to the anode chamber 60, a baffle plate that is arranged above the anode-side electrolyte solution supply unit so as to be substantially parallel or oblique to an anode frame 24, and an anode-side gas liquid separation unit that is arranged above the baffle plate to separate gas from the electrolyte solution including the gas mixed.

(Anode)

When the electrode for electrolysis in the third embodiment is not inserted to the anode side, an anode 11 is provided in the frame of the anode chamber 60 (i.e., the anode frame). As the anode 11, a metal electrode such as so-called DSA(R) can be used. DSA is an electrode including a titanium substrate of which surface is covered with an oxide comprising ruthenium, iridium, and titanium as components.
As the form, any of a perforated metal, nonwoven fabric, foamed metal, expanded metal, metal porous foil formed by electroforming, so-called woven mesh produced by knitting metal lines, and the like can be used.

(Anode feed conductor)

When the electrode for electrolysis in the third embodiment is inserted to the anode side, the anode feed conductor 11 is provided in the frame of the anode chamber 60. As the anode feed conductor 11, a metal electrode such as so-called DSA(R) can be used, and titanium having no catalyst coating can be also used. Alternatively, DSA having a thinner catalyst coating can be also used. Further, a used anode can be also used.
As the form, any of a perforated metal, nonwoven fabric, foamed metal, expanded metal, metal porous foil formed by electroforming, so-called woven mesh produced by knitting metal lines, and the like can be used.

(Anode-side electrolyte solution supply unit)

The anode-side electrolyte solution supply unit, which supplies the electrolyte solution to the anode chamber 60, is connected to the electrolyte solution supply pipe. The anode-side electrolyte solution supply unit is preferably arranged below the anode chamber 60. As the anode-side electrolyte solution supply unit, for example, a pipe on the surface of which aperture portions are formed (dispersion pipe) and the like can be used. Such a pipe is more preferably arranged along the surface of the anode 11 and parallel to the bottom of the electrolytic cell. This pipe is connected to an electrolyte solution supply pipe (liquid supply nozzle) that supplies the electrolyte solution into the electrolytic cell 50. The electrolyte solution supplied from the liquid supply nozzle is conveyed with a pipe into the electrolytic cell 50 and supplied from the aperture portions provided on the surface of the pipe to inside the anode chamber 60. Arranging the pipe along the surface of the anode 11 and parallel to the bottom 19 of the electrolytic cell is preferable because the electrolyte solution can be uniformly supplied to inside the anode chamber 60.

(Anode-side gas liquid separation unit)

The anode-side gas liquid separation unit is preferably arranged above the baffle plate. The anode-side gas liquid separation unit has a function of separating produced gas such as chlorine gas from the electrolyte solution during electrolysis. Unless otherwise specified, above means the right direction in the electrolytic cell 50 in Figure 28, and below means the left direction in the electrolytic cell 50 in Figure 28.
During electrolysis, produced gas generated in the electrolytic cell 50 and the electrolyte solution form a mixed phase (gas-liquid mixed phase), which is then emitted out of the system. Subsequently, pressure fluctuations inside the electrolytic cell 50 cause vibration, which may result in physical damage of the ion exchange membrane. In order to prevent this event, the electrolytic cell 50 in the third embodiment is preferably provided with an anode-side gas liquid separation unit to separate the gas from the liquid. The anode-side gas liquid separation unit is preferably provided with a defoaming plate to eliminate bubbles. When the gas-liquid mixed phase flow passes through the defoaming plate, bubbles burst to thereby enable the electrolyte solution and the gas to be separated. As a result, vibration during electrolysis can be prevented.

(Baffle plate)

The baffle plate is preferably arranged above the anode-side electrolyte solution supply unit and arranged substantially in parallel with or obliquely to the anode frame 24. The baffle plate is a partition plate that controls the flow of the electrolyte solution in the anode chamber 60. When the baffle plate is provided, it is possible to cause the electrolyte solution (brine or the like) to circulate internally in the anode chamber 60 to thereby make the concentration uniform. In order to cause internal circulation, the baffle plate is preferably arranged so as to separate the space in proximity to the anode 11 from the space in proximity to the anode frame 24. From such a viewpoint, the baffle plate is preferably placed so as to be opposed to the surface of the anode 11 and to the surface of the anode frame 24. In the space in proximity to the anode partitioned by the baffle plate, as electrolysis proceeds, the electrolyte solution concentration (brine concentration) is lowered, and produced gas such as chlorine gas is generated. This results in a difference in the gas-liquid specific gravity between the space in proximity to anode 11 and the space in proximity to the anode frame 24 partitioned by the baffle plate. By use of the difference, it is possible to promote the internal circulation of the electrolyte solution in the anode chamber 60 to thereby make the concentration distribution of the electrolyte solution in the anode chamber 60 more uniform.

Although not shown in Figure 28, a collector may be additionally provided inside the anode chamber 60. The material and configuration of such a collector may be the same as those of the collector of the cathode chamber mentioned below. In the anode chamber 60, the anode 11 per se may also serve as the collector.

(Anode frame)

The anode frame 24, in conjunction with the cation exchange membrane 51, defines the anode chamber 60. As the anode frame 24, one known as a separator for electrolysis can be used, and an example thereof includes a metal plate formed by welding a plate comprising titanium thereto.

(Cathode chamber)

In the cathode chamber 70, when the electrode for electrolysis in the third embodiment is inserted to the cathode side, 21 serves as a cathode feed conductor. When the electrode for electrolysis in the third embodiment is not inserted to the cathode side, 21 serves as a cathode. When a reverse current absorber is included, the cathode or cathode feed conductor 21 is electrically connected to the reverse current absorber. The cathode chamber 70, similarly to the anode chamber 60, preferably has a cathode-side electrolyte solution supply unit and a cathode-side gas liquid separation unit. Among the components constituting the cathode chamber 70, components similar to those constituting the anode chamber 60 will be not described.

(Cathode)

When the electrode for electrolysis in the third embodiment is not inserted to the cathode side, a cathode 21 is provided in the frame of the cathode chamber 70 (i.e., cathode frame). The cathode 21 preferably has a nickel substrate and a catalyst layer that covers the nickel substrate. Examples of the components of the catalyst layer on the nickel substrate include metals such as Ru, C, Si, P, S, Al, Ti, V, Cr, Mn, Fe, Co, Ni, Cu, Zn, Y, Zr, Nb, Mo, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals. Examples of the method for forming the catalyst layer include plating, alloy plating, dispersion/composite plating, CVD, PVD, pyrolysis, and spraying. These methods may be used in combination. The catalyst layer may have a plurality of layers and a plurality of elements, as required. The cathode 21 may be subjected to a reduction treatment, as required. As the substrate of the cathode 21, nickel, nickel alloys, and nickel-plated iron or stainless may be used.

As the form, any of a perforated metal, nonwoven fabric, foamed metal, expanded metal, metal porous foil formed by electroforming, so-called woven mesh produced by knitting metal lines, and the like can be used.

(Cathode feed conductor)

When the electrode for electrolysis in the third embodiment is inserted to the cathode side, a cathode feed conductor 21 is provided in the frame of the cathode chamber 70. The cathode feed conductor 21 may be covered with a catalytic component. The catalytic component may be a component that is originally used as the cathode and remains. Examples of the components of the catalyst layer include metals such as Ru, C, Si, P, S, Al, Ti, V, Cr, Mn, Fe, Co, Ni, Cu, Zn, Y, Zr, Nb, Mo, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals. Examples of the method for forming the catalyst layer include plating, alloy plating, dispersion/composite plating, CVD, PVD, pyrolysis, and spraying. These methods may be used in combination. The catalyst layer may have a plurality of layers and a plurality of elements, as required. Nickel, nickel alloys, and nickel-plated iron or stainless, having no catalyst coating may be used. As the substrate of the cathode feed conductor 21, nickel, nickel alloys, and nickel-plated iron or stainless may be used.

As the form, any of a perforated metal, nonwoven fabric, foamed metal, expanded metal, metal porous foil formed by electroforming, so-called woven mesh produced by knitting metal lines, and the like can be used.

(Reverse current absorbing layer)

A material having a redox potential less noble than the redox potential of the element for the catalyst layer of the cathode mentioned above may be selected as a material for the reverse current absorbing layer. Examples thereof include nickel and iron.

(Collector)

The cathode chamber 70 preferably comprises the collector 23. The collector 23 improves current collection efficiency. In the third embodiment, the collector 23 is a porous plate and is preferably arranged in substantially parallel to the surface of the cathode 21.

The collector 23 preferably comprises an electrically conductive metal such as nickel, iron, copper, silver, and titanium. The collector 23 may be a mixture, alloy, or composite oxide of these metals. The collector 23 may have any form as long as the form enables the function of the collector and may have a plate or net form.

(Metal elastic body)

Placing the metal elastic body 22 between the collector 23 and the cathode 21 presses the cathode 21 onto the ion exchange membrane 51 to reduce the distance between the anode 11 and the cathode 21. Then, it is possible to lower the voltage to be applied entirely across the plurality of electrolytic cells 50 connected in series. Lowering of the voltage enables the power consumption to be reduced. With the metal elastic body 22 placed, the pressing pressure caused by the metal elastic body 22 enables the electrode for electrolysis to be stably maintained in place when the laminate including the electrode for electrolysis and a new membrane in the third embodiment is placed in the electrolytic cell.

As the metal elastic body 22, spring members such as spiral springs and coils and cushioning mats may be used. As the metal elastic body 22, a suitable one may be appropriately employed, in consideration of a stress to press the ion exchange membrane and the like. The metal elastic body 22 may be provided on the surface of the collector 23 on the side of the cathode chamber 70 or may be provided on the surface of the anode frame 24 on the side of the anode chamber 60. Both the chambers are usually partitioned such that the cathode chamber 70 becomes smaller than the anode chamber 60. Thus, from the viewpoint of the strength of the frame and the like, the metal elastic body 22 is preferably provided between the collector 23 and the cathode 21 in the cathode chamber 70. The metal elastic body 22 preferably comprises an electrically conductive metal such as nickel, iron, copper, silver, and titanium.

(Cathode frame)

The cathode frame 25, in conjunction with the cation exchange membrane 51, defines the cathode chamber 70. As the cathode frame 25, one known as a separator for electrolysis can be used, and an example thereof includes a metal plate formed by welding a plate comprising nickel thereto.

(Anode side gasket and cathode side gasket)

The anode side gasket 12 is preferably arranged on the surface of the anode frame 24 constituting the anode chamber 60. The cathode side gasket 13 is preferably arranged on the surface of the cathode frame 25 constituting the cathode chamber 70. The anode frame 24 and the cathode frame 25 are integrated such that the anode side gasket 12 and the cathode side gasket 13 included in the electrolytic cell 50 sandwich the cation exchange membrane 51 (see Figure 28). These gaskets can impart airtightness to connecting points during the integration described above.

The gaskets form a seal between the ion exchange membrane and electrolytic cells. Specific examples of the gaskets include picture frame-like rubber sheets at the center of which an aperture portion is formed. The gaskets are required to have resistance against corrosive electrolyte solutions or produced gas and be usable for a long period. Thus, in respect of chemical resistance and hardness, vulcanized products and peroxide-crosslinked products of ethylene-propylene-diene rubber (EPDM rubber) and ethylene-propylene rubber (EPM rubber) are usually used as the gaskets. Alternatively, gaskets of which region to be in contact with liquid (liquid contact portion) is covered with a fluorine-containing resin such as polytetrafluoroethylene (PTFE) and tetrafluoroethylene-perfluoroalkyl vinyl ether copolymers (PFA) may be employed as required. These gaskets each may have an aperture portion so as not to inhibit the flow of the electrolyte solution, and the shape of the aperture portion is not particularly limited. For example, a picture frame-like gasket is attached with an adhesive or the like along the peripheral edge of each aperture portion of the anode frame 24 constituting the anode chamber 60 or the cathode frame 25 constituting the cathode chamber 70. For example, when the anode frame 24 and the cathode frame 25 are connected via the cation exchange membrane 51 (see Figure 28), the surfaces onto each of which the anode frame 24 or the cathode frame 25 is attached should be tightened so as to sandwich the cation exchange membrane 51. This tightening can prevent the electrolyte solution, alkali metal hydroxide, chlorine gas, hydrogen gas, and the like generated from electrolysis from leaking out of the electrolytic cells 50.

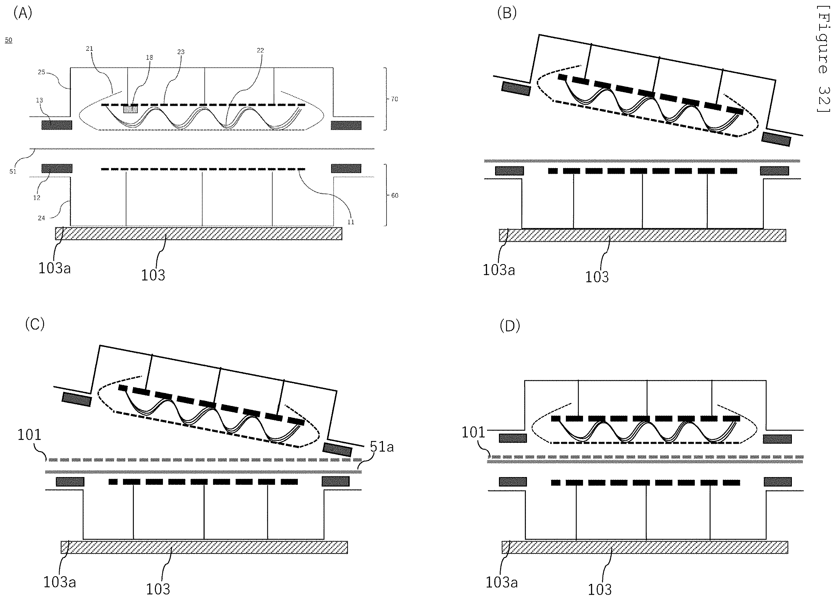

Hereinbelow, the steps in the production method of the third embodiment will be described in reference to Figures 32(A) to (D). First, the steps (A1) to (C1) in the first method will be described in detail.

(Step (A1))

The step (A1) in the third embodiment is a step of releasing the integration of the anode frame and the cathode frame to expose the membrane.

Figure 32(A), as Figure 28, illustrates the electrolytic cell 50, and in this state, the anode frame 24 and the cathode frame 25 are integrated. In other words, the anode 11, the cathode 21, and the cation exchange membrane 51 are stored in the electrolytic cell frame. The integration here is not particularly limited, and examples thereof include a method including superposing the anode frame 24 and the cathode frame 25, sandwiching the superposed ends thereof between stainless plates having bolt holes made in advance, and fixing the frames by bolting. In the example described above, the bolting is released from the state shown in Figure 32(A) to thereby release the integration, and the cathode frame 25 is lifted to separate the cathode frame 25 from the anode frame 24 thereby achieve the state shown in Figure 32(B). In the state of Figure 32(B), the cation exchange membrane 51 is exposed (step (A1)).

(Step (B1))

The step (B1) in the third embodiment is a step of arranging the electrode for electrolysis on at least one of the surfaces of the membrane after the step (A1).

Figure 32(C) illustrates an example in which an electrode for electrolysis 101 is arranged on the exposed surface of cation exchange membrane 51 (exposed surface). In this case, the electrode for electrolysis 101 serves as the cathode. The step (B1) is not limited to the example, and the electrode for electrolysis 101 may be arranged on the surface opposite to the exposed surface of the cation exchange membrane 51 (opposite surface).

In this case, the electrode for electrolysis 101 serves as an anode. Alternatively, the electrode for electrolysis 101 may be arranged both on the exposed surface and the opposite surface of the cation exchange membrane 51. In this case, the electrode for electrolysis 101 on the exposed surface serves as the cathode, and the electrode for electrolysis 101 on the opposite surface serves as the anode.

(Step (C1))

The step (C1) in the third embodiment is a step of integrating the anode frame and the cathode frame after the step (B1) to store the anode, the cathode, the membrane, and the electrode for electrolysis into the electrolytic cell frame. The integration described above is not particularly limited, and examples thereof include a method including superposing the anode frame 24 and the cathode frame 25, sandwiching the superposed ends thereof between stainless plates having bolt holes made in advance, and fixing the frames by bolting. This integration results in the state shown in Figure 32(D).

Figure 32(D) illustrates an example in which an electrode for electrolysis 101 is arranged on the exposed surface of cation exchange membrane 51. In this case, the cathode 21 serves as a feed conductor. The step (C1) is not limited to the example, and the electrode for electrolysis 101 may be arranged on the surface opposite to the exposed surface of the cation exchange membrane 51 (opposite surface). In this case, the anode 11 serves as the feed conductor. Alternatively, the electrode for electrolysis 101 may be arranged both on the exposed surface and the opposite surface of the cation exchange membrane 51. In this case, the anode 11 and the cathode 21 each serve as the feed conductor.

Figure 32 illustrates an example in which the anode frame 24 is disposed on the lower side and the cathode frame 25 is disposed on the upper side, that is, an example in which the anode frame 24 is mounted on a platform 103, but the arrangement is not limited to the positional relation. The positional relationship between the anode frame 24 and the cathode frame 25 may be reversed, that is, the cathode frame 25 may be mounted on the platform 103. In this case, after the step (A1), the membrane exists on the cathode.

Subsequently, the second method will be described in detail.

(Step (A2))

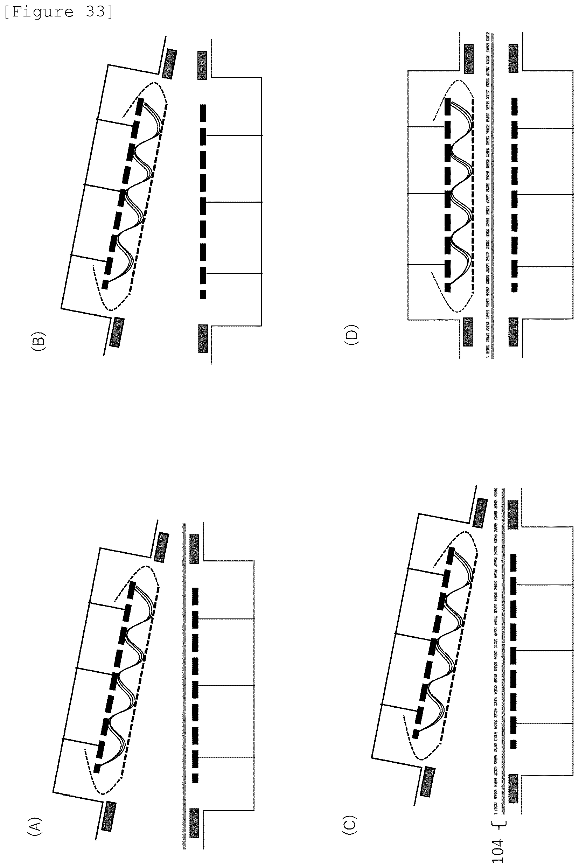

The step (A2) in the third embodiment is a step of releasing the integration of the anode frame and the cathode frame to expose the membrane. This step can be conducted similarly to the step (A1) described above and can achieve, for example, the state shown in Figure 33(A) (same as the case where the electrolytic cell having the same configuration as shown in Figure 32(A) is brought into the state shown in Figure 32(B)).

(Step (B2))

The step (B2) in the third embodiment is a step of removing the membrane after the step (A2) and arranging the electrode for electrolysis and new membrane on the anode or cathode. In the third embodiment, the electrode for electrolysis and the new membrane may be separately provided and each disposed on the anode or cathode. Alternatively, the electrode for electrolysis and the new membrane may be simultaneously disposed as a laminate on the anode or cathode.

An example using the laminate will be described. First, in the state shown in Figure 33(A), the ion exchange membrane 51 is removed to thereby achieve the state shown in Figure 33(B). Then, a laminate 104 composed of the electrode for electrolysis and new membrane is arranged on the anode 11 to thereby achieve the state shown in Figure 33(C).

(Step (C2))

The step (C2) in the third embodiment is a step of integrating the anode frame and the cathode frame to store the anode, the cathode, the membrane, the electrode for electrolysis, and the new membrane into the electrolytic cell frame. This step can be conducted similarly to the step (C1) described above. For example, from the state shown in Figure 33(C), by a method including superposing the anode frame 24 and the cathode frame 25, sandwiching the superposed ends thereof between stainless plates having bolt holes made in advance, and fixing the frames by bolting or the like, the anode, the cathode, the membrane, the electrode for electrolysis, and the new membrane are stored in the electrolytic cell frame to thereby achieve the state shown in Figure 33(D).

Figure 33 illustrates an example in which the anode frame 24 is disposed on the lower side and the cathode frame 25 is disposed on the upper side, but the arrangement is not limited to the positional relation. The positional relation between the anode frame 24 and the cathode frame 25 may be reversed. In this case, the membrane, on being subjected to the step (A2), exists on the cathode.

Hereinbelow, preferred aspects that may be employed with respect to both the first method and the second method will be described.

In the third embodiment, the electrode for electrolysis and/or the membrane are/is preferably moistened with a liquid before the step (B1). Similarly, the electrode for electrolysis and/or the membrane are/is preferably moistened with a liquid before the step (B2). This allows the electrode for electrolysis to tend to be easily fixed on the membrane in the step (B1) or step (B2). As the liquid described above, any liquid, such as water and organic solvents, can be used as long as the liquid generates a surface tension. The larger the surface tension of the liquid, the larger the force applied between the new membrane and the electrode for electrolysis. Thus, a liquid having a larger surface tension is preferred. Examples of the liquid include the following (the numerical value in the parentheses is the surface tension of the liquid at 20°C): hexane (20.44 mN/m), acetone (23.30 mN/m), methanol (24.00 mN/m), ethanol (24.05 mN/m), ethylene glycol (50.21 mN/m), and water (72.76 mN/m).

With a liquid having a large surface tension, the membrane and the electrode for electrolysis are more likely to be integrated, and in the step (B1) or step (B2), the electrode for electrolysis tends to be more easily fixed on the membrane. The liquid between the membrane and the electrode for electrolysis may be present in an amount such that the both adhere to each other by the surface tension. As a result, the liquid, if mixed into the electrolyte solution during operation of the electrolyzer, does not affect electrolysis per se due to the small amount of the liquid.

From a practical viewpoint, a liquid having a surface tension of 24 mN/m to 80 mN/m, such as ethanol, ethylene glycol, and water, is preferably used as the liquid. Particularly preferred is water or an alkaline aqueous solution prepared by dissolving caustic soda, potassium hydroxide, lithium hydroxide, sodium hydrogen carbonate, potassium hydrogen carbonate, sodium carbonate, potassium carbonate, or the like in water. Alternatively, the surface tension can be adjusted by allowing these liquids to contain a surfactant. When a surfactant is contained, the adhesion between the membrane and the electrode for electrolysis varies to enable the handling property to be adjusted. The surfactant is not particularly limited, and both ionic surfactants and nonionic surfactants may be used.

In the third embodiment, from the viewpoint of more easily fixing the electrode for electrolysis on the membrane, it is preferred that the amount of the aqueous solution applied on the electrode for electrolysis per unit area be appropriately adjusted in the range of 1 to 1000 $g/m^2$. The amount deposited described above can be measured by a method described in Example mentioned below.

In the step (B1) in the third embodiment, the mounting surface for membrane of the electrode for electrolysis is preferably present at an angle of 0° or more and less than 90° with respect to the horizontal plane. Similarly, in the step (B2), the mounting surface for membrane of the electrode for electrolysis is preferably present at an angle of 0° or more and less than 90° with respect to the horizontal plane.

In the example of Figure 32(A), the electrolytic cell 50 of the third embodiment is mounted on the platform 103. More specifically, the electrolytic cell 50 is mounted on an electrolytic cell mounting surface 103a on the platform 103. Typically, the electrolytic cell mounting surface 103a of the platform 103 is parallel to the horizontal plane (the plane perpendicular to the direction of gravity), and the mounting surface 103a can be regarded as the horizontal plane. In the example of Figure 32(C), the mounting surface 51a of the electrode for electrolysis 101 on the ion exchange membrane 51 is parallel to the electrolytic cell mounting surface 103a of the platform 103. In this example, the mounting surface for membrane of the electrode for electrolysis is present at an angle of 0° with respect to the horizontal plane. The mounting surface 51a of the electrode for electrolysis 101 on the ion exchange membrane 51 may be inclined with respect to the electrolytic cell mounting surface 103a on the platform 103, but the surface is inclined preferably at an angle of 0° or more and less than 90° as described above. The same applies to the step (B2).

From the viewpoint described above, the mounting surface for membrane of the electrode for electrolysis is preferably present at an angle of 0° to 60°, more preferably at an angle of 0° to 30° with respect to the horizontal plane.

In the step (B1) in the third embodiment, the electrode for electrolysis is preferably mounted on the surface of the membrane to thereby flatten the electrode for electrolysis. Similarly, in the step (B2) in the third embodiment, it is preferred that the electrode for electrolysis be mounted on the anode or cathode and the new membrane be mounted on the electrode for electrolysis to thereby flatten the new membrane.

On conducting the flattening described above, a flattening section can be used. In the step (B1) and step (B2), the contact pressure of the flattening device on the new membrane is preferably adjusted in an appropriate range. For example, a value obtained by measuring with a method described in Example mentioned below is preferably in the range of 0.1 gf/cm$^2$ to 1000 gf/cm$^2$.

In the step (B1) in the third embodiment, the electrode for electrolysis is preferably positioned such that the conducting surface on the membrane is covered with the electrode for electrolysis. Here, the "conducting surface", in the surface of the membrane, corresponds to a portion designed so as to allow electrolytes to migrate between the anode chamber and the cathode chamber.

From the similar viewpoint, in the step (B2) in the third embodiment, when the electrode for electrolysis and the new membrane are separately provided and each disposed on the anode or cathode, the electrode for electrolysis is preferably positioned such that the conducting surface on the membrane is covered with the electrode for electrolysis. In step (B2), when the electrode for electrolysis and the new membrane are simultaneously disposed as a laminate on the anode or cathode, the electrode for electrolysis is preferably positioned such that conducting surface on the membrane is covered with the electrode for electrolysis during lamination.

In the step (B1) in the third embodiment, a wound body, which is obtained by winding the electrode for electrolysis, is preferably used.

Examples of a step in which a wound body is used are not limited to the following, but it is preferred that, in the example shown in Figure 32(B), a wound body be arranged on the ion exchange membrane 51, then, the wound state of the wound body be released on the ion exchange membrane 51, and the electrode for electrolysis 101 be arranged on the ion exchange membrane 51 as in Figure 32(C). In the third embodiment, the electrode for electrolysis as-is may be wound to form a wound body or the electrode for electrolysis is wound around a core to form a wound body. As the core that may be used here, which is not particularly limited, a member having a substantially cylindrical form and having a size corresponding to the electrode for electrolysis can be used, for example. The electrode for electrolysis used as the wound body as described above is not particularly limited as long as the electrode is woundable. As the material, form, and the like of the electrode for electrolysis, those suitable for forming a wound body may be appropriately selected, in consideration of the step of using a wound body in the third embodiment, the configuration of the electrolyzer, and the like. Specifically, an electrode for electrolysis of a preferred aspect described below can be used.

Similarly as described above, in the step (B2), a wound body obtained by winding the electrode for electrolysis or a laminate composed of the electrode for electrolysis and a new membrane is preferably used.

[Laminate]

As described above, the electrode for electrolysis in the third embodiment can be combined with a membrane such as an ion exchange membrane or a microporous membrane and used as a laminate. That is, the laminate in the third embodiment comprises the electrode for electrolysis and a membrane. A new laminate in the third embodiment, which includes a new electrode for electrolysis and a new membrane, is not particularly limited as long as the laminate is separate from the existing laminate in the existing electrolyzer as described above and can have the same configuration as that of the laminate.

[Electrode for electrolysis]

In the third embodiment, the electrode for electrolysis, which is not particularly limited, preferably can constitute a laminate with a membrane as described above and is also preferably used as a wound body. The electrode for electrolysis may be an electrode that serves as the cathode in the electrolyzer or may be an electrode that serves as an anode. As the material, form, physical properties, and the like of the electrode for electrolysis, those suitable may be appropriately selected, in consideration of the steps in the production method of the third embodiment, the configuration of the electrolyzer, and the like. The electrodes for electrolysis described in the first embodiment and the second embodiment can be preferably employed in the third embodiment, but these are merely preferred exemplary aspects. Electrodes for electrolysis other than the electrodes for electrolysis described in the first embodiment and the second embodiment can be appropriately employed.

[Membrane]

In the third embodiment, the membrane, which is not particularly limited, preferably can constitute a laminate with the electrode for electrolysis as described above or is also preferably used as a wound body when formed into a laminate. As the material, form, physical properties, and the like of the membrane, those suitable may be appropriately selected, in consideration of the steps in the production method of the third embodiment, the configuration of the electrolyzer, and the like. Specifically, the membranes described in the first embodiment and the second embodiment can be preferably employed in the third embodiment, but these are merely preferred exemplary aspects. Membranes other than the membranes described in the first embodiment and the second embodiment also can be appropriately employed.

Examples

The present embodiments will be described in further detail with reference to Examples and Comparative Examples below, but the present embodiments are not limited to Examples below in any way.

<Verification of first embodiment>

As will be described below, Experiment Examples according to the first embodiment (in the section of <Verification of first embodiment> hereinbelow, simply referred to as "Examples") and Experiment Examples not according to the first embodiment (in the section of <Verification of first embodiment> hereinbelow, simply referred to as "Comparative Examples") were provided, and evaluated by the following method.

[Laminate for use in Examples and Comparative Examples]

(Membrane)

As the membrane for use in production of the laminate, an ion exchange membrane A produced as described below was used.

As reinforcement core materials, 90 denier monofilaments made of polytetrafluoroethylene (PTFE) were used (hereinafter referred to as PTFE yarns). As the sacrifice yarns, yarns obtained by twisting six 35 denier filaments of polyethylene terephthalate (PET) 200 times/m were used (hereinafter referred to as PET yarns). First, in each of the TD and the MD, the PTFE yarns and the sacrifice yarns were plain-woven with 24 PTFE yarns/inch so that two sacrifice yarns were arranged between adjacent PTFE yarns, to obtain a woven fabric. The resulting woven fabric was pressure-bonded by a roll to obtain a reinforcing material as a woven fabric having a thickness of 70 $\mu$m.

Next, a resin A of a dry resin that is a copolymer of $CF_2=CF_2$ and $CF_2=CFOCF_2CF(CF_3)OCF_2CF_2COOCH_3$ and has an ion exchange capacity of 0.85 mg equivalent/g, and a resin B of a dry resin that is a copolymer of $CF_2=CF_2$ and $CF_2=CFOCF_2CF(CF_3)OCF_2CF_2SO_2F$ and has an ion exchange capacity of 1.03 mg equivalent/g were provided.

Using these resins A and B, a two-layer film X in which the thickness of a resin A layer is 15 $\mu$m and the thickness of a resin B layer was 84 $\mu$m is obtained by a coextrusion T die method. Using only the resin B, a single-layer film Y having a thickness of 20 $\mu$m was obtained by a T die method.

Subsequently, release paper (embossed in a conical shape having a height of 50 $\mu$m), the film Y, a reinforcing material, and the film X were laminated in this order on a hot plate having a heat source and a vacuum source inside and having micropores on its surface, heated and depressurized under the conditions of a hot plate surface temperature of 223°C and a degree of reduced pressure of 0.067 MPa for 2 minutes, and then the release paper was removed to obtain a composite membrane. The film X was laminated such that the resin B was positioned as the lower surface.

The resulting composite membrane was immersed in an aqueous solution at 80°C comprising 30% by mass of dimethyl sulfoxide (DMSO) and 15% by mass of potassium hydroxide (KOH) for 20 minutes for saponification. Then, the composite membrane was immersed in an aqueous solution at 50°C comprising 0.5 N sodium hydroxide (NaOH) for 1 hour to replace the counterion of the ion exchange group by Na, and then washed with water. Thereafter, the surface on the side of the resin B was polished with a relative speed between a polishing roll and the membrane set to 100 m/minute and a press amount of the polishing roll set to 2 mm to form opening portions. Then, the membrane was dried at 60°C.

Further, 20% by mass of zirconium oxide having a primary particle size of 1 $\mu$m was added to a 5% by mass ethanol solution of the acid-type resin of the resin B and dispersed to prepare a suspension, and the suspension was sprayed onto both the surfaces of the above composite membrane by a suspension spray method to form coatings of zirconium oxide on the surfaces of the composite membrane to obtain an ion exchange membrane A as the membrane.

The coating density of zirconium oxide measured by fluorescent X-ray measurement was 0.5 mg/cm$^2$. Here, the average particle size was measured by a particle size analyzer (manufactured by SHIMADZU CORPORATION, "SALD(R) 2200").

(Electrode for electrolysis)

As the electrode for electrolysis, one described below was used.

A nickel foil having a width of 280 mm, a length of 2500 mm, and a thickness of 22 $\mu$m was provided.

One surface of this nickel foil was subjected to roughening treatment by means of nickel plating.

The arithmetic average roughness Ra of the roughened surface was 0.95 $\mu$m.

For surface roughness measurement herein, a probe type surface roughness measurement instrument SJ-310 (Mitutoyo Corporation) was used.

A measurement sample was placed on the surface plate parallel to the ground surface to measure the arithmetic average roughness Ra under measurement conditions as described below. The measurement was repeated 6 times, and the average value was listed.

 <Probe shape> conical taper angle = 60°, tip radius = 2 $\mu$m, static measuring force = 0.75 mN
 <Roughness standard> JIS2001
 <Evaluation curve> R
 <Filter> GAUSS
 <Cutoff value $\lambda c$> 0.8 mm
 <Cutoff value $\lambda s$> 2.5 $\mu$m
 <Number of sections> 5
 <Pre-running, post-running> available

A porous foil was formed by perforating this nickel foil with circular holes having a diameter of 1 mm by punching. The opening ratio was 44%.

A coating liquid for use in forming an electrode catalyst was prepared by the following procedure.

A ruthenium nitrate solution having a ruthenium concentration of 100 g/L (FURUYA METAL Co., Ltd.) and cerium nitrate (KISHIDA CHEMICAL Co., Ltd.) were mixed such that the molar ratio between the ruthenium element and the cerium element was 1:0.25. This mixed solution was sufficiently stirred and used as a cathode coating liquid.

A vat containing the above coating liquid was placed at the lowermost portion of a roll coating apparatus. The vat was placed such that a coating roll formed by winding rubber made of closed-cell type foamed ethylene-propylene-diene rubber (EPDM) (INOAC CORPORATION, E-4088, thickness 10 mm) around a polyvinyl chloride (PVC) cylinder was always in contact with the coating liquid. A coating roll around which the same EPDM had been wound was placed at the upper portion thereof, and a PVC roller was further placed thereabove.

The coating liquid was applied by allowing the substrate for electrode for electrolysis to pass between the second coating roll and the PVC roller at the uppermost portion (roll coating method). Then, after drying at 50°C for 10 minutes, preliminary baking at 150°C for 3 minutes, and baking at 350°C for 10 minutes were performed. A series of these coating, drying, preliminary baking, and baking operations was repeated until a predetermined amount of coating was achieved.

The thickness of the electrode for electrolysis produced was 29 $\mu$m. The thickness of the catalytic layer containing ruthenium oxide and cerium oxide, which was determined by subtracting the thickness of the substrate for electrode for electrolysis from the thickness of the electrode for electrolysis, was 7 $\mu$m.

The coating was formed also on the surface not roughened.

[Evaluation on electrolytic performance of laminate]

The electrolytic performance was evaluated by the following electrolytic experiment.

A titanium anode cell having an anode chamber in which an anode was provided and a cathode cell having a nickel cathode chamber in which a cathode was provided were oppositely disposed. A pair of gaskets was arranged between the cells, and a measurement sample laminate, obtained by cutting the laminate produced in each of Examples and Comparative Examples described below into a 170 mm square, was sandwiched between the pair of the gaskets.

Then, the anode cell, the gasket, the ion exchange membrane, the gasket, and the cathode were brought into close contact together to obtain an electrolytic cell.

The anode was produced by applying a mixed solution of ruthenium chloride, iridium chloride, and titanium tetrachloride onto a titanium substrate subjected to blasting and acid etching treatment as the pretreatment, followed by drying and baking.

The anode was fixed in the anode chamber by welding.

As the collector of the cathode chamber, a nickel expanded metal was used. The collector had a size of 95 mm in length $\times$ 110 mm in width.

As a metal elastic body, a mattress formed by knitting nickel fine wire was used. The mattress as the metal elastic body was placed on the collector. Nickel mesh formed by plain-weaving nickel wire having a diameter of 150 $\mu$m in a sieve mesh size of 40 was placed thereover, and a string made of Teflon(R) was used to fix the four corners of the Ni mesh to the collector. This Ni mesh was used as a feed conductor.

This electrolytic cell has a zero-gap structure by use of the repulsive force of the mattress as the metal elastic body.

As the gaskets, ethylene-propylene-diene (EPDM) rubber gaskets were used.

The above electrolytic cell was used to perform electrolysis of common salt.

The brine concentration (sodium chloride concentration) in the anode chamber was adjusted to 205 g/L.

The sodium hydroxide concentration in the cathode chamber was adjusted to 32% by mass.

The temperature each in the anode chamber and the cathode chamber was adjusted such that the temperature in each electrolytic cell reached 90°C.

Common salt electrolysis was performed at a current density of 6 kA/m$^2$ to measure the voltage, current efficiency, and common salt concentration in caustic soda.

As the common salt concentration in caustic soda, a value obtained by converting the caustic soda concentration on the basis of 50% was shown.

[Example 1-1]

A roll for electrode and a roll for membrane, each of which was a wound body, were produced in advance as follows.

First, an ion exchange membrane having a width of 300 mm and a length of 2800 mm, as the membrane, was provided in accordance with the method mentioned above.

Additionally, an electrode for electrolysis having a thickness of 29 $\mu$m, a width of 280 mm, and a length of 2500 mm was provided in accordance with the method mentioned above.

After the ion exchange membrane was immersed in pure water for a whole day and night, the membrane was wound around a polyvinyl chloride (PVC) pipe having an outer diameter of 76 mm and a width of 400 mm such that the carboxylic acid layer side was positioned outside to produce a wound body.

Similarly, the electrode was also wound around a PVC pipe having an outer diameter of 76 mm and a width of 400 mm such that the surface subjected to roughening treatment was positioned outside to produce a wound body.

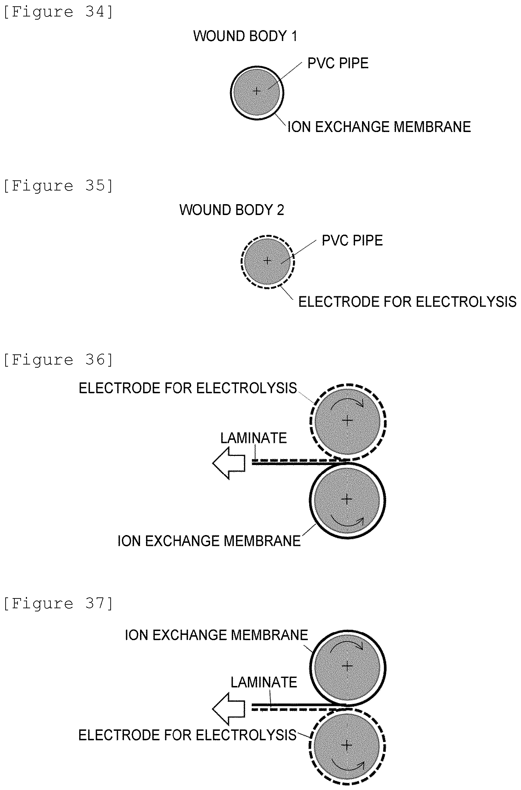

Thus, produced were a wound body of the ion exchange membrane (solid line) (wound body 1) shown in Figure 34 and a wound body of the electrode for electrolysis (dashed line) (wound body 2) shown in Figure 35.

While the wound body 1 and the wound body 2 were disposed as shown in Figure 36, the electrode for electrolysis and the ion exchange membrane were simultaneously rolled out to thereby produce a laminate.

The electrode for electrolysis was laminated on the ion exchange membrane so as to stick to the ion exchange membrane by the surface tension of water deposited on the ion exchange membrane.

The rolled-out length was 2800 mm, but it was possible to produce the laminate easily without wrinkles and folding.

A 170 mm square-sized sample for evaluation of electrolytic performance was cut from the laminate produced in Example 1-1 and subjected to electrolysis evaluation.

The sample was set such that the surface of the electrode for electrolysis of the laminate was positioned on the cathode feed conductor side.

The evaluation results of the electrolytic performance were shown in Table 1 below.

[Example 1-2]

A wound body 1 and a wound body 2 equivalent to those in Example 1-1 were provided.

While the wound body 1 and the wound body 2 were disposed as shown in Figure 37 by reversing the arrangement of the wound bodies in Example 1-1, the electrode for electrolysis and the ion exchange membrane were simultaneously rolled out to thereby produce a laminate.

The electrode for electrolysis was laminated on the ion exchange membrane so as to stick to the ion exchange membrane by the surface tension of water deposited on the ion exchange membrane.

The rolled-out length was 2800 mm, but it was possible to produce the laminate easily without wrinkles and folding. The electrode for electrolysis did not come off.

[Example 1-3]

A wound body 1 and a wound body 2 equivalent to those in Example 1-1 were provided. However, in the wound body 2, the surface subjected to roughening treatment was positioned inside.

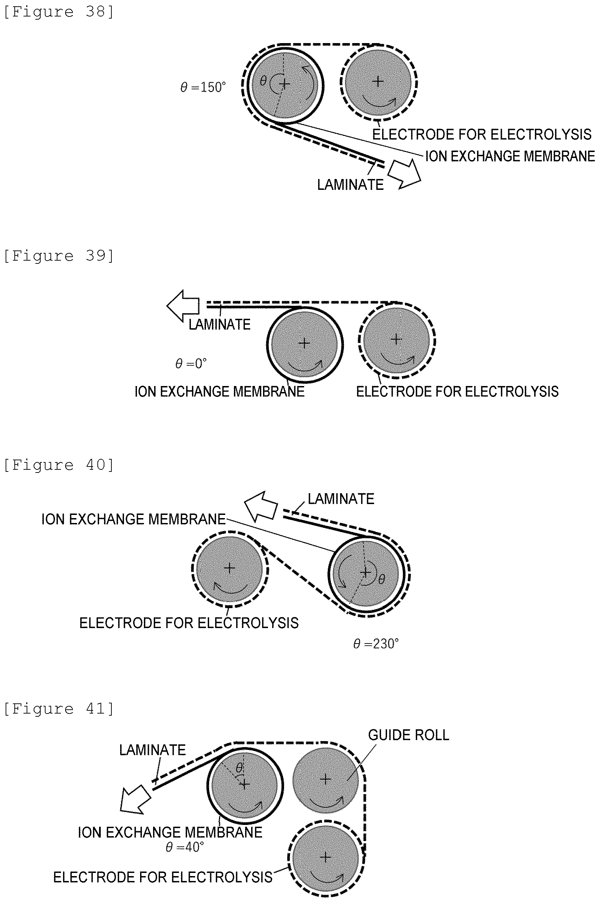

While the wound body 1 and the wound body 2 were disposed horizontally as shown in Figure 38 and the wrap angle of the electrode for electrolysis with respect to the roll for membrane was set to about 150°, the electrode for electrolysis and the ion exchange membrane were simultaneously rolled out to thereby produce a laminate.

The electrode for electrolysis was laminated on the ion exchange membrane so as to stick to the ion exchange membrane by the surface tension of water deposited on the ion exchange membrane.

The rolled-out length was 2800 mm, but it was possible to produce the laminate cleanly without wrinkles and folding.

Even when the wrap angle of the electrode for electrolysis was set to 0° as in Figure 39, the electrode was laminated on the ion exchange membrane so as to stick to the ion exchange membrane by the surface tension of water deposited on the ion exchange membrane

The rolled-out length was 2800 mm, but it was possible to produce the laminate easily without wrinkles and folding.

Even when the positions of the wound body 1 and the wound body 2 were reversed in Figure 38 and Figure 39, it was possible to produce the laminate easily. However, when the positions were reversed, the carboxylic acid layer side was positioned outside in the wound body 1.

[Example 1-4]

A wound body 1 and a wound body 2 were provided in the same manner as in Example 1-1.

While the wound body 1 and the wound body 2 were disposed horizontally as shown in Figure 40 and the wrap angle of the electrode for electrolysis with respect to the roll for membrane was set to about 230°, which was not less than 180°, the electrode for electrolysis and the ion exchange membrane were simultaneously rolled out to thereby produce a laminate.

The electrode for electrolysis was laminated on the ion exchange membrane so as to stick to the ion exchange membrane by the surface tension of water deposited on the ion exchange membrane.

The rolled-out length was 2800 mm, but it was possible to produce the laminate easily without wrinkles and folding.

Even when the positions of the wound body 1 and the wound body 2 were reversed in Figure 40, it was possible to produce the laminate easily. However, when the positions were reversed, the carboxylic acid layer side was positioned outside in the wound body 1.

[Example 1-5]

A wound body 1 and a wound body 2 were provided in the same manner as in Example 1-1. However, the surface subjected to roughening treatment of the wound body 2 was positioned inside.

In this Example 1-5, a polyvinyl chloride (PVC) pipe having an outer diameter of 76 mm and a width of 400 mm (equivalent to the PVC pipe used in the wound bodies 1 and 2) was further provided as a guide roll.

While the wound body 1 and the wound body 2 were disposed as shown in Figure 41, the electrode for electrolysis was delivered through the guide roll and the electrode for electrolysis and the ion exchange membrane were simultaneously rolled out to thereby produce a laminate.

The electrode for electrolysis was laminated on the ion exchange membrane so as to stick to the ion exchange membrane by the surface tension of water deposited on the ion exchange membrane.

The rolled-out length was 2800 mm, but it was possible to produce the laminate cleanly without wrinkles and folding.

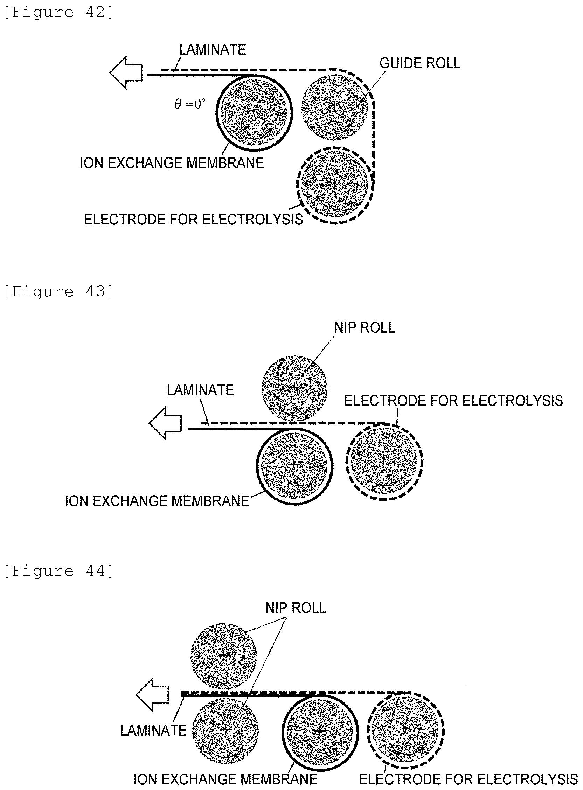

Even when the wrap angle was set to 0° as shown in Figure 42, it was possible to produce the laminate easily without wrinkles and folding.

Even when the positions of the wound body 1 and the wound body 2 were reversed in Figure 41 and Figure 42, it was possible to produce the laminate easily. However, when the positions were reversed, the carboxylic acid layer side was positioned outside in the wound body 1.

[Example 1-6]

A wound body 1 and a wound body 2 were provided in the same manner as in Example 1-1. However, in the wound body 2, the surface subjected to roughening treatment was positioned inside.

In this Example 1-6, a polyvinyl chloride (PVC) pipe having an outer diameter of 76 mm and a width of 400 mm (equivalent to the PVC pipe used in the wound bodies 1 and 2) was further provided as a nip roll.

While the wound body 1 and the wound body 2 were disposed as shown in Figure 43, the electrode for electrolysis was delivered through the nip roll and the electrode for electrolysis and the ion exchange membrane were simultaneously rolled out to thereby produce a laminate.

The electrode for electrolysis was laminated on the ion exchange membrane so as to stick to the ion exchange membrane by the surface tension of water deposited on the ion exchange membrane.

The rolled-out length was 2800 mm, but it was possible to produce the laminate easily without wrinkles and folding.

Even when the positions of the wound body 1 and the wound body 2 were reversed in Figure 43, it was possible to produce the laminate easily. However, the carboxylic acid layer side was positioned outside in the wound body 1.

[Example 1-7]

A wound body 1 and a wound body 2 were provided in the same manner as in Example 1-1. However, in the wound body 2, the surface subjected to roughening treatment was positioned inside.

In this Example 1-7, two polyvinyl chloride (PVC) pipes having an outer diameter of 76 mm and a width of 400 mm (equivalent to the PVC pipe used in the wound bodies 1 and 2) were further provided as a pair of nip rolls.

While the wound body 1 and the wound body 2 were disposed as shown in Figure 44, the electrode for electrolysis was delivered through the nip rolls and the electrode for electrolysis and the ion exchange membrane were simultaneously rolled out to thereby produce a laminate.

The electrode for electrolysis was laminated on the ion exchange membrane so as to stick to the ion exchange membrane by the surface tension of water deposited on the ion exchange membrane.

The rolled-out length was 2800 mm, but it was possible to produce the laminate easily without wrinkles and folding.

Even when the positions of the wound body 1 and the wound body 2 were reversed in Figure 44, it was possible to produce the laminate easily. However, when the positions were reversed, the carboxylic acid layer side was positioned outside in the wound body 1.

In each of Examples described above, pure water was supplied to the ion exchange membrane in advance to moisten the membrane until equilibrium, and the equilibrated ion exchange membrane was used. However, it was confirmed that use of the ion exchange membrane equilibrated with a sodium bicarbonate aqueous solution or caustic aqueous solution also enables a laminate to be produced easily.

In the case where a guide roll or nip roll is disposed, typical dispositions are described, and optional dispositions may be employed.

[Comparative Example 1-1]

In Comparative Example 1-1, a membrane electrode assembly was produced by thermally compressing an electrode onto a membrane with reference to a prior art document (Examples of Japanese Patent Laid-Open No. 58-48686).

A nickel expanded metal having a gauge thickness of 100 $\mu$m and an opening ratio of 33% was used as the substrate for electrode for cathode electrolysis to perform electrode coating in the same manner as described above [Example 1-1]. Thereafter, one surface of each electrode was subjected to an inactivation treatment in the following procedure.

Polyimide adhesive tape (Chukoh Chemical Industries, Ltd.) was attached to one surface of the electrodes. A PTFE dispersion (Dupont-Mitsui Fluorochemicals Co., Ltd., 31-JR) was applied onto the other surface and dried in a muffle furnace at 120°C for 10 minutes. The polyimide tape was peeled off, and a sintering treatment was performed in a muffle furnace set at 380°C for 10 minutes. This operation was repeated twice to inactivate the one surface of the electrodes.

Produced was a membrane formed by two layers of a perfluorocarbon polymer of which terminal functional group is "-COOCH$_3$" (C polymer) and a perfluorocarbon polymer of which terminal group is "-SO$_2$F" (S polymer). The thickness of the C polymer layer was 3 mils, and the thickness of the S polymer layer was 4 mils. This two-layer membrane was subjected to a saponification treatment to thereby introduce ion exchange groups to the terminals of the polymer by hydrolysis. The C polymer terminals are hydrolyzed into carboxylic acid groups and the S polymer terminals into sulfo groups. The ion exchange capacity as the sulfonic acid group is 1.0 meq/g, and the ion exchange capacity as the carboxylic acid group is 0.9 meq/g.

The inactivated electrode surface was oppositely disposed to and thermally pressed onto the surface having carboxylic acid groups as the ion exchange groups to integrate the ion exchange membrane and the electrode. The one surface of each electrode was exposed even after the thermal compression, and the electrodes passed through no portion of the membrane.

Thereafter, in order to suppress attachment of bubbles to be generated during electrolysis to the membrane, a mixture of zirconium oxide and a perfluorocarbon polymer into which sulfo groups had been introduced was applied onto both the surfaces. Thus, the membrane electrode assembly of Comparative Example 1-1 was produced.

A large number of steps had to be taken in order to produce the membrane electrode assembly as the laminate, and a period of one day or more was required for production of the laminate.

When the [Evaluation on electrolytic characteristics] described above was conducted, the voltage was high, the current efficiency was low, the common salt concentration in caustic soda (value converted on the basis of 50%) was raised, and the electrolytic performance markedly deteriorated. The evaluation results are shown in Table 1 below.

[Table 1]

|  | Voltage/V | Current efficiency/% | Common salt concentration in caustic soda/ppm |
|---|---|---|---|
| Example 1-1 | 2.95 | 97.2 | 18 |
| Comparative Example 1-1 | 3.67 | 938 | 226 |

<Verification of second embodiment>

As will be described below, Experiment Examples according to the second embodiment (in the section of <Verification of second embodiment> hereinbelow, simply referred to as "Examples") and Experiment Examples not according to the second embodiment (in the section of <Verification of second embodiment> hereinbelow, simply referred to as "Comparative Examples") were provided, and evaluated by the following method.

[Production of ion exchange membrane F2]

As the membrane for use in production of the laminate, an ion exchange membrane F2 produced as described below was used.

As reinforcement core materials, 90 denier monofilaments made of polytetrafluoroethylene (PTFE) were used (hereinafter referred to as PTFE yarns). As the sacrifice yarns, yarns obtained by twisting six 35 denier filaments of polyethylene terephthalate (PET) 200 times/m were used (hereinafter referred to as PET yarns). First, in each of the TD and the MD, the PTFE yarns and the sacrifice yarns were plain-woven with 24 PTFE yarns/inch so that two sacrifice yarns were arranged between adjacent PTFE yarns, to obtain a woven fabric. The resulting woven fabric was pressure-bonded by a roll to obtain a reinforcing material as a woven fabric having a thickness of 70 $\mu$m.

Next, a resin A of a dry resin that is a copolymer of CF$_2$=CF$_2$ and CF$_2$=CFOCF$_2$CF (CF$_3$) OCF$_2$CF$_2$COOCH$_3$ and has an ion exchange capacity of 0.85 mg equivalent/g, and a resin B of a dry resin that is a copolymer of CF$_2$=CF$_2$ and CF$_2$=CFOCF$_2$CF (CF$_3$) OCF$_2$CF$_2$SO$_2$F and has an ion exchange capacity of 1.03 mg equivalent/g were provided.

Using these resins A and B, a two-layer film X in which the thickness of a resin A layer is 15 $\mu$m and the thickness of a resin B layer was 84 $\mu$m is obtained by a coextrusion T die method. Using only the resin B, a single-layer film Y having a thickness of 20 $\mu$m was obtained by a T die method.

Subsequently, release paper (embossed in a conical shape having a height of 50 $\mu$m), the film Y, a reinforcing material, and the film X were laminated in this order on a hot plate having a heat source and a vacuum source inside and having micropores on its surface, heated and depressurized under the conditions of a hot plate surface temperature of 233°C and a degree of reduced pressure of 0.067 MPa for 2 minutes, and then the release paper was removed to obtain a composite membrane. The film X was laminated such that the resin B was positioned as the lower surface.

The resulting composite membrane was immersed in an aqueous solution at 80°C comprising 30% by mass of dimethyl sulfoxide (DMSO) and 15% by mass of potassium hydroxide (KOH) for 20 minutes for saponification. Then, the composite membrane was immersed in an aqueous solution at 50°C comprising 0.5 N sodium hydroxide (NaOH) for 1 hour to replace the counterion of the ion exchange group by Na, and then washed with water. Thereafter, the surface on the side of the resin B was polished with a relative speed between a polishing roll and the membrane set to 100 m/minute and a press amount of the polishing roll set to 2 mm to form opening portions. Then, the membrane was dried at 60°C.

Further, 20% by mass of zirconium oxide having a primary particle size of 1 $\mu$m was added to a 5% by mass ethanol solution of the acid-type resin of the resin B and dispersed to prepare a suspension, and the suspension was sprayed onto both the surfaces of the above composite membrane by a suspension spray method to form coatings of zirconium oxide on the surfaces of the composite membrane to obtain an ion exchange membrane F2 as the membrane. The ion exchange membrane F2 thus obtained has an asperity geometry imparted to both the surfaces thereof. The asperities derived from the release paper were imparted to the anode surface side of both the surfaces thereof, and the asperities derived from the core materials were imparted to the cathode surface side of both the surfaces thereof.

The coating density of zirconium oxide measured by fluorescent X-ray measurement was 0.5 mg/cm$^2$. Here, the average particle size was measured by a particle size analyzer (manufactured by SHIMADZU CORPORATION, "SALD(R) 2200").

[Evaluation of interface moisture content w]

The interface moisture content w of the laminate was evaluated by the following equation.

$$w = (T - e - m - (E - e/2) - (M - m/2))/(1 - P/100)$$

w: membrane/electrode interface moisture content per unit electrode area (membrane/electrode interface moisture content)/g/m$^2$
T: weight of the laminate retaining moisture/g
e: dry weight of the electrode for electrolysis/g
E: weight of the electrode for electrolysis retaining moisture/g
m: weight of the ion exchange membrane from which moisture deposited on the surface is removed/g
M: weight of the ion exchange membrane retaining moisture/g
P: aperture ratio of the electrode for electrolysis/%

Method for measuring e

The electrode for electrolysis was cut into a size of 200 mm × 200 mm. After dried by storing in a dryer at 50°C for 30 minutes or more, the electrode was weighed. This operation was repeated five times, and the average value was determined.

Method for measuring E

The electrode for electrolysis described above was stored in a vat containing pure water at 25°C for an hour. Water was drained by holding one of the four corners of the electrode for electrolysis to hang the electrode and maintaining the electrode for 20 seconds to thereby cause spontaneously dripping moisture to fall. After 20 seconds, the electrode was immediately weighed. This operation was repeated five times, and the average value was determined.

Method for measuring m

A 200 mm × 200 mm ion exchange membrane was equilibrated in a vat containing pure water at 25°C for 24 hours. The ion exchange membrane was removed from pure water and sandwiched with Kim Towel (NIPPON PAPER CRECIA Co., LTD.). Then, moisture deposited on the ion exchange membrane was removed by reciprocating a resin roller having a width of 200 mm and a weight of 300 g twice on the membrane. Thereafter, the membrane was immediately weighed. This operation was repeated five times, and the average value was determined.

Method for measuring M

An ion exchange membrane was cut into a size of 200 mm × 200 mm and equilibrated in a vat containing pure water at 25°C for 24 hours. Water was drained by holding one of the four corners of the ion exchange membrane to hang the membrane and maintaining the membrane for 20 seconds to thereby cause spontaneously dripping moisture to fall. After 20 seconds, the electrode was immediately weighed. This operation was repeated five times, and the average value was determined.

Method for measuring T

An ion exchange membrane was cut into a size of 200 mm × 200 mm, and an electrode for electrolysis was cut into a size of 200 mm × 200 mm. A laminate of the ion exchange membrane and the electrode for electrolysis was formed by use of the interfacial tension of moisture present on the surface of the ion exchange membrane. This laminate was equilibrated in a vat containing pure water at 25°C for 24 hours. Water was drained by holding one of the four corners of the laminate to hang the electrode and maintaining the laminate for 20 seconds to thereby cause spontaneously dripping moisture to fall. After 20 seconds, the electrode was immediately weighed. This operation was repeated five times, and the average value was determined.

Method for measuring P

The electrode for electrolysis was cut into a size of 200 mm × 200 mm. A digimatic thickness gauge (manufactured by Mitutoyo Corporation, minimum scale 0.001 mm) was used to calculate an average value of measurements of 10 points obtained by measuring evenly in the plane. The value was used as the thickness of the electrode (gauge thickness) to calculate the volume. Thereafter, an electronic balance was used to measure the mass. From the specific gravity of each metal (specific gravity of nickel = 8.908 g/cm$^3$, specific gravity of titanium = 4.506 g/cm$^3$), the opening ratio or void ratio was calculated.

Opening ratio (Void ratio) (%) = (1 - (electrode mass)/(electrode volume × metal specific gravity)) × 100

[Evaluation of ratio a (ratio a of the gap volume with respect to the unit area of the membrane, also referred to as gap volume/area) and asperity geometry by X-ray CT measurement]

The ratio a of the ion exchange membrane and the asperity geometry of the ion exchange membrane were evaluated by X-ray CT. The X-ray CT apparatus and image processing software used are as follows.

X-ray CT apparatus: high-resolution 3D X-ray microscope nano3DX manufactured by Rigaku Corporation

Image analysis software: ImageJ

The ion exchange membrane was cut into a size of 5 mm × 5 mm to prepare a specimen for X-ray CT measurement and immersed in pure water. Excess moisture was wiped off, and a weight of 500 g was placed on the specimen. After dried at room temperature for 24 hours, the specimen was subjected to X-ray CT measurement. The measurement conditions are as follows.

Pixel resolution: 2.16 μm/pix
Exposure time: 8 seconds/projection
Number of projections: 1000 projections/180 degrees
X-ray tube voltage: 50 kV
X-ray tube current: 24 mA
X-ray target: Mo

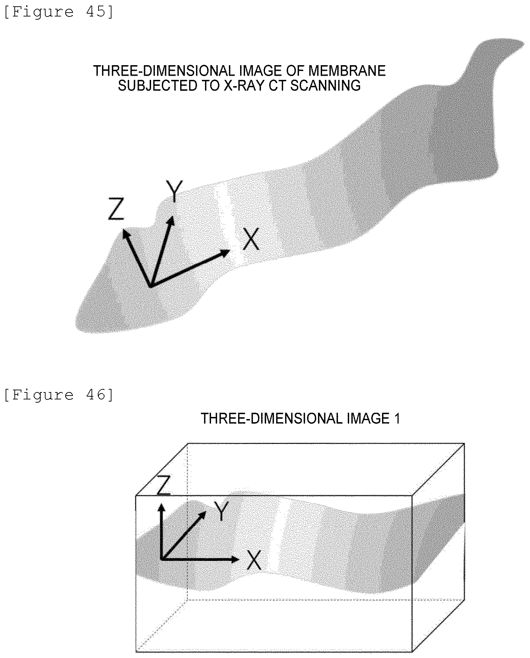

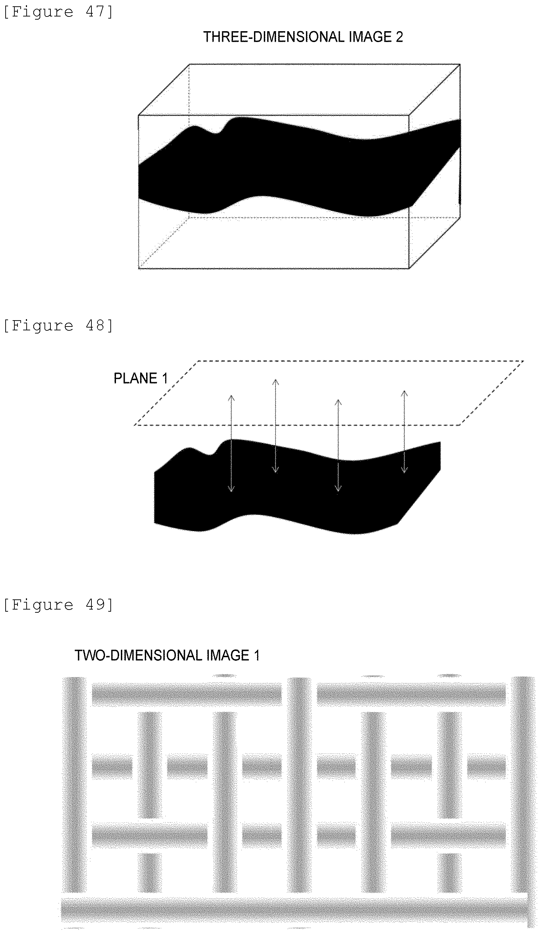

The X axis was defined in the width direction of the ion exchange membrane, the Z axis was defined in the thickness direction of the ion exchange membrane so as to orthogonally intersect to the X axis, and the Y axis was defined in the direction perpendicular to the X axis and the Z axis.
A tomogram image (tomographic image obtained by the X-ray CT measurement (explanatory view shown in Figure 45)) was trimmed to provide a rectangular parallelepiped that includes the entire image data of an area of 6 warps and 6 wefts of the core materials of the ion exchange membrane in the thickness direction, all the sides of the rectangular parallelepiped being parallel to any one of the X axis, Y, axis, or Z axis of the ion exchange membrane. This image was denoted by the three-dimensional image 1 (explanatory view shown in Figure 46).
The Otsu method, an image processing method, was applied to the three-dimensional image 1 to conduct area segmentation. The pixel luminance value of air was set to 0, and the pixel luminance value of the ion exchange membrane was set to 255. An image thus obtained was denoted by the three-dimensional image 2 (explanatory view shown in Figure 47). The asperities of the ion exchange membrane in this image were observed.
In the three-dimensional image 2, in order to evaluate the asperities of a surface to be evaluated, a flat plane (plane 1) was defined as an optional plane that is parallel to a flat plane formed by the X axis and the Y axis of the ion exchange membrane, that does not intersect the ion exchange membrane, and between which and the surface to be evaluated, the ion exchange membrane does not exist (explanatory view shown in Figure 48) .

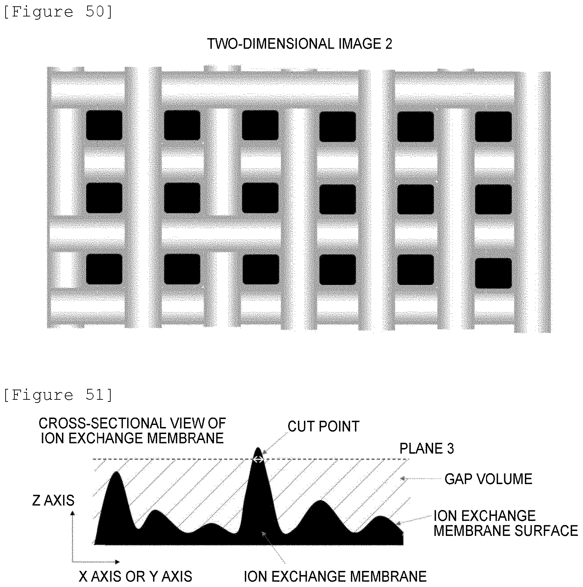

As shown in the explanatory views of Figure 49 and Figure 50, a line perpendicular to the plane 1 was drawn down from each pixel of the plane 1 in the direction of the ion exchange membrane surface, and the length of the line from the plane 1 to the ion exchange membrane surface, on which the line abutted, was determined. An image having the number of pixels equivalent to that of the plane 1 was defined as a plane 2, and the length determined previously was used as the luminance value in each pixel in the plane 2 to obtain a contour view of the asperity height (two-dimensional image 1). In the two-dimensional image 1, which is an image of distances obtained by observing the asperities of the ion exchange membrane from the outside, the asperities of the ion exchange membrane per se are used. Thus, an image operation of the following equation was conducted on each pixel to obtain a two-dimensional image 2 (e.g., explanatory view shown in Figure 51).

Two-dimensional image 2 = maximum value of two-dimensional image 1 - two-dimensional image 1 (calculated on each pixel)

Next, inclination of the specimen and waviness of the specimen during X-ray CT measurement were removed. The two-dimensional image 2 was subjected to Mean filtering in a range of influence having a radius corresponding to 300 $\mu$m to obtain a two-dimensional image 3. An image operation of the following equation was used to remove inclination and waviness to obtain a two-dimensional image 4. This image was regarded as an image reflecting the asperities of the ion exchange membrane.

Two-dimensional image 4 = two-dimensional image 2 - two-dimensional image 3

(Calculation of gap volume/area)

Determined was the volume of a three-dimensional gap (hatched space shown in Figure 51) sandwiched between the asperity surface of the ion exchange membrane and a predetermined flat plane (plane 3 shown in Figure 51). The "predetermined flat plane" (plane 3 shown in Figure 51) referred to herein was defined to be parallel to the XY plane of the ion exchange membrane and to have an area ratio of the cut point on the plane 3 on cutting the asperity surface of the ion exchange membrane in the plane 3 (i.e., proportion of the cross-sectional area of the section of the asperity surface with respect to the area of the entire plane 3) of 2%. In other words, for the two-dimensional image 4, which is the information of the asperity height of the ion exchange membrane surface, determined was a threshold luminance value, the number of pixels of which threshold luminance value or higher accounts for 2% based on the number of the total pixels, and gap volume/area was determined in accordance with the following equation.

Gap volume/area = $\Sigma$(threshold value - two-dimensional image 4)/number of total pixels of two-dimensional image 4

wherein $\Sigma$ means not the total sum, but summing all the pixels having a pixel luminance value smaller than the threshold value for the two-dimensional image 4.

(Calculation of asperity information)

For the two-dimensional image 4, determined were the maximum value and minimum value of the height, the height difference, which is the difference between the maximum value and the minimum value described above, the average value of the height difference, and standard deviation of the height difference in the surface asperity geometry.

For Examples 2-1 to 2-7, the ratio a of the cathode surface side (carboxylic acid layer side) of the membrane was determined, and for Example 2-8, the ratio a of the anode surface side (sulfonic acid layer side) of the membrane was determined.

[Method for producing electrode for electrolysis]

(Step 1)

As a substrate for electrode for cathode electrolysis, provided was a nickel foil having a gauge thickness of 22 $\mu$m, which had been subjected to roughening treatment by means of electrolytic nickel plating.

(Step 2)

A porous foil was formed by perforating this nickel foil with circular holes having a diameter of 1 mm by punching. The opening ratio was 44%.

(Step 3)

A cathode coating liquid for use in forming an electrode catalyst was prepared by the following procedure. A ruthenium nitrate solution having a ruthenium concentration of 100 g/L (FURUYA METAL Co., Ltd.) and cerium nitrate (KISHIDA CHEMICAL Co., Ltd.) were mixed such that the molar ratio between the ruthenium element and the cerium element was 1:0.25. This mixed solution was sufficiently stirred and used as a cathode coating liquid.

(Step 4)

A vat containing the above cathode coating liquid was placed at the lowermost portion of a roll coating apparatus. The vat was placed such that a coating roll formed by winding rubber made of closed-cell type foamed ethylene-propylene-diene rubber (EPDM) (INOAC CORPORATION, E-4088, thickness 10 mm) around a polyvinyl chloride (PVC) cylinder was always in contact with the cathode coating liquid. A coating roll around which the same EPDM had been wound was placed at the upper portion thereof, and a PVC roller was further placed thereabove. The cathode coating liquid was applied by allowing the porous foil formed in the step 2 (substrate for electrode) to pass between the second coating roll and the PVC roller at the uppermost portion (roll coating method). Then, after drying at 50°C for 10 minutes, preliminary baking at 150°C for 3 minutes, and baking at 400°C for 10 minutes were performed. A series of these coating, drying, preliminary baking, and baking operations was repeated until a predetermined amount of coating was achieved. Thus, an electrode for cathode electrolysis was produced.

After the coating was formed, $S_a/S_{all}$, $S_{ave}$, and H/t were measured.

[Electrolysis evaluation]

The electrolytic performance was evaluated by the following electrolytic experiment.

A titanium anode cell having an anode chamber in which an anode was provided and a cathode cell having a nickel cathode chamber in which a cathode was provided were oppositely disposed. A pair of gaskets was arranged between the cells, and an ion exchange membrane was sandwiched between the gaskets. Then, the anode cell, the gasket, the ion exchange membrane, the gasket, and the cathode were brought into close contact together to obtain an electrolytic cell.

The anode was produced by applying a mixed solution of ruthenium chloride, iridium chloride, and titanium tetrachloride onto a titanium substrate subjected to blasting and acid etching treatment as the pretreatment, followed by drying and baking. The anode was fixed in the anode chamber by welding. As the cathode, one produced by the method mentioned above was used. As the collector of the cathode chamber, a nickel expanded metal was used. The collector had a size of 95 mm in length × 110 mm in width. As a metal elastic body, a mattress formed by knitting nickel fine wire was used. The mattress as the metal elastic body was placed on the collector. Nickel mesh formed by plain-weaving nickel wire having a diameter of 150 μm in a sieve mesh size of 40 was placed thereover, and a string made of Teflon(R) was used to fix the four corners of the Ni mesh to the collector. This Ni mesh was used as a feed conductor. In this electrolytic cell, the repulsive force of the mattress as the metal elastic body was used so as to achieve a zero-gap structure. As the gaskets, ethylene-propylene-diene (EPDM) rubber gaskets were used.

A titanium anode cell having an anode chamber in which an anode was provided and a cathode cell having a nickel cathode chamber in which a cathode was provided were oppositely disposed. A pair of gaskets was arranged between the cells, and the laminate produced in each of Examples and Comparative Examples was sandwiched between the pair of the gaskets. Then, the anode cell, the gasket, the ion exchange membrane, the gasket, and the cathode were brought into close contact together to obtain an electrolytic cell. The electrolysis area was 104.5 cm². The ion exchange membrane was placed such that the resin A side faced the cathode chamber.

(Case of laminating electrode for electrolysis on resin A side of ion exchange membrane F2 for evaluation (Examples 2-1 to 2-6))

The anode was produced by applying a mixed solution of ruthenium chloride, iridium chloride, and titanium tetrachloride onto a titanium substrate subjected to blasting and acid etching treatment as the pretreatment, followed by drying and baking. The anode was fixed in the anode chamber by welding. As the collector of the cathode chamber, a nickel expanded metal was used. The collector had a size of 95 mm in length × 110 mm in width. As a metal elastic body, a mattress formed by knitting nickel fine wire was used. The mattress as the metal elastic body was placed on the collector. Nickel mesh formed by plain-weaving nickel wire having a diameter of 150 μm in a sieve mesh size of 40 was placed thereover, and a string made of Teflon(R) was used to fix the four corners of the Ni mesh to the collector. This Ni mesh was used as a feed conductor. This electrolytic cell had a zero-gap structure by use of the repulsive force of the mattress as the metal elastic body. As the gaskets, ethylene-propylene-diene (EPDM) rubber gaskets were used.

For an electrode for electrolysis to be used in the laminate, a porous foil was formed by perforating this nickel foil having a gauge thickness of 22 μm with circular holes having a diameter of 1 mm by punching. The opening ratio was 44%. A coating liquid for use in forming an electrode catalyst on this nickel foil was prepared by the following procedure.

A ruthenium nitrate solution having a ruthenium concentration of 100 g/L (FURUYA METAL Co., Ltd.) and cerium nitrate (KISHIDA CHEMICAL Co., Ltd.) were mixed such that the molar ratio between the ruthenium element and the cerium element was 1:0.25. This mixed solution was sufficiently stirred and used as a cathode coating liquid.

A vat containing the above coating liquid was placed at the lowermost portion of a roll coating apparatus. The vat was placed such that a coating roll formed by winding rubber made of closed-cell type foamed ethylene-propylene-diene rubber (EPDM) (INOAC CORPORATION, E-4088, thickness 10 mm) around a polyvinyl chloride (PVC) cylinder was always in contact with the coating liquid. A coating roll around which the same EPDM had been wound was placed at the upper portion thereof, and a PVC roller was further placed thereabove. The coating liquid was applied by allowing the substrate for electrode for electrolysis to pass between the second coating roll and the PVC roller at the uppermost portion (roll coating method). Then, after drying at 50°C for 10 minutes, preliminary baking at 150°C for 3 minutes, and baking at 350°C for 10 minutes were performed. A series of these coating, drying, preliminary baking, and baking operations was repeated. The thickness of the electrode for electrolysis produced was 29 μm. The thickness of the catalytic layer containing ruthenium oxide and cerium oxide, which was determined by subtracting the thickness of the substrate for electrode for electrolysis from the thickness of the electrode for electrolysis, was 7 μm.

The above electrolytic cell was used to perform electrolysis of common salt. The brine concentration (sodium chloride concentration) in the anode chamber was adjusted to 205 g/L. The sodium hydroxide concentration in the cathode chamber was adjusted to 32% by mass. The temperature each in the anode chamber and the cathode chamber was adjusted such that the temperature in each electrolytic cell reached 90°C. Common salt electrolysis was performed at a current density of 6 kA/m$^2$ to measure the voltage, current efficiency, and common salt concentration in caustic soda. As the common salt concentration in caustic soda, a value obtained by converting the caustic soda concentration on the basis of 50% was shown.

(Case of laminating electrode for electrolysis on resin B side of ion exchange membrane F2 for evaluation (Example 2-7))

A titanium nonwoven fabric having a gauge thickness of 100 μm, a titanium fiber diameter of about 20 μm, a basis weight of 100 g/m$^2$, and an opening ratio of 78% was used as the substrate for electrode for electrolysis.

A coating liquid for use in forming an electrode catalyst was prepared by the following procedure. A ruthenium chloride solution having a ruthenium concentration of 100 g/L (Tanaka Kikinzoku Kogyo K.K.), iridium chloride having an iridium concentration of 100 g/L (Tanaka Kikinzoku Kogyo K.K.), and titanium tetrachloride (Wako Pure Chemical Industries, Ltd.) were mixed such that the molar ratio among the ruthenium element, the iridium element, and the titanium element was 0.25:0.25:0.5. This mixed solution was sufficiently stirred and used as an anode coating liquid.

A vat containing the above coating liquid was placed at the lowermost portion of a roll coating apparatus. The vat was placed such that a coating roll formed by winding rubber made of closed-cell type foamed ethylene-propylene-diene rubber (EPDM) (INOAC CORPORATION, E-4088, thickness 10 mm) around a polyvinyl chloride (PVC) cylinder was always in contact with the coating liquid. A coating roll around which the same EPDM had been wound was placed at the upper portion thereof, and a PVC roller was further placed thereabove. The coating liquid was applied by allowing the substrate for electrode to pass between the second coating roll and the PVC roller at the uppermost portion (roll coating method). After the above coating liquid was applied onto the titanium porous foil, drying at 60°C for 10 minutes and baking at 475°C for 10 minutes were performed. A series of these coating, drying, preliminary baking, and baking operations was repeatedly performed, and then baking at 520°C was performed for an hour. The thickness of the electrode was 114 μm. The thickness of the catalytic layer, which was determined by subtracting the thickness of the substrate for electrode for electrolysis from the thickness of the electrode, was 14 μm.

The cathode was prepared in the following procedure. First, a 40-mesh nickel wire mesh having a line diameter of 150 μm was provided as the substrate. After blasted with alumina as pretreatment, the wire mesh was immersed in 6 N hydrochloric acid for 5 minutes, sufficiently washed with pure water, and dried. Then, a ruthenium nitrate solution having a ruthenium concentration of 100 g/L (FURUYA METAL Co., Ltd.) and cerium nitrate (KISHIDA CHEMICAL Co., Ltd.) were mixed such that the molar ratio between the ruthenium element and the cerium element was 1:0.25. This mixed solution was sufficiently stirred and used as a cathode coating liquid.

A vat containing the above coating liquid was placed at the lowermost portion of a roll coating apparatus. The vat was placed such that a coating roll formed by winding rubber made of closed-cell type foamed ethylene-propylene-diene rubber (EPDM) (INOAC CORPORATION, E-4088, thickness 10 mm) around a polyvinyl chloride (PVC) cylinder was always in contact with the coating liquid. A coating roll around which the same EPDM had been wound was placed at the upper portion thereof, and a PVC roller was further placed thereabove. The coating liquid was applied by allowing the substrate for electrode to pass between the second coating roll and the PVC roller at the uppermost portion (roll coating method). Then, after drying at 50°C for 10 minutes, preliminary baking at 150°C for 3 minutes, and baking at 350°C for 10 minutes were performed. A series of these coating, drying, preliminary baking, and baking operations was repeated. This cathode was placed instead of the nickel mesh feed conductor in the cathode cell.

The anode that was degraded and had an enhanced electrolytic voltage was fixed to the anode cell by welding and used as an anode feed conductor. That is, in the sectional structure of the cell, the collector, the mattress, the cathode, the membrane, the electrode for electrolysis, and the anode that was degraded and had an enhanced electrolytic voltage were arranged in the order mentioned from the cathode chamber side to form a zero-gap structure. The anode that was degraded and had an enhanced electrolytic voltage served as the feed conductor. The electrode for electrolysis and the anode that was degraded and had an enhanced electrolytic voltage were only in physical contact with each other and were not fixed with each other by welding.

[Example 2-1]

The ion exchange membrane F2 was equilibrated with a 0.1 mol/l NaOH aqueous solution. The electrode for electrolysis was attached to the resin A side of the ion exchange membrane F2 by use of interfacial tension of the aqueous solution applied on the surface of the ion exchange membrane F2 to thereby provide a laminate. The laminate was assembled in the electrolytic cell such that the surface of the electrode for electrolysis faced the Ni mesh feed conductor side, and electrolysis evaluation was performed. The results are shown in Table 2.

In Table 2, the gap volume/area (ratio a), height difference, standard deviation, and interface moisture content w of the ion exchange membrane F2, and additionally, $S_a/S_{all}$, $S_{ave}$, and $H/t$ of the electrode for electrolysis are shown. The value M was 0.

[Example 2-2]

On producing the ion exchange membrane, while air at room temperature was supplied from above, heating and depressurization were conducted under the conditions of a hot plate surface temperature of 223°C and a degree of reduced pressure of 0.067 MPa for 2 minutes. Except for this, used was an ion exchange membrane F3, which was produced in the same manner as for the ion exchange membrane F2.

The ion exchange membrane F3 was equilibrated with a 0.1 mol/l NaOH aqueous solution. The electrode for electrolysis was attached to the resin A side of the ion exchange membrane F3 by use of interfacial tension of the aqueous solution applied on the surface of the ion exchange membrane F3 to thereby provide a laminate. The laminate was assembled in the electrolytic cell such that the surface of the electrode for electrolysis faced the Ni mesh feed conductor side, and electrolysis evaluation was performed. The results are shown in Table 2.

In Table 2, the gap volume/area (ratio a), height difference, standard deviation, and interface moisture content w of the ion exchange membrane F3, and additionally, $S_a/S_{all}$, $S_{ave}$, and $H/t$ of the electrode for electrolysis are shown. The value M was 0.

[Example 2-3]

On producing the ion exchange membrane, release paper not embossed was used. Except for this, used was an ion exchange membrane F4, which was produced in the same manner as for the ion exchange membrane F2.

The ion exchange membrane F4 was equilibrated with a 0.1 mol/l NaOH aqueous solution. The electrode for electrolysis was attached to the resin A side of the ion exchange membrane F4 by use of interfacial tension of the aqueous solution applied on the surface of the ion exchange membrane F4 to thereby provide a laminate. The laminate was assembled in the electrolytic cell such that the surface of the electrode for electrolysis faced the Ni mesh feed conductor side, and electrolysis evaluation was performed. The results are shown in Table 2.

In Table 2, the gap volume/area (ratio a), height difference, standard deviation, and interface moisture content w of the ion exchange membrane F4, and additionally, $S_a/S_{all}$, $S_{ave}$, and $H/t$ of the electrode for electrolysis are shown. The value M was 0.

[Example 2-4]

On producing the ion exchange membrane, release paper (embossed in a conical shape having a height of 50 $\mu$m), the film Y, a reinforcing material, the film X, and a Kapton film were laminated in this order, heated and depressurized under the conditions of a hot plate surface temperature of 223°C and a degree of reduced pressure of 0.067 MPa for 2 minutes, and then the release paper and Kapton film were removed to obtain a composite membrane. Except for this, used was an ion exchange membrane F5, which was produced in the same manner as for the ion exchange membrane F2.

The ion exchange membrane F5 was equilibrated with a 0.1 mol/l NaOH aqueous solution. The electrode for electrolysis was attached to the resin A side of the ion exchange membrane F5 by use of interfacial tension of the aqueous solution applied on the surface of the ion exchange membrane F5 to thereby provide a laminate. The laminate was assembled in the electrolytic cell such that the surface of the electrode for electrolysis faced the Ni mesh feed conductor side, and electrolysis evaluation was performed. The results are shown in Table 2.

In Table 2, the gap volume/area (ratio a), height difference, standard deviation, and interface moisture content w of the ion exchange membrane F5, and additionally, $S_a/S_{all}$, $S_{ave}$, and H/t of the electrode for electrolysis are shown. The value M was 0.

[Example 2-5]

As a substrate for electrode for cathode electrolysis, provided was a nickel foil having a gauge thickness of 22 μm, which had been subjected to roughening treatment by means of electrolytic nickel plating.

A porous foil was formed by perforating this nickel foil with circular holes having a diameter of 1 mm by punching. The opening ratio was 44%. The porous foil was embossed at a line pressure of 333 N/cm using a metallic roll having a design formed on the surface thereof as shown in Figure 24(A) and a resin pressure roll to form a porous foil having protrusions formed on the surface thereof. Processing for forming asperities was conducted with the metallic roll in contact with the surface not subjected to roughening treatment. That is, projections were formed on the surface subjected to roughening treatment, and recesses were formed on the surface not subjected to roughening treatment.

A cathode coating liquid for use in forming an electrode catalyst was prepared by the following procedure. A ruthenium nitrate solution having a ruthenium concentration of 100 g/L (FURUYA METAL Co., Ltd.) and cerium nitrate (KISHIDA CHEMICAL Co., Ltd.) were mixed such that the molar ratio between the ruthenium element and the cerium element was 1:0.25. This mixed solution was sufficiently stirred and used as a cathode coating liquid.

A vat containing the above cathode coating liquid was placed at the lowermost portion of a roll coating apparatus. The vat was placed such that a coating roll formed by winding rubber made of closed-cell type foamed ethylene-propylene-diene rubber (EPDM) (INOAC CORPORATION, E-4088, thickness 10 mm) around a polyvinyl chloride (PVC) cylinder was always in contact with the cathode coating liquid. A coating roll around which the same EPDM had been wound was placed at the upper portion thereof, and a PVC roller was further placed thereabove. The coating liquid was applied by allowing the porous foil formed in the step 2 (substrate for electrode) to pass between the second coating roll and the PVC roller at the uppermost portion (roll coating method). Then, after drying at 50°C for 10 minutes, preliminary baking at 150°C for 3 minutes, and baking at 400°C for 10 minutes were performed. A series of these coating, drying, preliminary baking, and baking operations was repeated until a predetermined amount of coating was achieved. In this manner, an electrode for cathode electrolysis having a coating layer (catalytic layer) (130 mm × 130 mm × thickness t 28 μm) was formed on the substrate for electrode for electrolysis. A schematic view partially illustrating the surface of the electrode for electrolysis of Example 2-5 is shown in Figure 24(B). As can be seen from the figure, the protrusions corresponding to the metallic roll were formed in the portion excluding the opening portions of the electrode for electrolysis. Additionally, observed was a region in which protrusions were each independently disposed in at least one direction in the opposed surface of the electrode for electrolysis.

On the electrode for electrolysis, $S_a/S_{all}$, $S_{ave}$, and H/t were measured in accordance with a method described below. Further, M ($=S_a/S_{all} \times S_{ave} \times H/t$) was also calculated to be 0.131.

Then, the ion exchange membrane F3 used in Example 2-2 was used as the ion exchange membrane, the surface of the electrode for electrolysis on which projections were formed was oppositely disposed to the resin A side of the ion exchange membrane F3 to thereby obtain a laminate. The laminate was assembled in the electrolytic cell such that the surface of the electrode for electrolysis faced the Ni mesh feed conductor side, and electrolysis evaluation was performed. The results are shown in Table 2.

In Table 2, the gap volume/area (ratio a), height difference, standard deviation, and interface moisture content w of the ion exchange membrane F3, and additionally, $S_a/S_{all}$, $S_{ave}$, and H/t of the electrode for electrolysis are shown.

[Example 2-6]

A laminate was obtained in the same manner as in Example 2-5 except that the ion exchange membrane F5 used in Example 2-4 was used as the ion exchange membrane. That is, the surface of the electrode for electrolysis on which projections appeared was oppositely disposed to the resin A side of the ion exchange membrane F5 to thereby obtain a laminate. The laminate was assembled in the electrolytic cell such that the surface of the electrode for electrolysis faced the Ni mesh feed conductor side, and electrolysis evaluation was performed. The results are shown in Table 2.

In Table 2, the gap volume/area (ratio a), height difference, standard deviation, and interface moisture content w of the ion exchange membrane F5, and additionally, $S_a/S_{all}$, $S_{ave}$, and H/t of the electrode for electrolysis are shown. The value M was 0.131.

[Example 2-7]

The ion exchange membrane F2 was equilibrated with a 0.1 mol/l NaOH aqueous solution. An electrode for electrolysis in which a titanium nonwoven fabric was used was attached to the resin B side of the ion exchange membrane F2 by use of interfacial tension of the aqueous solution applied on the surface of the ion exchange membrane F2 to thereby provide a laminate. The laminate was assembled in the electrolytic cell such that the surface of the electrode for electrolysis faced the anode feed conductor side, and electrolysis evaluation was performed. The results are shown in Table 2.

In Table 2, the gap volume/area (ratio a), height difference, standard deviation, and interface moisture content w of the ion exchange membrane F5, and additionally, $S_a/S_{all}$, $S_{ave}$, and H/t of the electrode for electrolysis are shown. The value M was 0.

[Comparative Example 2-1]

In Comparative Example 2-1, a membrane electrode assembly was produced by thermally compressing an electrode onto a membrane with reference to a prior art document (Examples of Japanese Patent Laid-Open No. 58-48686).

A nickel expanded metal having a gauge thickness of 100 $\mu$m and an opening ratio of 33% was used as the substrate for electrode for cathode electrolysis to perform electrode coating in the same manner as in Example 2-1. Thereafter, one surface of each electrode was subjected to an inactivation treatment in the following procedure. Polyimide adhesive tape (Chukoh Chemical Industries, Ltd.) was attached to one surface of the electrodes. A PTFE dispersion (Dupont-Mitsui Fluorochemicals Co., Ltd., 31-JR) was applied onto the other surface and dried in a muffle furnace at 120°C for 10 minutes. The polyimide tape was peeled off, and a sintering treatment was performed in a muffle furnace set at 380°C for 10 minutes. This operation was repeated twice to inactivate the one surface of the electrodes.

Produced was a membrane formed by two layers of a perfluorocarbon polymer of which terminal functional group is "-COOCH$_3$" (C polymer) and a perfluorocarbon polymer of which terminal group is "-SO$_2$F" (S polymer). The thickness of the C polymer layer was 3 mils, and the thickness of the S polymer layer was 4 mils. This two-layer membrane was subjected to a saponification treatment to thereby introduce ion exchange groups to the terminals of the polymer by hydrolysis. That is, the C polymer terminals were hydrolyzed into carboxylic acid groups and the S polymer terminals into sulfo groups. The ion exchange capacity as the sulfonic acid group was 1.0 meq/g, and the ion exchange capacity as the carboxylic acid group was 0.9 meq/g.

The inactivated electrode surface was oppositely disposed to and thermally pressed onto the surface having carboxylic acid groups as the ion exchange groups to integrate the ion exchange membrane and the electrode. The one surface of each electrode was exposed even after the thermal compression, and the electrodes passed through no portion of the membrane.

Thereafter, in order to suppress attachment of bubbles to be generated during electrolysis to the membrane, a mixture of zirconium oxide and a perfluorocarbon polymer into which sulfo groups had been introduced was applied onto both the surfaces. Thus, the membrane electrode assembly of Comparative Example 2-1 was produced.

The membrane used in the laminate of Comparative Example 2-1 had a flat surface. The membrane had an interface moisture content w of 0 because connected to the electrode by thermal compression.

When electrolytic evaluation was performed, the electrolytic performance markedly deteriorated (Table 2). The value M was 0.

(Method for measuring parameters)

(Method for calculating $S_a$)

A surface of an electrode for electrolysis (the surface on the side of the coating layer described below) was observed with an optical microscope (digital microscope) at a magnification of 40 times, and the total area of the protrusions on the surface of the electrode for electrolysis $S_a$ was calculated. The size of one visual field was 7.7 mm $\times$ 5.7 mm, and the average of the numeric values of five visual fields was taken as the calculated value.

(Method for calculating $S_{all}$)

A surface of the electrode for electrolysis (the surface on the side of the coating layer described below) was observed with an optical microscope at a magnification of 40 times. $S_{all}$ was calculated by subtracting the opening portion area in the observed visual field from the area of the entire observed visual field. The size of one visual field was 7.7 mm $\times$ 5.7 mm, and the average of the numeric values of five visual fields was taken as the calculated value.

(Method for calculating $S_{ave}$)

A surface of the electrode for electrolysis (the surface on the side of the coating layer described below) was observed with an optical microscope at a magnification of 40 times. An image in which only the protrusions on the surface of the electrode for electrolysis were solidly painted black was formed from this observed image. That is, the image produced was an image in which only the shape of the protrusions appeared. The area of each of 50 independent protrusions was calculated from this image, and the average of the areas was denoted by $S_{ave}$. The size of one visual field was 7.7 mm $\times$ 5.7 mm. When the number of the independent protrusions was less than 50, a field view to be observed was added.

When a protrusion was observed using the optical microscope, shade caused by the protrusion was observed because of irradiation of light. The center of this shade was regarded as the boundary between the protrusion and the flat portion. For samples unlikely to give shade, the angle of the light source was tilted very slightly to give shadow. $S_{ave}$ was calculated in mm$^2$.

(Method for measuring H, h, and t)

The following H, h, and t were measured by a method described below.

h: average value of the height of the projections or the depth of the recesses
t: average value of the thickness of the electrode itself
H: h + t

For t, a cross section of the electrode for electrolysis was observed with a scanning electron microscope (S4800 manufactured by Hitachi High-Technologies Corporation), and the thickness of the electrode was obtained from the measured length. For the sample for observation, the electrode for electrolysis was embedded in resin and then subjected to mechanical polishing to expose a cross section. The thickness of the electrode portion was measured at six points, and the average value of the points was denoted by t.

For H, the entire surface of an electrode produced by applying catalyst coating to a substrate for electrode for electrolysis subjected to processing for forming asperities was measured at 10 points so as to include the portion subjected to the processing for forming asperities, with a digimatic thickness gauge (manufactured by Mitutoyo Corporation, minimum scale 0.001 mm). The average value of the 10 measurements was denoted by H.

h was calculated by subtracting t from H (h = H - t).

[Table 2]

| | Gap volume/area (ratio a)/μm | Difference between maximum and minimum/μm | Standard deviation/μm | Membrane/electrode interface moisture content (interface moisture content w) g/m²·electrode | Sa/Sall | Save | (h+-t)/t | Voltage/V | Current efficiency/% | Common salt in caustic/ppm |
|---|---|---|---|---|---|---|---|---|---|---|
| Example 2-1 | 47.2 | 159.8 | 30.9 | 80.5 | | | | 2.96 | 97.2 | 19 |
| Example 2-2 | 23.7 | 97.2 | 12.8 | 65.6 | 0 | 0 | 1 | 3.00 | 97.0 | 19 |
| Example 2-3 | 22.5 | 142.6 | 13.6 | 62.2 | | | | 3.01 | 96.9 | 22 |
| Example 2-4 | 13.7 | 45.4 | 7.0 | 53.4 | | | | 3.03 | 96.6 | 29 |
| Example 2-5 | 23.7 | 97.2 | 12.8 | 75.5 | 0.139 | 0.238 | 3.9 | 2.96 | 97.3 | 20 |
| Example 2-6 | 13.7 | 45.4 | 7.0 | 68.8 | | | | 2.99 | 97.0 | 22 |
| Example 2-7 | 36.6 | 168.5 | 13.0 | 71.3 | 0 | 0 | 1 | 2.98 | 97.2 | 19 |
| Comparative Example 1 | 0.8 | 2.5 | 0.3 | 0.0 | 0 | 0 | 1 | 3.67 | 93.8 | 226 |

<Verification of third embodiment>

As will be described below, Experiment Examples according to the third embodiment (in the section of <Verification of third embodiment> hereinbelow, simply referred to as "Examples") and Experiment Examples not according to the third embodiment (in the section of <Verification of third embodiment> hereinbelow, simply referred to as "Comparative Examples") were provided, and evaluated by the following method.

(Production of electrode for cathode electrolysis)

As a substrate for electrode, a nickel foil having a gauge thickness of 22 $\mu$m, a length of 95 mm, and a width of 110 mm was provided. One surface of this nickel foil was subjected to roughening treatment by means of electrolytic nickel plating. The arithmetic average roughness Ra of the roughened surface was 0.71 $\mu$m. The surface roughness was measured using a probe type surface roughness meter SJ-310 (Mitutoyo Corporation). In other words, a measurement sample was placed on the surface plate parallel to the ground surface to measure the arithmetic average roughness Ra under measurement conditions as described below. The measurement was repeated 6 times, and the average value was listed.

<Probe shape> conical taper angle = 60°, tip radius = 2 $\mu$m, static measuring force = 0.75 mN
<Roughness standard> JIS2001
<Evaluation curve> R
<Filter> GAUSS
<Cutoff value $\lambda$c> 0.8 mm
<Cutoff value $\lambda$s> 2.5 $\mu$m
<Number of sections> 5
<Pre-running, post-running> available

A porous foil was formed by perforating this nickel foil with circular holes by punching. The opening ratio calculated as follows was 44%.

(Measurement of opening ratio)

A digimatic thickness gauge (manufactured by Mitutoyo Corporation, minimum scale 0.001 mm) was used to calculate an average value of 10 points obtained by measuring evenly in the plane of the electrode for electrolysis. The value was used as the thickness of the electrode (gauge thickness) to calculate the volume. Thereafter, an electronic balance was used to measure the mass. From the specific gravity of each metal (specific gravity of nickel = 8.908 g/cm3, specific gravity of titanium = 4.506 g/cm$^3$), the opening ratio or void ratio was calculated.

Opening ratio (Void ratio) (%) = (1 - (electrode mass)/(electrode volume $\times$ metal specific gravity)) $\times$ 100

A coating liquid for use in forming an electrode catalyst was prepared by the following procedure. A ruthenium nitrate solution having a ruthenium concentration of 100 g/L (FURUYA METAL Co., Ltd.) and cerium nitrate (KISHIDA CHEMICAL Co., Ltd.) were mixed such that the molar ratio between the ruthenium element and the cerium element was 1:0.25. This mixed solution was sufficiently stirred and used as a cathode coating liquid.

A vat containing the above coating liquid was placed at the lowermost portion of a roll coating apparatus. The vat was placed such that a coating roll formed by winding rubber made of closed-cell type foamed ethylene-propylene-diene rubber (EPDM) (INOAC CORPORATION, E-4088, thickness 10 mm) around a polyvinyl chloride (PVC) cylinder was always in contact with the coating liquid. A coating roll around which the same EPDM had been wound was placed at the upper portion thereof, and a PVC roller was further placed thereabove. The coating liquid was applied by allowing the substrate for electrode to pass between the second coating roll and the PVC roller at the uppermost portion (roll coating method). Then, after drying at 50°C for 10 minutes, preliminary baking at 150°C for 3 minutes, and baking at 350°C for 10 minutes were performed. A series of these coating, drying, preliminary baking, and baking operations was repeated until a predetermined amount of coating was achieved. The electrode for electrolysis thus obtained (length 95 mm, width 110 mm) had a thickness of 28 $\mu$m. The thickness of the catalytic layer (total thickness of ruthenium oxide and cerium oxide), which was determined by subtracting the thickness of the substrate for electrode for electrolysis from the thickness of the electrode for electrolysis, was 6 $\mu$m. The catalytic layer was formed also on the surface not roughened.

(Production of electrode for anode electrolysis)

A titanium nonwoven fabric having a gauge thickness of 100 $\mu$m, a titanium fiber diameter of about 20 $\mu$m, a basis weight of 100 g/m$^2$, and an opening ratio of 78% was used as the substrate for electrode for anode electrolysis.

A coating liquid for use in forming an electrode catalyst was prepared by the following procedure. A ruthenium chloride solution having a ruthenium concentration of 100 g/L (Tanaka Kikinzoku Kogyo K.K.), iridium chloride having an iridium concentration of 100 g/L (Tanaka Kikinzoku Kogyo K.K.), and titanium tetrachloride (Wako Pure Chemical Industries, Ltd.) were mixed such that the molar ratio among the ruthenium element, the iridium element, and the titanium element was 0.25:0.25:0.5. This mixed solution was sufficiently stirred and used as an anode coating liquid.

A vat containing the above coating liquid was placed at the lowermost portion of a roll coating apparatus. The vat was placed such that a coating roll formed by winding rubber made of closed-cell type foamed ethylene-propylene-diene rubber (EPDM) (INOAC CORPORATION, E-4088, thickness 10 mm) around a polyvinyl chloride (PVC) cylinder was always in contact with the coating liquid. A coating roll around which the same EPDM had been wound was placed at the upper portion thereof, and a PVC roller was further placed thereabove. The coating liquid was applied by allowing the substrate for electrode to pass between the second coating roll and the PVC roller at the uppermost portion (roll coating method). After the above coating liquid was applied onto the titanium porous foil, drying at 60°C for 10 minutes and baking at 475°C for 10 minutes were performed. A series of these coating, drying, preliminary baking, and baking operations was repeatedly performed, and then baking at 520°C was performed for an hour. The electrode for anode electrolysis obtained (length 95 mm, width 110 mm) had a thickness of 114 $\mu$m.

<Ion exchange membrane>

As the membrane, an ion exchange membrane A produced as described below was used.

As reinforcement core materials, 90 denier monofilaments made of polytetrafluoroethylene (PTFE) were used (hereinafter referred to as PTFE yarns). As sacrifice yarns, yarns obtained by twisting six 35 denier filaments of polyethylene terephthalate (PET) 200 times/m were used (hereinafter referred to as PET yarns). First, in each of the TD and the MD, the PTFE yarns and the sacrifice yarns were plain-woven with 24 PTFE yarns/inch so that two sacrifice yarns were arranged between adjacent PTFE yarns, to obtain a woven fabric. The resulting woven fabric was pressure-bonded by a roll to obtain a reinforcing material as a woven fabric having a thickness of 70 $\mu$m.

Next, a resin A of a dry resin that was a copolymer of $CF_2=CF_2$ and $CF_2=CFOCF_2CF(CF_3)OCF_2CF_2COOCH_3$ and had an ion exchange capacity of 0.85 mg equivalent/g, and a resin B of a dry resin that was a copolymer of $CF_2=CF_2$ and $CF_2=CFOCF_2CF(CF_3)OCF_2CF_2SO_2F$ and had an ion exchange capacity of 1.03 mg equivalent/g were provided.

Using these resin A and resin B, a two-layer film X in which the thickness of a resin A layer was 15 $\mu$m and the thickness of a resin B layer was 84 $\mu$m was obtained by a coextrusion T die method. Using only the resin B, a single-layer film Y having a thickness of 20 $\mu$m was obtained by a T die method.

Subsequently, release paper (embossed in a conical shape having a height of 50 $\mu$m), film Y, a reinforcing material, and the film X were laminated in this order on a hot plate having a heat source and a vacuum source inside and having micropores on its surface, heated and depressurized under the conditions of a hot plate surface temperature of 223°C and a degree of reduced pressure of 0.067 MPa for 2 minutes, and then the release paper was removed to obtain a composite membrane. The film X was laminated with the resin B facing downward.

The resulting composite membrane was immersed in an aqueous solution at 80°C comprising 30% by mass of dimethyl sulfoxide (DMSO) and 15% by mass of potassium hydroxide (KOH) for 20 minutes for saponification. Then, the composite membrane was immersed in an aqueous solution at 50°C comprising 0.5 N sodium hydroxide (NaOH) for an hour to replace the counterion of the ion exchange group by Na, and then washed with water. Thereafter, the surface on the side of the resin B was polished with a relative speed between a polishing roll and the membrane set to 100 m/minute and a press amount of the polishing roll set to 2 mm to form opening portions. Then, the membrane was dried at 60°C.

Further, 20% by mass of zirconium oxide having a primary particle size of 1 $\mu$m was added to a 5% by mass ethanol solution of the acid-type resin of the resin B and dispersed to prepare a suspension, and the suspension was sprayed onto both the surfaces of the above composite membrane by a suspension spray method to form coatings of zirconium oxide on the surfaces of the composite membrane to obtain an ion exchange membrane A as the membrane.

The coating density of zirconium oxide measured by fluorescent X-ray measurement was 0.5 mg/cm$^2$. Here, the average particle size was measured by a particle size analyzer (manufactured by SHIMADZU CORPORATION, "SALD(R) 2200").

(Example 3-1) Case of not replacing membrane

An electrolytic cell was produced as shown in Figure 28. First, a titanium anode frame having an anode chamber in which an anode was provided and a cathode frame having a nickel cathode chamber in which a cathode was provided were oppositely disposed. The outer dimension of the anode frame and the cathode frame was 150 mm in length × 150 mm in width. A pair of gaskets was arranged between the cells, and an ion exchange membrane was sandwiched between the gaskets. Then, the anode cell, the gasket, the ion exchange membrane, the gasket, and the cathode were brought into close contact together, sandwiched between stainless plates having bolt holes made in advance, and bolted to fix the electrolytic cell. This was regarded as a set of electrolytic cell frames. A plurality of such electrolytic cell frames were connected in series to form an electrolyzer. That is, the electrolytic cell frames were placed such that, to the back surface side of the anode frame of the set of electrolytic cell frames, the cathode frame of an adjacent electrolytic cell frame was connected.

The anode was produced by applying a mixed solution of ruthenium chloride, iridium chloride, and titanium tetrachloride onto a titanium substrate obtained by subjecting a substrate for electrode for anode electrolysis equivalent to that described above to blasting and acid etching treatment as the pretreatment, followed by drying and baking, in the same manner as in "Production of electrode for anode electrolysis" described above. The anode was fixed in the anode chamber by welding.

As the collector of the cathode chamber, a nickel expanded metal was used. The collector had a size of 95 mm in length × 110 mm in width.

As a metal elastic body, a mattress formed by knitting nickel fine wire was used.

The mattress as the metal elastic body was placed on the collector.

As the cathode, nickel mesh formed by plain-weaving nickel wire having a diameter of 150 $\mu$m in a sieve mesh size of 40, coated with ruthenium oxide and cerium oxide, was used as in "Production of electrode for cathode electrolysis" described above. The cathode subjected to electrolysis for eight years (electrolytic conditions: same as the electrolytic conditions described below except for current density: 6.2 kA/m$^2$, brine concentration: 3.2 to 3.7 mol/l, caustic concentration: 31 to 33%, and temperature: 80 to 88°C) was placed over the collector described above. That is, a string made of Teflon(R) was used to fix the four corners to the collector. Since the cathode had been used for eight years, the amount of coating of ruthenium oxide and cerium oxide decreased to of the order of 1/10 of the value before use.

As the ion exchange membrane, used was an ion exchange membrane obtained by subjecting the ion exchange membrane A to electrolysis for four years (electrolytic conditions: same as the electrolytic conditions described below except for current density: 6.2 kA/m$^2$, brine concentration: 3.2 to 3.7 mol/l, caustic concentration: 31 to 33%, and temperature: 80 to 88°C).

In this electrolytic cell, the repulsive force of the mattress as the metal elastic body was used so as to achieve a zero-gap structure. As the gaskets, ethylene-propylene-diene (EPDM) rubber gaskets were used.

The electrolytic cell described above was used to perform common salt electrolysis before a renewing operation. The brine concentration (sodium chloride concentration) in the anode chamber was adjusted to 3.5 mol/l. The sodium hydroxide concentration in the cathode chamber was adjusted to 32% by mass. The temperature each in the anode chamber and the cathode chamber was adjusted such that the temperature in each electrolytic cell reached 90°C. Common salt electrolysis was performed at a current density of 6 kA/m$^2$ to measure the voltage and current density. The current efficiency here is the proportion of the amount of the produced caustic soda to the passed current, and when impurity ions and hydroxide ions rather than sodium ions move through the ion exchange membrane due to the passed current, the current efficiency decreases. The current efficiency was obtained by dividing the number of moles of caustic soda produced for a certain time period by the number of moles of the electrons of the current passing during that time period. The number of moles of caustic soda was obtained by recovering caustic soda produced by the electrolysis in a plastic container and measuring its mass. The voltage was high because the cathode, used as the cathode electrode, had a markedly decreased amount of coating after a long-term use. The voltage when a new cathode was used was 3.02 V, whereas the voltage was as high as 3.20 V, and the current efficiency was as low as 95.3%.

The electrolysis was stopped, and the anode chamber and cathode chamber were washed with water. Then, the integration of the anode frame and cathode frame was released by loosening the bolts from the state shown in Figure 32(A) to thereby expose the cathode surface side of the ion exchange membrane as shown in Figure 32(B) (step (A1)). In the state shown in Figure 32(B), the ion exchange membrane was moistened with a 0.1 mol/L NaOH aqueous solution. Then, the electrode for cathode electrolysis produced by the procedure described above was arranged on the exposed surface of the ion exchange membrane to thereby achieve the state shown in Figure 32(C) (step (B1)). Here, the mounting surface for the ion exchange membrane of the electrode for cathode electrolysis was present at an angle of 0° with respect to the horizontal plane. The anode frame and cathode frame were integrated again from the state shown in Figure 32(C) to store the anode, the cathode, the ion exchange membrane, and the electrode for cathode electrolysis in the electrolytic cell frame, and thus the state shown in Figure 32(D) was achieved (step (C1)).

When the electrolytic cell thus assembled was used to perform common salt electrolysis under the conditions equivalent to those described above, the voltage was 2.96 V. The simple operation enabled the electrolytic performance to be improved.

Additionally, the electrode for cathode electrolysis was removed out immediately before the step C1, the weight in the moisture deposition state (E) was measured by the following method.

<Measurement of amount of moisture deposited on electrode for electrolysis>

After the electrode for electrolysis of each of Examples was dried by storing in a dryer at 50°C for 30 minutes in advance, the electrode was weighed. This operation was repeated five times, and the average value was determined. A value obtained by dividing this value by the outer dimension area of the electrode for electrolysis was denoted by e (g/m$^2$). Then, immediately before the step (C1) or step (C2), one of the four corners of the electrode for electrolysis laminated on the ion exchange membrane was held and hung, and the electrode for electrolysis was peeled off from the ion exchange membrane. Spontaneously dripping water was removed by hanging the membrane in the air for 20 seconds. After 20 seconds, the electrode was immediately weighed. This operation was repeated five times, and the average value was determined. A value obtained by dividing this value by the outer dimension area of the electrode was denoted by E (g/m$^2$). This operation was performed under an environment of a temperature of 20°C to 30°C and a humidity of 30 to 50%. The opening ratio of the electrode for electrolysis was denoted by P, and the amount of the aqueous solution applied on the electrode for electrolysis per unit area (hereinbelow, simply also referred to as "amount of moisture deposited") W(g/m$^2$) was determined by the following equation.

$$W = (E - e)/(1 - P/100)$$

From the dry weight e measured in advance and the opening ratio, the amount of moisture deposited W of the electrode for electrolysis according to Example 3-1 was calculated to be 58 g/m$^2$.

(Example 3-2) Case of replacing membrane and cathode

When common salt electrolysis before a renewing operation was performed in the same manner as in Example 3-1, the voltage was 3.18 V and the current efficiency was 95% during common salt electrolysis, and the performance was poor.

This electrolytic cell was stopped, and the anode chamber and cathode chamber were washed with water. Then, the integration of the anode frame and cathode frame was released from the state shown in Figure 32(A) in the same manner as shown in Example 1 to thereby expose the ion exchange membrane as shown in Figure 33(A) (step (A2)). Then, the ion exchange membrane was removed from the state shown in Figure 33(B), an unused ion exchange membrane having the same composition and shape as those of the ion exchange membrane removed was arranged on the anode, and an electrode for cathode electrolysis equivalent to that of Example 3-1 was placed so as to be in contact with the cathode surface side of the ion exchange membrane (step (B2)). Here, the mounting surface for the ion exchange membrane of the electrode for cathode electrolysis was present at an angle of 0° with respect to the horizontal plane. The anode frame and cathode frame were integrated again from the state shown in Figure 33(C) to store the anode, the cathode, the ion exchange membrane, and the electrode for cathode electrolysis in the electrolytic cell frame, and thus the state shown in Figure 33(D) was achieved (step (C2)).

Additionally, the electrode for cathode electrolysis was removed out immediately before the step C2, the weight in the moisture deposition state (E) was measured. From the dry weight e measured in advance and the opening ratio, the amount of moisture deposited W of the electrode for electrolysis was calculated to be 55 g/m$^2$.

When the electrolytic cell thus assembled was used to perform common salt electrolysis again, the voltage was 2.96 V, the current efficiency was 97%, and the performance was improved. The simple operation enabled the electrolytic performance to be improved.

(Example 3-3) Case of replacing membrane and anode

An electrolytic cell frame was formed and common salt electrolysis was performed in the same manner as in Example 3-1 except for the following respects. In other words, as the anode, used was an anode produced by applying a mixed solution of ruthenium chloride, iridium chloride, and titanium tetrachloride onto a titanium substrate subjected to blasting and acid etching treatment as the pretreatment, followed by drying and baking, and then subjected to electrolysis for eight years (electrolytic conditions: same as the electrolytic conditions described below except for current density: 6.2 kA/m$^2$, brine concentration: 3.2 to 3.7 mol/l, caustic concentration: 31 to 33%, and temperature: 80 to 88°C). Meanwhile, as the cathode, nickel mesh formed by plain-weaving nickel wire having a diameter of 150 $\mu$m in a sieve mesh size of 40, coated with ruthenium oxide and cerium oxide, was used as in "Production of electrode for cathode electrolysis" described above. An electrolytic cell was provided in the same manner as in Example 3-1 except that the anode deteriorated and the cathode not deteriorated were used. Then, the electrolytic cell was subjected to the common salt electrolysis as described above, the voltage was 3.18 V, the current efficiency was 95%, and the performance was poor.

This electrolytic cell was stopped, and the anode chamber and cathode chamber were washed with water. Then, the integration of the anode frame and cathode frame was released from the state shown in Figure 32(A) in the same manner as shown in Example 3-1 to thereby expose the ion exchange membrane as shown in Figure 33(A) (step (A2)). Then, the ion exchange membrane was removed from the state shown in Figure 33(A) to thereby achieve the state shown in Figure 33(B). From the state shown in Figure 33(B), the electrode for anode electrolysis described above was arranged on the anode, and an unused ion exchange membrane having the same composition and shape as those of the ion exchange membrane removed was arranged on the anode (step (B2)). Here, the mounting surface for the ion exchange membrane of the electrode for anode electrolysis was present at an angle of 0° with respect to the horizontal plane. The anode frame and cathode frame were integrated again from the state shown in Figure 33(C) to store the anode, the cathode, the ion exchange membrane, and the electrode for anode electrolysis in the electrolytic cell frame, and thus the state shown in Figure 33(D) was achieved (step (C2)).

Additionally, the electrode for cathode electrolysis was removed out immediately before the step C2, the weight in the moisture deposition state (E) was measured. From the dry weight e measured in advance and the opening ratio, the amount of moisture deposited W of the electrode for electrolysis was calculated to be 358 g/m$^2$.

When the electrolytic cell thus assembled was used to perform common salt electrolysis again, the voltage was 2.97 V, and the current efficiency was 97%. The simple operation enabled the electrolytic performance to be improved.

(Example 3-4) Case of replacing membrane, cathode, and anode

In Example 3-4, common salt electrolysis before a renewing operation was performed in the same manner as in Example 3-1 except that the cathode subjected to electrolysis for eight years and the ion exchange membrane used for four years used in Example 3-1 and the anode used for eight years used in Example 3-3 were used. The performance of common salt electrolysis, which included a voltage of 3.38 V and a current efficiency of 95%, was poor.

This electrolytic cell was stopped, and the anode chamber and cathode chamber were washed with water. Then, the integration of the anode frame and cathode frame was released from the state shown in Figure 32(A) in the same manner as shown in Example 3-1 to thereby expose the ion exchange membrane as shown in Figure 33(A) (step (A2)). Then, the ion exchange membrane was removed from the state shown in Figure 33(A) to thereby achieve the state shown in Figure 33(B). From the state shown in Figure 33(B), the electrode for anode electrolysis described above was arranged on the anode, an unused ion exchange membrane having the same composition and shape as those of the ion exchange membrane removed was arranged on the anode, and an electrode for cathode electrolysis equivalent to that of Example 3-1 was placed thereon (step (B2)). Here, the mounting surface for the ion exchange membrane of each of the electrode for cathode electrolysis and the electrode for anode electrolysis was present at an angle of 0° with respect to the horizontal plane. The anode frame and cathode frame were integrated again, and the anode, the cathode, the ion exchange membrane, the electrode for anode electrolysis, and the electrode for cathode electrolysis were stored in the electrolytic cell frame (step (C2)).

Additionally, the cathode and the electrode for anode electrolysis were removed out immediately before the step C2, the weight in the moisture deposition state (E) was measured. From the dry weight e measured in advance and the opening ratio, the amount of moisture deposited W of the electrode for electrolysis for the cathode was calculated to be 57 g/m$^2$, and that for the anode was calculated to be 355 g/m$^2$.

When the electrolytic cell thus assembled was used to perform common salt electrolysis again, the voltage was 2.97V, and the current efficiency was 97%. The simple operation enabled the electrolytic performance to be improved.

[Comparative Example 3-1]

(Conventional renewing of electrode)

After common salt electrolysis before a renewing operation was performed in the same manner as in Example 3-1, the operation was stopped, and the electrolytic cell was conveyed to a plant where welding was available.

After the conveyance, the bolts of the electrolytic cell were loosened to release the integration of the anode frame and the cathode frame, and the ion exchange membrane was removed. Next, after the anode fixed by welding on the anode frame of the electrolytic cell was stripped off and removed, burrs or the like at the portion from which the anode was stripped off with a grinder to smooth the portion. The cathode was removed such that the portion fixed by folding the portion into the collector was removed.

Thereafter, a new anode was placed on the rib of the anode chamber, and the new anode was fixed to the electrolytic cell by spot welding. Similarly in the case of the cathode, a new cathode was placed on the cathode side and fixed by folding the cathode into the collector.

The renewed electrolytic cell was conveyed to the position of the large electrolyzer, and the electrolytic cell was returned in the electrolyzer using a hoist.

The period required from the release of the fixed state of the electrolytic cell and the ion exchange membrane to the refixing of the electrolytic cell was one day or more.

<Contact pressure>

In the operations of Examples 3-1 to 3-4, on placing the ion exchange membrane, minor wrinkles occurred in some cases, and thus the wrinkles were smoothened out by hand or a resin roller. Specifically, on performing the step (B2), pressure-sensitive paper (Prescale, FUJIFILM Corporation) was mounted on the wrinkled portion occurred in the ion exchange membrane to measure the pressure applied. In the case of the ion exchange membrane, it was not possible to measure even with the Ultra extreme low pressure (5LW) type, and the pressure was 60 gf/cm$^2$ or less.

In the operations of Examples 3-1 to 3-4, on placing the electrode for electrolysis, minor wrinkles occurred in some cases, and thus the wrinkles were smoothened out by hand or a resin roller. Specifically, on performing the step (B1, B2), pressure-sensitive paper (Prescale, FUJIFILM Corporation) was mounted on the wrinkled portion occurred in the electrode for electrolysis to measure the pressure applied. The resulting pressure was 510 gf/cm$^2$ or less.

The present application is based on Japanese Patent Applications (Japanese Patent Application No. 2018-177213, Japanese Patent Application No. 2018-177415, and Japanese Patent Application No. 2018-177375) filed on Sep. 21, 2018 and a Japanese Patent Application (Japanese Patent Application No. 2019-120095) filed on Jun. 27, 2019, the contents of which are hereby incorporated by reference.

Reference Signs List

(Figures for first embodiment)

Reference signs list for Figure 1

100    roll for electrode
101    electrode for electrolysis
200    roll for membrane
201    membrane
300    pipe made of polyvinyl chloride

Reference signs list for Figures 2 to 3

100    roll for electrode
101    electrode for electrolysis
200    roll for membrane
201    membrane
450    water retention section
451    moisture
452    sponge roll

Reference signs list for Figures 4 to 6

100 ... roll for electrode
101 ... electrode for electrolysis
110 ... laminate
150 ... jig for laminate production
200 ... roll for membrane
201 ... membrane
400 ... positioning section
401a and 401b ... pressing plate
402 ... spring mechanism
403a and 403b ... bearing portion
450 ... water retention section
451 ... moisture

Reference signs list for Figure 7

101    electrode for electrolysis
302    guide roll

EP 4 497 593 A2

Reference signs list for Figure 8

101   electrode for electrolysis
302   guide roll

Reference signs list for Figure 9

110   laminate
301   nip roll

Reference signs list for Figure 10

10 ... substrate for electrode for electrolysis
20 ... first layer with which the substrate is covered
30 ... second layer
101 ... electrode for electrolysis

Reference signs list for Figure 11

1 ... ion exchange membrane
1a ... membrane body
2 ... carboxylic acid layer
3 ... sulfonic acid layer
4 ... reinforcement core material
11a, 11b ... coating layer

Reference signs list for Figure 12

21a, 21b   reinforcement core material

Reference signs list for Figures 13(A) and (B)

52   reinforcement yarn
504   continuous hole
504a   sacrifice yarn

Reference signs list for Figures 14 to 18

4   electrolyzer
5   press device
6   cathode terminal
7   anode terminal
11   anode
12   anode gasket
13   cathode gasket
18   reverse current absorber
18a   substrate
18b   reverse current absorbing layer
19   bottom of anode chamber
21   cathode
22   metal elastic body
23   collector
24   support
50   electrolytic cell
60   anode chamber
51   ion exchange membrane (membrane)
70   cathode chamber
80   partition wall

90      cathode structure for electrolysis

(Figures for second embodiment)

Reference signs list for Figures 19 to 23

101A, 101B, 101C ... electrode for electrolysis
102A, 102B, 102C ... protrusion
103A, 103B ... flat portion

(Figures for third embodiment)

Reference signs list for Figures 28 to 33

4 ... electrolyzer
5 ... press device
6 ... cathode terminal
7 ... anode terminal
11 ... anode
12 ... anode gasket
13 ... cathode gasket
18 ... reverse current absorber
18a ... substrate
18b ... reverse current absorbing layer
19 ... bottom of anode chamber
21 ... cathode
22 ... metal elastic body
23 ... collector
24 ... anode frame
25 ... cathode frame
50 ... electrolytic cell
60 ... anode chamber
51 ... ion exchange membrane (membrane)
51a mounting surface of electrode for electrolysis on ion exchange membrane
70 ... cathode chamber
101 ... electrode for electrolysis
103 ... platform
103a ... electrolytic cell mounting surface on platform

Items

[Item 1] A jig for laminate production for producing a laminate of an electrode for electrolysis and a membrane, the jig for laminate production comprising:

a roll for electrode around which an elongate electrode for electrolysis is wound, and
a roll for membrane around which an elongate membrane is wound.

[Item 2] The jig for laminate production according to Item 1, further comprising a water retention section that supplies moisture to at least one of the roll for electrode, the roll for membrane, the electrode for electrolysis rolled out from the roll for electrode, and the membrane rolled out from the roll for membrane.
[Item 3] The jig for laminate production according to Item 2, wherein the water retention section comprises an immersion tank for immersion of the roll for electrode and/or the roll for membrane.
[Item 4] The jig for laminate production according to Item 2 or 3, wherein the water retention section comprises a spray nozzle.
[Item 5] The jig for laminate production according to any one of Items 2 to 4, wherein the water retention section comprises a sponge roll having moisture.
[Item 6] The jig for laminate production according to any one of Items 1 to 5, further comprising a positioning section for fixing relative positions of the roll for electrode and the roll for membrane.

[Item 7] The jig for laminate production according to Item 6, wherein the positioning section presses the roll for electrode and the roll for membrane to each other by means of a spring.

[Item 8] The jig for laminate production according to Item 6, wherein the positioning section fixes positions of the roll for electrode and the roll for membrane such that one of the roll for electrode and the roll for membrane presses, by its own weight, the other.

[Item 9] The jig for laminate production according to Item 6, wherein

the roll for electrode and the roll for membrane each have a rotation axis, and
the positioning section has bearing portions for the rotation axes.

[Item 10] The jig for laminate production according to any one of Items 1 to 9, further comprising a nip roll that presses at least one of the electrode for electrolysis and the membrane rolled out respectively from the roll for electrode and the roll for membrane.

[Item 11] The jig for laminate production according to any one of Items 1 to 10, further comprising a guide roll that guides the electrode for electrolysis and the membrane rolled out respectively from the roll for electrode and the roll for membrane.

[Item 12] A method for producing a laminate of an electrode for electrolysis and a membrane, comprising:

a step of rolling out an elongate electrode for electrolysis from a roll for electrode around which the electrode for electrolysis is wound, and
a step of rolling out an elongate membrane from a roll for membrane around which the membrane is wound.

[Item 13] The method for producing the laminate according to Item 12, wherein the electrode for electrolysis is conveyed in contact with the roll for membrane at a wrap angle of 0° to 270°.

[Item 14] The method for producing the laminate according to Item 12, wherein the membrane is conveyed in contact with the roll for electrode at a wrap angle of 0° to 270°.

[Item 15] The method for producing the laminate according to Item 12, wherein

in the step of rolling out the electrode for electrolysis and/or the membrane, the electrode for electrolysis and/or the membrane is guided by a guide roll, and
the electrode for electrolysis is conveyed in contact with the guide roll at a wrap angle of 0° to 270°.

[Item 16] The method for producing the laminate according to Item 12, wherein

in the step of rolling out the electrode for electrolysis and/or the membrane, the electrode for electrolysis and/or the membrane is guided by a guide roll, and
the membrane is conveyed in contact with the guide roll at a wrap angle of 0° to 270°.

[Item 17] The method for producing the laminate according to any one of Items 12 to 16, further comprising a step of supplying moisture to the electrode for electrolysis rolled out from the roll for electrode.

[Item 18] The method for producing the laminate according to any one of Items 12 to 17, wherein the electrode for electrolysis and membrane, which have been in a wound state, are each rolled out in a state where relative positions of the roll for electrode and the roll for membrane are fixed.

[Item 19] A package comprising:

a roll for electrode around which an elongate electrode for electrolysis is wound and/or a roll for membrane around which an elongate membrane is wound, and
a housing storing the roll for electrode and/or the roll for membrane.

[Item 20] A laminate comprising:

an electrode for electrolysis, and
a membrane laminated on the electrode for electrolysis, wherein
the membrane has an asperity geometry on the surface thereof, and
a ratio a of a gap volume between the electrode for electrolysis and the membrane with respect to a unit area of the membrane is more than 0.8 $\mu$m and 200 $\mu$m or less.

[Item 21] The laminate according to Item 20, wherein a height difference, which is a difference between a maximum value and a minimum value in the asperity geometry, is more than 2.5 $\mu$m.

[Item 22] The laminate according to Item 20 or 21, wherein a standard deviation of the height difference in the asperity geometry is more than 0.3 $\mu$m.

[Item 23] The laminate according to any one of Items 20 to 22, wherein an interface moisture content w retained on an interface between the membrane and the electrode for electrolysis is 30 $g/m^2$ or more and 200 $g/m^2$ or less.

[Item 24] The laminate according to any one of Items 20 to 23, wherein,

the electrode for electrolysis has one or more protrusions on an opposed surface to the membrane, and
the one or more protrusions satisfy the following conditions (i) to (iii):

$$0.04 \leq S_a/S_{all} \leq 0.55 \quad (i)$$

$$0.010 \ mm^2 \leq S_{ave} \leq 10.0 \ mm^2 \quad (ii)$$

$$1 < (h + t)/t \leq 10 \quad (iii)$$

wherein, in the (i), $S_a$ represents a total area of the protrusion(s) in an observed image obtained by observing the opposed surface under an optical microscope, $S_{all}$ represents an area of the opposed surface in the observed image,
in the (ii), $S_{ave}$ represents an average area of the protrusion(s) in the observed image, and
in the (iii), h represents a height of the protrusion(s), and t represents a thickness of the electrode for electrolysis.

[Item 25] The laminate according to Item 24, wherein the protrusions are each independently disposed in one direction D1 in the opposed surface.

[Item 26] The laminate according to Item 24 or 25, wherein the protrusions are sequentially disposed in one direction D2 in the opposed surface.

[Item 27] The laminate according to any one of Items 24 to 26, wherein a mass per unit area of the electrode for electrolysis is 500 $mg/cm^2$ or less.

[Item 28] An electrolyzer comprising the laminate according to any one of Items 20 to 27.

[Item 29] A method for producing a new electrolyzer by arranging a laminate in an existing electrolyzer comprising an anode, a cathode that is opposed to the anode, and a membrane that is arranged between the anode and the cathode, the method comprising:

a step of replacing the membrane in the existing electrolyzer by the laminate, wherein
the laminate is the laminate according to any one of Items 20 to 27.

[Item 30] A method for producing a new electrolyzer by arranging an electrode for electrolysis in an existing electrolyzer comprising an anode, a cathode that is opposed to the anode, a membrane arranged between the anode and the cathode, and an electrolytic cell frame comprising an anode frame that supports an the anode and a cathode frame that supports the cathode, the electrolytic cell frame storing the anode, the cathode, and the membrane by integrating the anode frame and the cathode frame, the method comprising:

a step (A1) of releasing the integration of the anode frame and the cathode frame to expose the membrane,
a step (B1) of arranging the electrode for electrolysis on at least one of surfaces of the membrane after the step (A1), and
a step (C1) of integrating the anode frame and the cathode frame after the step (B1) to store the anode, the cathode, the membrane, and the electrode for electrolysis into the electrolytic cell frame.

[Item 31] The method for producing the electrolyzer according to Item 30, wherein, before the step (B1), the electrode for electrolysis and/or the membrane is moistened with an aqueous solution.

[Item 32] The method for producing the electrolyzer according to Item 30 or 31, wherein, in the step (B1), a mounting surface for the membrane of the electrode for electrolysis is present at an angle of 0° or more and less than 90° with respect to a horizontal plane.

[Item 33] The method for producing the electrolyzer according to any one of Items 30 to 32, wherein, in the step (B1), the electrode for electrolysis is positioned such that a conducting surface on the membrane is covered with the electrode for electrolysis.

[Item 34] The method for producing the electrolyzer according to any one of Items 30 to 33, wherein an amount of an aqueous solution applied on the electrode for electrolysis per unit area is 1 g/m² to 1000 g/m².

[Item 35] The method for producing the electrolyzer according to any one of Items 30 to 34, wherein, in the step (B1), a wound body obtained by winding the electrode for electrolysis is used.

[Item 36] The method for producing the electrolyzer according to Item 35, wherein, in the step (B1), a wound state of the wound body is released on the membrane.

[Item 37] A method for producing a new electrolyzer by arranging an electrode for electrolysis and a new membrane in an existing electrolyzer comprising an anode, a cathode that is opposed to the anode, a membrane arranged between the anode and the cathode, and an electrolytic cell frame comprising an anode frame that supports an the anode and a cathode frame that supports the cathode, the electrolytic cell frame storing the anode, the cathode, and the membrane by integrating the anode frame and the cathode frame, the method comprising:

a step (A2) of releasing the integration of the anode frame and the cathode frame to expose the membrane,
a step (B2) of removing the membrane after the step (A2) and arranging the electrode for electrolysis and new membrane on the anode or cathode, and
a step (C2) of integrating the anode frame and the cathode frame to store the anode, the cathode, the membrane, the electrode for electrolysis, and the new membrane into the electrolytic cell frame.

[Item 38] The method for producing the electrolyzer according to Item 37, wherein, in the step (B2), the electrode for electrolysis is mounted on the anode or cathode, the new membrane is mounted on the electrode for electrolysis, and the new membrane is flattened.

[Item 39] The method for producing the electrolyzer according to Item 38, wherein, in the step (B2), a contact pressure of a flattening device on the new membrane is 0.1 gf/cm² to 1000 gf/cm².

**Claims**

1. A method for producing a new electrolyzer by arranging an electrode for electrolysis in an existing electrolyzer comprising an anode, a cathode that is opposed to the anode, a membrane arranged between the anode and the cathode, and an electrolytic cell frame comprising an anode frame that supports an the anode and a cathode frame that supports the cathode, the electrolytic cell frame storing the anode, the cathode, and the membrane by integrating the anode frame and the cathode frame, the method comprising:

a step (A1) of releasing the integration of the anode frame and the cathode frame to expose the membrane,
a step (B1) of arranging the electrode for electrolysis on at least one of surfaces of the membrane after the step (A1), and
a step (C1) of integrating the anode frame and the cathode frame after the step (B1) to store the anode, the cathode, the membrane, and the electrode for electrolysis into the electrolytic cell frame.

2. The method for producing the electrolyzer according to claim 1, wherein, before the step (B1), the electrode for electrolysis and/or the membrane is moistened with an aqueous solution.

3. The method for producing the electrolyzer according to claim 1 or 2, wherein, in the step (B1), the electrode for electrolysis is positioned such that a conducting surface on the membrane is covered with the electrode for electrolysis.

4. The method for producing the electrolyzer according to any one of claims 1 to 3, wherein, in the step (B1), a wound body obtained by winding the electrode for electrolysis is used.

5. The method for producing the electrolyzer according to claim 4, wherein, in the step (B1), a wound state of the wound body is released on the membrane.

6. A method for producing a new electrolyzer by arranging an electrode for electrolysis and a new membrane in an existing electrolyzer comprising an anode, a cathode that is opposed to the anode, a membrane arranged between the anode and the cathode, and an electrolytic cell frame comprising an anode frame that supports an the anode and a cathode frame that supports the cathode, the electrolytic cell frame storing the anode, the cathode, and the membrane by integrating the anode frame and the cathode frame, the method comprising:

a step (A2) of releasing the integration of the anode frame and the cathode frame to expose the membrane,

a step (B2) of removing the membrane after the step (A2) and arranging the electrode for electrolysis and new membrane on the anode or cathode, and
a step (C2) of integrating the anode frame and the cathode frame to store the anode, the cathode, the membrane, the electrode for electrolysis, and the new membrane into the electrolytic cell frame.

7. The method for producing the electrolyzer according to claim 6, wherein, in the step (B2), the electrode for electrolysis is mounted on the anode or cathode, the new membrane is mounted on the electrode for electrolysis, and the new membrane is flattened.

[Figure 1]

(A)

(B)

(C)

[Figure 2]

[Figure 3]

[Figure 4]

（A）

150

（B）

150

[Figure 5]

150

[Figure 6]

150

[Figure 7]

101

302

θ=WRAP ANGLE

200

100

[Figure 8]

101

302

θ =0°

200

100

[Figure 9]

301

110

100

200

[Figure 10]

[Figure 11]

[Figure 12]

$$(B) = (A) - (C)$$
$$(B)/(A) = ((A) - (C))/(A)$$

[Figure 13]

(a)

(b)

[Figure 14]

[Figure 15]

[Figure 16]

[Figure 17]

[Figure 18]

[Figure 19]

[Figure 20]

[Figure 21]

[Figure 22]

101A
102A
103A
D1
D1'

[Figure 23]

101B
102B
103B
D2

[Figure 24]

（A）

（B）

PROTRUSION

OPENING PORTION

[Figure 25]

[Figure 26]

[Figure 27]

[Figure 28]

[Figure 29]

[Figure 30]

[Figure 31]

[Figure 32]

[Figure 33]

(A)

(B)

(C)

(D)

104

[Figure 34]

WOUND BODY 1

PVC PIPE

ION EXCHANGE MEMBRANE

[Figure 35]

WOUND BODY 2

PVC PIPE

ELECTRODE FOR ELECTROLYSIS

[Figure 36]

ELECTRODE FOR ELECTROLYSIS

LAMINATE

ION EXCHANGE MEMBRANE

[Figure 37]

ION EXCHANGE MEMBRANE

LAMINATE

ELECTRODE FOR ELECTROLYSIS

[Figure 38]

$\theta = 150°$

ELECTRODE FOR ELECTROLYSIS

ION EXCHANGE MEMBRANE

LAMINATE

[Figure 39]

LAMINATE

$\theta = 0°$

ION EXCHANGE MEMBRANE

ELECTRODE FOR ELECTROLYSIS

[Figure 40]

LAMINATE

ION EXCHANGE MEMBRANE

ELECTRODE FOR ELECTROLYSIS

$\theta = 230°$

[Figure 41]

GUIDE ROLL

LAMINATE

ION EXCHANGE MEMBRANE

$\theta = 40°$

ELECTRODE FOR ELECTROLYSIS

[Figure 42]

LAMINATE

GUIDE ROLL

$\theta = 0°$

ION EXCHANGE MEMBRANE

ELECTRODE FOR ELECTROLYSIS

[Figure 43]

NIP ROLL

LAMINATE

ELECTRODE FOR ELECTROLYSIS

ION EXCHANGE MEMBRANE

[Figure 44]

NIP ROLL

LAMINATE

ION EXCHANGE MEMBRANE

ELECTRODE FOR ELECTROLYSIS

[Figure 45]

THREE-DIMENSIONAL IMAGE OF MEMBRANE
SUBJECTED TO X-RAY CT SCANNING

[Figure 46]

THREE-DIMENSIONAL IMAGE 1

[Figure 47]

THREE-DIMENSIONAL IMAGE 2

[Figure 48]

PLANE 1

[Figure 49]

TWO-DIMENSIONAL IMAGE 1

[Figure 50]

TWO-DIMENSIONAL IMAGE 2

[Figure 51]

CROSS-SECTIONAL VIEW OF ION EXCHANGE MEMBRANE

CUT POINT

PLANE 3

GAP VOLUME

ION EXCHANGE MEMBRANE SURFACE

Z AXIS

X AXIS OR Y AXIS

ION EXCHANGE MEMBRANE

**EP 4 497 593 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 58048686 A
- JP 55148775 A
- WO 2013183584 A
- WO 2016203701 A
- JP 3075580 B
- JP 4708133 B
- JP 5774514 B
- JP 2018177213 A
- JP 2018177415 A
- JP 2018177375 A
- JP 2019120095 A